# EUROPEAN PATENT SPECIFICATION

(11) **EP 2 567 028 B1**
(45) Date of publication and mention of the grant of the patent: **02.03.2016**
(21) Application number: 11721817.2
(22) Date of filing: 04.05.2011
(51) Int. Cl.: D21H 27/00, D21H 17/33, D21H 17/67, D21J 1/00, D21J 3/00, D21H 11/12, D21H 11/18

(54) **PRODUCTS UTILISING FIBRE AND/OR FIBRE PULP**
PRODUKTE DIE FASERN UND/ODER FASERPULPE VERWENDEN
PRODUITS UTILISANT DE LA FIBRE ET/OU DE LA PÂTE DE FIBRES

(30) Priority: 05.05.2010 GB 201007499
(43) Date of publication of application: 13.03.2013
(73) Proprietor: BASF SE, 67056 Ludwigshafen (DE)
(72) Inventor: DEAN, Trevor W. R., High Wycombe Buckinghamshire HP15 6AF (GB); HURDING, Richard, 16247 Joachimsthal Brandenberg (DE)
(86) International application number: PCT/GB2011/050869
(87) International publication number: WO 2011/138604

(56) References cited:
- EP-A1- 1 415 800
- WO-A1-94/29526
- WO-A1-99/48660
- WO-A2-98/11973
- JP-A- 2009 001 597
- US-B1- 6 379 594

## Description

The present invention relates to products, typically, but not exclusively, end products, which are manufactured from a macro, micro and/or nano fibre pulp, said pulp typically, but again not exclusively, being a cellulose pulp.

The generation of cellulose pulp from mixed fibres, is known and an example of such is described in the US patent US6379594 in which the microfiber or cellulous pulp is created and formed into a shaped green body. The shaped green body is then dried by removing water therefrom to harden the same and form a work piece. The drying occurs without admixture of bonding agents to the microfiber pulp and with the use of external pressure. The characteristics of the shaped green body depend on the degree of grinding which is performed to produce the microfiber pulp.

A problem which is experienced with conventional high density fibre based manufacturing systems is that the pulp which is used, is generally not self binding. As a result, binder components are required to be incorporated within the fibre based material. These binders are often synthetic and therefore can cause problems at least with regard to environmental concerns in relation to the use of the fibres with the synthetic component, the subsequent presence of the fibres within the end product and/or the subsequent disposal of the same. The use of the synthetic binders can also mean that the products are not biodegradable.

Furthermore, several of the high density fibre based materials which are produced, require use of plastics components as a flow enhancer which, in turn, means that the advantages of using the defibrillated cellulose fibres are not be obtained.

Furthermore, in conventional standard, bio plastic or polymaterials there is often the use of single strand fibre reinforcement. However, the reinforcements in these materials are not three dimensionally optimised and, in addition, the reinforcement fibres are often synthetic and therefore the ecological and environmental problems indicated above are still encountered.

International Patent publication WQ 94/29526 describes a method for manufacturing an article with a flecked appearance by introducing flakelets of a (coloured) paper material into a pulp.

The aim of the invention is to provide an end product which can be created using cellulose fibres and to do so in a manner which allows the end product to be environmentally sound and maintain the biodegradable characteristics.

In a first aspect of the invention there is provided an article formed from two or more defibrillated cellulose fibres which are bound together to form the article wherein the density of the said bound defibrillated cellulose fibres is in the range of 0.4 - 1.5 grams per cubic centimetre characterised in that the density of the article is increased by the addition of one or more filler components in an amount of 1-30% of the final article volume.

In one embodiment, the two or more defibrillated cellulose, fibres comprise i) a principle microfibre or principle furnish; and ii) a reinforcement fibre or secondary fibre.

In one embodiment, the material has a relatively high density in the range of 1 - 1.5 grams per cubic centimetre.

In an alternative embodiment, the material has a medium density of between 0.5-0.9 per cubic centimetre.

In one embodiment the density of the material can be raised above 1.5 grams per cubic centimetre by the addition of filler components such as calcium carbonate or talc or another inorganic filler.

Typically, in either embodiment, the material can be coloured and can be produced using waste in addition to new fibre sources.

Typically, the product is biodegradable.

Typically the end products are formed as any 2 or 3 dimensional article such as, for example, casings, boards or panels, briquettes, paper.

In one embodiment the end product includes an amount of less than 50% of the total content of bio or standard plastic material.

Typically, the addition of the bio or standard plastic material allows the material from which the end product is produced to be mouldable and flowable.

In a further aspect of the invention there is provided a bio or synthetics plastics product in which the product includes cellulose fibres as a material matrix wherein an amount of more than 50% of bio or standard plastic material is included in said final product.

Typically, defibrillated fibre material is prepared in accordance with the prior art patent US6379594.

In a yet further aspect of the invention there is provided a paper or card based product in which a quantity of fibrillated cellulose fibres are provided therein.

In one embodiment, the cellulose fibres which are used in the end product are provided from any, or any combination, of cellulose from long fibred lignocellulosic plant feed stock such as bast, leaf, seed and seed pod fibres (e.g./ hemp/jute/abaca/flax/kenaf/ramie/sisal/sun hemp/Indian hemp / roselle/ urena./ Henequen/ yucca/bowstring hemp/New Zealand flax/ coir/ milk weed / kapok); cereals and straws such as wheat, oats, rye, barley, rice; grasses such as bamboo, bagasse, kahi, miscanthus; natural reed; wood cellulose, natural wood, fruit cellulose and/or recycled (waste) paper.

In a further aspect of the invention there is provided a rigid or semi-rigid two or three dimensional material created by use of a plurality of defibrillated cellulose fibres which are bound together using a fibre binding system to form a material which is used at least as a component of an end product and in which the density of the said material is in the range of 0.4 - 1.5 grams per cubic centimetre.

Specific product definitions in relation to the current invention are disclosed in the accompanying tables which are now discussed as follows. I t is hereby specifically set out that the subject matter and contents of these tables are incorporated within the body of this description and the contents of the same can be incorporated into the claimed subject matter.

With regard to table numbers 1-9, there is provided a relatively high density material end product which has a density in the range of 1-1.5 grams per cubic centimetre which is created from cellulosic fibres in a bound system. This allows the creation of 2 or 3 dimensionally formable end product which can be coloured and can be formed using waste as well as new fibre sources and be biodegradable. The end product can be any 2 or 3 dimensional articles such as finishing boards or panels which can be used for structural and/or surface finish purposes thus providing an effective alternative to conventional products such as natural and synthetic based composite boards, coloured MDF boards, plywood hardwood and/or oil and natural polymer based plastics boards. The fibre used is from long fibre lignocellulosic feedstocks.

Turning to table numbers 10-18, there is provided a medium density material end product with a density in the range of 0.5-0.9 grams per cubic centimetre. These end products are formed as any 2 or 3 dimensional article such as boards or panels using the cellulosic fibre finding system and the boards or panels can be used as a carrier, a backing board or to provide a realtuvely lightweight finishing board or panel. The products also have relatively good insulation values which are similar to conventional acoustic and temperature insulation materials and hence provide an effective alternative to conventional materials such as lightweight natural and synthetic material based composite boards, cork, balsa and many oil and natural polymer based insulation and acoustic products.

With regard to table numbers 19-27, there is provided a high density material end product with a density, for example, of 1.5 grams per cubic centimetre. This product is formed using the cellulosic fibres as a fibre binding system with a material performance enhancer of an amount of less than 50% bio or standard plastic material included therein. This product can be provided of to be an appropriate colour or colour pattern throughout and can be produced using waste as well as new fibre sources and will be biodegradable. The plastics content may be of oil or bio based plastics. In addition the product can be produced and be mouldable using plastics based or similar systems as well as that described in the prior patent referred to previously herein. The end product can again be formed as 2 or 3 dimensional products such as boards or panels as a hybrid product with structural or finishing material qualities thus providing an effective alternative to materials such as natural and synthetic based composite boards, coloured MDF, Plywood, hardwood and many oil and natural polymer based plastics.

With regard to table numbers 28 - 35, there is provided a medium and density material end product with a density in the range of 0.5-0.9grams per cubic centimetre which use the cellulosic fibres as a fibre binding system and as a material performance enhancer. This product can be provided in an appropriate colour or colour pattern throughout and can be produced using waste as well as new fibre sources and these fibres and any bioplastic content will be biodegradable. The plastics content may be of oil or bio based plastics. In addition the product can be produced and be mouldable using plastics based or similar systems as well as that described in the prior patent referred to previously herein. The end product can again be formed as any 3 dimensional article with structural finishing and insulation material qualities, thus providing an alternative to materials such as lightweight natural and synthetic material based composite boards, cork, balsa and many oil and natural polymer based insulation and acoustic products.

With regard to table numbers 36-45, there is provided a biosynthetic plastic product including fibre prepared as a cellulosic fibre matrix with an amount of more than 50% bio or standards plastics material included in the end product. The fibrillated fibres are 3 dimensional and therefore bind organic and potentially synthetic single strand strengthening fibres. Without the additional single strand strengthening fibres, the use of the cellulose fibres in accordance with the invention will increase the performance properties and also offer cost savings in comparison to the use of a substantial content of bio plastic whilst, at the same time maintaining the qualities of the basic properties of the plastics material. The plastics or polymers which are used are 2 or 3 dimensionally formable using moulding/extruding technologies which are appropriate to each plastic type. The plastics content can be of oil or bio based plastics and the fibres can be from waste and/or new sources thereby creating a relatively high performance hybrid product.

The cellulosic fibres in accordance with the invention can be used in paper and board making and these are illustrated in table numbers 45 - 54 in which there are provided paper based products such as standards writings, printings and magazine papers, coating basis all of which may be reinforced with cellulosic fibres in accordance with the invention.

With regard to standard writings, printing and magazine papers the current invention provides the benefits of reducing the overall refining energy which is used, improving the runability on the paper machine by increasing the wet web strength, improving the formation, pick strength and printability and allows the porosity of paper such as filter paper to be controlled more closely.

With regard to those papers which are coated, the current invention provides improvement of the surface characteristics and formation. It also improves the runability in the paper machine and subsequent coating operations and allows control of the migration of the coating mix into the base while reducing the overall refining energy which is used.

With regard to table number 55, there is provided a tissue and towelling product which has improved absorbency, web strength and also improved runability on the paper machine. It also allows the impartation of a degree of wet strength while in use thereby reducing the dependency on the use synthetic agents and again reduces the overall refining energy required. With regard to cigarette tissues there is provided the ability to control porosity and reduce the overall refining energy and with regard to packaging papers there is provided the ability to improve the strength and reduce the refining energy required.

With regard to tables 56-64, there is provided a matrix for paper based products such as mounting card and packaging board which is reinforced using cellulosic fibres in accordance with the invention which allows a reduced porosity, an increased density and reduction in the overall refining energy required in the manufacture.

With regard to table numbers 65 - 74 there is provided a paper based product which has a corrugated medium which is reinforced using cellulosic fibres in accordance with the invention. This allows an improvement in the web strength to be achieved and thereby improves runability on the paper machine while increasing strength properties and reducing the overall refining energy required.

With regard to table numbers 75 -78 there is described a heating briquette formation which typically has a density of the cellulose fibres of 1.0 - 1.5 grams/cubic centimetre. The briquette has a low flare/high calorific value typically, a gross calorific value max. 20 / MJ kg-1.

Conventional fibre based briquette manufacture is based on the use of manufacturing systems that rely on the lignin inherent in the fibre and high pressure to bond the product. They are generally energy intensive in manufacture and produce product with a density at the higher end (shell/fibre) of 1.2grams/cm3. In accordance with the current invention the briquettes can be produced with a high-density fibre matrix (up to 1.5 g/cm3), using low energy refining systems and hence the product is self-binding. By using the cellulose fibre content as a binder the product can be made up of this fibre and highly dense 'carried' materials of organic or mineral nature. The high density standard or mixed (with carried materials) form of the briquette allows a relatively slow burning product to be achieved with a high calorific value (up to 20M-J kg-1) with little flare.

The product can be produced using waste as well as new organic and mineral sources. In addition the briquette can also carry optional flame colouring agents such as barium salts to produce a light green colour ; calcium salts to provide a brick red colour; copper salts to provide a blue green colour; potassium salts to provide a lilac colour, sodium salts to provide an orange yellow colour. The product can be produced using conventional manufacturing techniques and can be moulded into a shape or form as required.

Table numbers 79-82 relate to another form of heating briquette with a density in the range of 0.5 - 0.9 grams/cubic centimetre. In this case the briquette has a relatively high flare and medium calorific value (Gross calorific value max. 14 / MJ kg-1) with the cellulose fibres used typically being prepared in accordance with the prior patent as the fibre binding system and property enhancing material carrier (matrix).

In this case the briquettes have a relatively low to medium-density fibre matrix (up to 0.9 g/cm3), and relatively low energy refining systems are used to achieve the same such that the product is self-binding. Using the fibre content as a binder the product can be made up of this fibre and highly dense 'carried' materials of organic or mineral nature. The low to medium density standard or mixed (with carried materials) product will produce a fast burning, medium calorific product (up to 14MJ kg-1) with high flare which makes the same ideal for starting the burring process and/or for flare focused display braziers and/or torches.

It will therefore be appreciated that the use of the cellulose fibres in accordance with the invention in order to form end products has significant advantage over the conventional products which are available.

| **Table 1.** | | | | | | | |
|---|---|---|---|---|---|---|---|
| **High-density material/end products (1.0 - 1.5 grams/cubic centimetre) using a fibre binding system.** | | | | | | | |
| **Principle fibre: CELLULOSE FROM LONGFIBRE LIGNOCELLULOSIC PLANT FEEDSTOCKS (e.g. Cotton/Hemp/Jute/Abaca/Flax/Kenaf/Rami/Sisal etc. see preamble)** | | | | | | | |
| **Principle microfibre & Max. 80% weight of product volume** | **Reinforcement fibre & 1-20% weight of product volume** | **Finished product density** | **Finished product thickness** | **Surface finish** | **Filler % weight of product volume** | **Colour % weight of product volume.** | **Mordent % weight of product volume (as per colour fixing requirement)** |
| Longfibre Cellulose | Longfibre Cellulose | 1.0g/cm³ up to 1.5g/cm³ dependent on end use. | 1 mm up to 20mm | Directionally sanded, textured or Flat | Calcium carbonate, china clay, talc 1 - 30% | Mineral or Synthetic 0.1 to 5% dependent on colour chosen. | Aluminium Sulphate 0.1-1% of total weight. |
| Longfibre Cellulose | Natural Longfibre Lignocellulosics | Ditto above | Ditto above | Ditto above | Ditto above | Ditto above | Ditto above |
| Longfibre Cellulose | Cereal straws (wheat, oats, rye, barley, rice etc.) | Ditto above | Ditto above | Ditto above | Ditto above | Ditto above | Ditto above |
| Longfibre Cellulose | Grasses (bamboo, bagasse, kahi, miscanthus etc.) | Ditto above | Ditto above | Ditto above | Ditto above | Ditto above | Ditto above |
| Longfibre Cellulose | Natural Reed | Ditto above | Ditto above | Ditto above | Ditto above | Ditto above | Ditto above |
| Longfibre Cellulose | Wood Cellulose | Ditto above | Ditto above | Ditto above | Ditto above | Ditto above | Ditto above |
| Longfibre Cellulose Longfibre Cellulose Longfibre Cellulose | Natural Wood | Ditto above | Ditto above | Ditto above | Ditto above | Ditto above | Ditto above |
| | Fruit Cellulose | Ditto above | Ditto above | Ditto above | Ditto above | Ditto above | Ditto above |
| | Recycled Paper | Ditto above | Ditto above | Ditto above | Ditto above | Ditto above | Ditto above |

| **Table 2.** | | | | | | | |
|---|---|---|---|---|---|---|---|
| **High-density material/end products (1.0 - 1.5 grams/cubic centimetre) using a fibre binding system.** | | | | | | | |
| **Principle fibre: NATURAL LONGFIBRE LIGNOCELLULOSIC PLANT FEEDSTOCKS (e.g. Cofton/Hemp/Jute/Abaca/Flax/Kenaf/Rami/Sisal etc. see preamble)** | | | | | | | |
| **Principle microfibre & Max. 80% weight of product volume** | **Reinforcement fibre & 1-20% weight of product volume** | **Finished product density** | **Finished product thickness** | **Surface finish** | **Filler % weight of product volume** | **Colour % weight of product volume.** | **Mordent % weight of product volume (as per colour fixing requirement)** |
| Natural Longfibre Lignocellulosics | Longfibre Cellulose | 1.0g/cm³ up to 1.5g/cm³ dependent on end use. | 1mm up to 20mm | Directionally sanded, textured or Flat | Calcium carbonate, china clay, talc 1 - 30% | Mineral or Synthetic 0.1 to 5% dependent on colour chosen. | Aluminium Sulphate 0.1-1% of total weight. |
| Natural Longfibre Lignocellulosics | Natural Longfibre Lignocellulosics | Ditto above | Ditto above | Ditto above | Ditto above | Ditto above | Ditto above |
| Natural Longfibre Lignocellulosics | Cereal straws (wheat, oats, rye, barley, rice etc.) | Ditto above | Ditto above | Ditto above | Ditto above | Ditto above | Ditto above |
| Natural Longfibre Lignocellulosics | Grasses (bamboo, bagasse, kahi, miscanthus etc.) | Ditto above | Ditto above | Ditto above | Ditto above | Ditto above | Ditto above |
| Natural Longfibre Lignocellulosics | Natural Reed | Ditto above | Ditto above | Ditto above | Ditto above | Ditto above | Ditto above |
| Natural Longfibre Lignocellulosics | Wood Cellulose | Ditto above | Ditto above | Ditto above | Ditto above | Ditto above | Ditto above |
| Natural Longfibre Lignocellulosics | Natural Wood | Ditto above | Ditto above | Ditto above | Ditto above | Ditto above | Ditto above |
| Natural Longfibre Liqnocellulosics | Fruit Cellulose | Ditto above | Ditto above | Ditto above | Ditto above | Ditto above | Ditto above |
| Natural Longfibre Lignocellulosics | Recycled Paper | Ditto above | Ditto above | Ditto above | Ditto above | Ditto above | Ditto above |

| **Table 3.** | | | | | | | |
|---|---|---|---|---|---|---|---|
| **High-density material/end products (1.0 - 1.5 grams/cubic centimetre) using a fibre binding system.** | | | | | | | |
| **Principle fibre: CEREAL STRAWS (wheat, oats, rye, barley, rice etc.)** | | | | | | | |
| **Principle microfibre & Max. 80% weight of product volume** | **Reinforcement fibre & 1-20% weight of product volume** | **Finished product density** | **Finished product thickness** | **Surface finish** | **Filler % weight of product volume** | **Colour % weight of product volume.** | **Mordent % weight of product volume (as per colour fixing requirement)** |
| Cereal straws | Longfibre Cellulose | 1.0g/cm³ up to 1.5g/cm³ dependent on end use. | 1 mm up to 20mm | Directionally sanded, textured or Flat | Calcium carbonate, china clay, talc 1 - 30% | Mineral or Synthetic 0.1 to 5% dependent on colour chosen. | Aluminium Sulphate 0.1-1% of total weight. |
| Cereal straws | Natural Longfibre Lignocellulosics | Ditto above | Ditto above | Ditto above | Ditto above | Ditto above | Ditto above |
| Cereal straws | Cereal straws (wheat, oats, rye, barley, rice etc.) | Ditto above | Ditto above | Ditto above | Ditto above | Ditto above | Ditto above |
| Cereal straws | Grasses (bamboo, bagasse, kahi, miscanthus etc.) | Ditto above | Ditto above | Ditto above | Ditto above | Ditto above | Ditto above |
| Cereal straws | Natural Reed | Ditto above | Ditto above | Ditto above | Ditto above | Ditto above | Ditto above |
| Cereal straws | Wood Cellulose | Ditto above | Ditto above | Ditto above | Ditto above | Ditto above | Ditto above |
| Cereal straws | Natural Wood | Ditto above | Ditto above | Ditto above | Ditto above | Ditto above | Ditto above |
| Cereal straws | Fruit Cellulose | Ditto above | Ditto above | Ditto above | Ditto above | Ditto above | Ditto above |
| Cereal straws | Recycled Paper | Ditto above | Ditto above | Ditto above | Ditto above | Ditto above | Ditto above |

| **Table 4.** | | | | | | | |
|---|---|---|---|---|---|---|---|
| **High-density material/end products (1.0 - 1.5 grams/cubic centimetre) using a fibre binding system.** | | | | | | | |
| **Principle fibre: GRASSES (bamboo, bagasse, kahi, miscanthus etc.)** | | | | | | | |
| **Principle microfibre & Max. 80% weight of product volume** | **Reinforcement fibre & 1-20% weight of product volume** | **Finished product density** | **Finished product thickness** | **Surface finish** | **Filler % weight of product volume** | **Colour % weight of product volume.** | **Mordent % weight of product volume (as per colour fixing requirement)** |
| Grasses | Longfibre Cellulose | 1.0g/cm³ up to 1.5g/cm³ dependent on end use. | 1mm up to 20mm | Directionally sanded, textured or Flat | Calcium carbonate, china clay, talc 1 - 30% | Mineral or Synthetic 0.1 to 5% dependent on colour chosen. | Aluminium Sulphate 0.1-1% of total weight. |
| Grasses | Natural Longfibre Lignocellulosics | Ditto above | Ditto above | Ditto above | Ditto above | Ditto above | Ditto above |
| Grasses | Cereal straws (wheat, oats, rye, barley, rice etc.) | Ditto above | Ditto above | Ditto above | Ditto above | Ditto above | Ditto above |
| Grasses | Grasses (bamboo, bagasse, kahi, miscanthus etc.) | Ditto above | Ditto above | Ditto above | Ditto above | Ditto above | Ditto above |
| Grasses | Natural Reed | Ditto above | Ditto above | Ditto above | Ditto above | Ditto above | Ditto above |
| Grasses | Wood Cellulose | Ditto above | Ditto above | Ditto above | Ditto above | Ditto above | Ditto above |
| Grasses | Natural Wood | Ditto above | Ditto above | Ditto above | Ditto above | Ditto above | Ditto above |
| Grasses | Fruit Cellulose | Ditto above | Ditto above | Ditto above | Ditto above | Ditto above | Ditto above |
| Grasses | Recycled Paper | Ditto above | Ditto above | Ditto above | Ditto above | Ditto above | Ditto above |

| **Table 5.** | | | | | | | |
|---|---|---|---|---|---|---|---|
| **High-density material/end products (1.0 - 1.5 grams/cubic centimetre) using a fibre binding system.** | | | | | | | |
| **Principle fibre: NATURAL REED** | | | | | | | |
| **Principle microfibre & Max. 80% weight of product volume** | **Reinforcement fibre & 1-20% weight of product volume** | **Finished product density** | **Finished product thickness** | **Surface finish** | **Filler % weight of product volume** | **Colour % weight of product volume.** | **Mordent % weight of product volume (as per colour fixing requirement)** |
| Natural Reed | Longfibre Cellulose | 1.0g/cm³ up to 1.5g/cm³ dependent on end use. | 1mm up to 20mm | Directionally sanded, textured or Flat | Calcium carbonate, china clay, talc 1 - 30% | Mineral or Synthetic 0.1 to 5% dependent on colour chosen. | Aluminium Sulphate 0.1-1% of total weight. |
| Natural Reed | Natural Longfibre Lignocellulosics | Ditto above | Ditto above | Ditto above | Ditto above | Ditto above | Ditto above |
| Natural Reed | Cereal straws (wheat, oats, rye, barley, rice etc.) | Ditto above | Ditto above | Ditto above | Ditto above | Ditto above | Ditto above |
| Natural Reed | Grasses (bamboo, bagasse, kahi, miscanthus etc.) | Ditto above | Ditto above | Ditto above | Ditto above | Ditto above | Ditto above |
| Natural Reed | Natural Reed | Ditto above | Ditto above | Ditto above | Ditto above | Ditto above | Ditto above |
| Natural Reed | Wood Cellulose | Ditto above | Ditto above | Ditto above | Ditto above | Ditto above | Ditto above |
| Natural Reed | Natural Wood | Ditto above | Ditto above | Ditto above | Ditto above | Ditto above | Ditto above |
| Natural Reed | Fruit Cellulose | Ditto above | Ditto above | Ditto above | Ditto above | Ditto above | Ditto above |
| Natural Reed | Recycled Paper | Ditto above | Ditto above | Ditto above | Ditto above | Ditto above | Ditto above |

| **Table 6.** | | | | | | | |
|---|---|---|---|---|---|---|---|
| **High-density material/end products (1.0 - 1.5 grams/cubic centimetre) using a fibre binding system.** | | | | | | | |
| **Principle fibre: WOOD CELLULOSE** | | | | | | | |
| **Principle microfibre & Max. 80% weight of product volume** | **Reinforcement fibre & 1-20% weight of product volume** | **Finished product density** | **Finished product thickness** | **Surface finish** | **Filler % weight of product volume** | **Colour % weight of product volume.** | **Mordent % weight of product volume (as per colour fixing requirement)** |
| Wood Cellulose | Longfibre Cellulose | 1.0g/cm³ up to 1.5g/cm³ dependent on end use. | 1 mm up to 20mm | Directionally sanded, textured or Flat | Calcium carbonate, china clay, talc 1 - 30% | Mineral or Synthetic 0.1 to 5% dependent on colour chosen. | Aluminium Sulphate 0.1-1% of total weight. |
| Wood Cellulose | Natural Longfibre Lignocellulosics | Ditto above | Ditto above | Ditto above | Ditto above | Ditto above | Ditto above |
| Wood Cellulose | Cereal straws (wheat, oats, rye, barley, rice etc.) | Ditto above | Ditto above | Ditto above | Ditto above | Ditto above | Ditto above |
| Wood Cellulose | Grasses (bamboo, bagasse, kahi, miscanthus etc.) | Ditto above | Ditto above | Ditto above | Ditto above | Ditto above | Ditto above |
| Wood Cellulose | Natural Reed | Ditto above | Ditto above | Ditto above | Ditto above | Ditto above | Ditto above |
| Wood Cellulose | Wood Cellulose | Ditto above | Ditto above | Ditto above | Ditto above | Ditto above | Ditto above |
| Wood Cellulose | Natural Wood | Ditto above | Ditto above | Ditto above | Ditto above | Ditto above | Ditto above |
| Wood Cellulose | Fruit Cellulose | Ditto above | Ditto above | Ditto above | Ditto above | Ditto above | Ditto above |
| Wood Cellulose | Recycled Paper | Ditto above | Ditto above | Ditto above | Ditto above | Ditto above | Ditto above |

| **Table 7.** | | | | | | | |
|---|---|---|---|---|---|---|---|
| **High-density material/end products (1.0 - 1.5 grams/cubic centimetre) using a fibre binding system.** | | | | | | | |
| **Principle fibre: NATURAL WOOD** | | | | | | | |
| **Principle microfibre & Max. 80% weight of product volume** | **Reinforcement fibre & 1-20% weight of product volume** | **Finished product density** | **Finished product thickness** | **Surface finish** | **Filler % weight of product volume** | **Colour % weight of product volume.** | **Mordent % weight of product volume (as per colour fixing requirement)** |
| Natural Wood | Longfibre Cellulose | 1.0g/cm³ up to 1.5g/cm³ dependent on end use. | 1 mm up to 20mm | Directionally sanded, textured or Flat | Calcium carbonate, china clay, talc 1 - 30% | Mineral or Synthetic 0.1 to 5% dependent on colour chosen. | Aluminium Sulphate 0.1-1% of total weight. |
| Natural Wood | Natural Longfibre Liqnocellulosics | Ditto above | Ditto above | Ditto above | Ditto above | Ditto above | Ditto above |
| Natural Wood | Cereal straws (wheat, oats, rye, barley, rice etc.) | Ditto above | Ditto above | Ditto above | Ditto above | Ditto above | Ditto above |
| Natural Wood | Grasses (bamboo, bagasse, kahi, miscanthus etc.) | Ditto above | Ditto above | Ditto above | Ditto above | Ditto above | Ditto above |
| Natural Wood | Natural Reed | Ditto above | Ditto above | Ditto above | Ditto above | Ditto above | Ditto above |
| Natural Wood | Wood Cellulose | Ditto above | Ditto above | Ditto above | Ditto above | Ditto above | Ditto above |
| Natural Wood | Natural Wood | Ditto above | Ditto above | Ditto above | Ditto above | Ditto above | Ditto above |
| Natural Wood | Fruit Cellulose | Ditto above | Ditto above | Ditto above | Ditto above | Ditto above | Ditto above |
| Natural Wood | Recycled Paper | Ditto above | Ditto above | Ditto above | Ditto above | Ditto above | Ditto above |

| **Table 8.** | | | | | | | |
|---|---|---|---|---|---|---|---|
| **High-density material/end products (1.0 - 1.5 grams/cubic centimetre) using a fibre binding system.** | | | | | | | |
| **Principle fibre: FRUIT CELLULOSE** | | | | | | | |
| **Principle microfibre & Max. 80% weight of product volume** | **Reinforcement fibre & 1-20% weight of product volume** | **Finished product density** | **Finished product thickness** | **Surface finish** | **Filler % weight of product volume** | **Colour % weight of product volume.** | **Mordent % weight of product volume (as per colour fixing requirement)** |
| Fruit Cellulose | Longfibre Cellulose | 1.0g/cm³ up to 1.5g/cm³ dependent on end use. | 1mm up to 20mm | Directionally sanded, textured or Flat | Calcium carbonate, china clay, talc 1 - 30% | Mineral or Synthetic 0.1 to 5% dependent on colour chosen. | Aluminium Sulphate 0.1-1% of total weight. |
| Fruit Cellulose | Natural Longfibre Lignocellulosics | Ditto above | Ditto above | Ditto above | Ditto above | Ditto above | Ditto above |
| Fruit Cellulose | Cereal straws (wheat, oats, rye, barley, rice etc.) | Ditto above | Ditto above | Ditto above | Ditto above | Ditto above | Ditto above |
| Fruit Cellulose | Grasses (bamboo, bagasse, kahi, miscanthus etc.) | Ditto above | Ditto above | Ditto above | Ditto above | Ditto above | Ditto above |
| Fruit Cellulose | Natural Reed | Ditto above | Ditto above | Ditto above | Ditto above | Ditto above | Ditto above |
| Fruit Cellulose | Wood Cellulose | Ditto above | Ditto above | Ditto above | Ditto above | Ditto above | Ditto above |
| Fruit Cellulose | Natural Wood | Ditto above | Ditto above | Ditto above | Ditto above | Ditto above | Ditto above |
| Fruit Cellulose | Fruit Cellulose | Ditto above | Ditto above | Ditto above | Ditto above | Ditto above | Ditto above |
| Fruit Cellulose | Recycled Paper | Ditto above | Ditto above | Ditto above | Ditto above | Ditto above | Ditto above |

| **Table 9.** | | | | | | | |
|---|---|---|---|---|---|---|---|
| **High-density material/end products (1.0 - 1.5 grams/cubic centimetre) using a fibre binding system.** | | | | | | | |
| **Principle fibre: RECYCLED (WASTE) PAPER** | | | | | | | |
| **Principle microfibre & Max. 80% weight of product volume** | **Reinforcement fibre & 1-20% weight of product volume** | **Finished product density** | **Finished product thickness** | **Surface finish** | **Filler % weight of product volume** | **Colour % weight of product volume.** | **Mordent % weight of product volume (as per colour fixing requirement)** |
| Recycled Paper | Longfibre Cellulose | 1.0g/cm³ up to 1.5g/cm³ dependent on end use. | 1mm up to 20mm | Directionally sanded, textured or Flat | Calcium carbonate, china clay, talc 1 - 30% | Mineral or Synthetic 0.1 to 5% dependent on colour chosen. | Aluminium Sulphate 0.1-1% of total weight. |
| Recycled Paper | Natural Longfibre Lignocellulosics | Ditto above | Ditto above | Ditto above | Ditto above | Ditto above | Ditto above |
| Recycled Paper | Cereal straws (wheat, oats, rye, barley, rice etc.) | Ditto above | Ditto above | Ditto above | Ditto above | Ditto above | Ditto above |
| Recycled Paper | Grasses (bamboo, bagasse, kahi, miscanthus etc.) | Ditto above | Ditto above | Ditto above | Ditto above | Ditto above | Ditto above |
| Recycled Paper | Natural Reed | Ditto above | Ditto above | Ditto above | Ditto above | Ditto above | Ditto above |
| Recycled Paper | Wood Cellulose | Ditto above | Ditto above | Ditto above | Ditto above | Ditto above | Ditto above |
| Recycled Paper | Natural Wood | Ditto above | Ditto above | Ditto above | Ditto above | Ditto above | Ditto above |
| Recycled Paper | Fruit Cellulose | Ditto above | Ditto above | Ditto above | Ditto above | Ditto above | Ditto above |
| Recycled Paper | Recycled Paper | Ditto above | Ditto above | Ditto above | Ditto above | Ditto above | Ditto above |

| **Table 10.** | | | | | | | |
|---|---|---|---|---|---|---|---|
| **Medium-density material/end products (0.5 - 0.9 grams/cubic centimetre) using a fibre binding system.** | | | | | | | |
| **Principle fibre: CELLULOSE FROM LONGFIBRE LIGNOCELLULOSIC PLANT FEEDSTOCKS (e.g. Cotton/Hemp/Jute/Abaca/Flax/Kenaf/Rami/Sisal etc. see preamble)** | | | | | | | |
| **Principle microfibre & Max. 80% weight of product volume** | **Reinforcement fibre & 1-20% weight of product volume** | **Finished product density** | **Finished product thickness** | **Surface finish** | **Filler % weight of product volume** | **Colour % weight of product volume.** | **Mordent % weight of product volume (as per colour fixing requirement)** |
| Longfibre Cellulose | Longfibre Cellulose | 0.5g/cm³ up to 0.9g/cm³ dependent on end use. | 1 mm up to 25mm | Directionally sanded, textured or Flat | Calcium carbonate, china clay, talc 1 - 30% | Mineral or Synthetic 0.1 to 5% dependent on colour chosen. | Aluminium Sulphate 0.1-1% of total weight. |
| Longfibre Cellulose | Natural Longfibre Lignocellulosics | Ditto above | Ditto above | Ditto above | Ditto above | Ditto above | Ditto above |
| Longfibre Cellulose | Cereal straws (wheat, oats, rye, barley, rice etc.) | Ditto above | Ditto above | Ditto above | Ditto above | Ditto above | Ditto above |
| Longfibre Cellulose | Grasses (bamboo, bagasse, kahi, miscanthus etc.) | Ditto above | Ditto above | Ditto above | Ditto above | Ditto above | Ditto above |
| Longfibre Cellulose | Natural Reed | Ditto above | Ditto above | Ditto above | Ditto above | Ditto above | Ditto above |
| Longfibre Cellulose | Wood Cellulose | Ditto above | Ditto above | Ditto above | Ditto above | Ditto above | Ditto above |
| Longfibre Cellulose | Natural Wood | Ditto above | Ditto above | Ditto above | Ditto above | Ditto above | Ditto above |
| Longfibre Cellulose | Fruit Cellulose | Ditto above | Ditto above | Ditto above | Ditto above | Ditto above | Ditto above |
| Longfibre Cellulose | Recycled Paper | Ditto above | Ditto above | Ditto above | Ditto above | Ditto above | Ditto above |

| **Table 11.** | | | | | | | |
|---|---|---|---|---|---|---|---|
| **Medium-density material/end products (0.5 - 0.9 grams/cubic centimetre) using a fibre binding system.** | | | | | | | |
| **Principle fibre: NATURAL LONGFIBRE LIGNOCELLULOSIC PLANT FEEDSTOCKS (e.g. Cofton/Hemp/Jute/Abaca/Flax/Kenaf/Rami/Sisal etc. see preamble)** | | | | | | | |
| **Principle microfibre & Max. 80% weight of product volume** | **Reinforcement fibre & 1-20% weight of product volume** | **Finished product density** | **Finished product thickness** | **Surface finish** | **Filler % weight of product volume** | **Colour % weight of product volume.** | **Mordent % weight of product volume (as per colour fixing requirement)** |
| Natural Longfibre Lignocellulosics | Longfibre Cellulose | 0.5g/cm³ up to 0.9g/cm³ dependent on end use. | 1mm up to 25mm | Directionally sanded, textured or Flat | Calcium carbonate, china clay, talc 1 - 30% | Mineral or Synthetic 0.1 to 5% dependent on colour chosen. | Aluminium Sulphate 0.1-1% of total weight. |
| Natural Longfibre Lignocellulosics | Natural Longfibre Lignocellulosics | Ditto above | Ditto above | Ditto above | Ditto above | Ditto above | Ditto above |
| Natural Longfibre Lignocellulosics | Cereal straws (wheat, oats, rye, barley, rice etc.) | Ditto above | Ditto above | Ditto above | Ditto above | Ditto above | Ditto above |
| Natural Longfibre Lignocellulosics | Grasses (bamboo, bagasse, kahi, miscanthus etc.) | Ditto above | Ditto above | Ditto above | Ditto above | Ditto above | Ditto above |
| Natural Longfibre Lignocellulosics | Natural Reed | Ditto above | Ditto above | Ditto above | Ditto above | Ditto above | Ditto above |
| Natural Longfibre Lignocellulosics | Wood Cellulose | Ditto above | Ditto above | Ditto above | Ditto above | Ditto above | Ditto above |
| Natural Longfibre Lignocellulosics | Natural Wood | Ditto above | Ditto above | Ditto above | Ditto above | Ditto above | Ditto above |
| Natural Longfibre Lignocellulosics | Fruit Cellulose | Ditto above | Ditto above | Ditto above | Ditto above | Ditto above | Ditto above |
| Natural Longfibre Lignocellulosics | Recycled Paper | Ditto above | Ditto above | Ditto above | Ditto above | Ditto above | Ditto above |

| **Table 12.** | | | | | | | |
|---|---|---|---|---|---|---|---|
| **Medium-density material/end products (0.5 - 0.9 grams/cubic centimetre) usinga fibre binding system.** | | | | | | | |
| **Principle fibre: CEREAL STRAWS (wheat, oats, rye, barley, rice etc.)** | | | | | | | |
| **Principle microfibre & Max. 80% weight of product volume** | **Reinforcement fibre & 1-20% weight of product volume** | **Finished product density** | **Finished product thickness** | **Surface finish** | **Filler % weight of product volume** | **Colour % weight of product volume.** | **Mordent % weight of product volume (as per colour fixing** requirement) |
| Cereal straws | Longfibre Cellulose | 0.5g/cm³ up to 0.9g/cm³ dependent on end use. | 1mm up to 25mm | Directionally sanded, textured or Flat | Calcium carbonate, china clay, talc 1 - 30% | Mineral or Synthetic 0.1 to 5% dependent on colour chosen. | Aluminium Sulphate 0.1-1% of total weight. |
| Cereal straws | Natural Longfibre Lignocellulosics | Ditto above | Ditto above | Ditto above | Ditto above | Ditto above | Ditto above |
| Cereal straws | Cereal straws (wheat, oats, rye, barley, rice etc.) | Ditto above | Ditto above | Ditto above | Ditto above | Ditto above | Ditto above |
| Cereal straws | Grasses (bamboo, bagasse, kahi, miscanthus etc.) | Ditto above | Ditto above | Ditto above | Ditto above | Ditto above | Ditto above |
| Cereal straws | Natural Reed | Ditto above | Ditto above | Ditto above | Ditto above | Ditto above | Ditto above |
| Cereal straws | Wood Cellulose | Ditto above | Ditto above | Ditto above | Ditto above | Ditto above | Ditto above |
| Cereal straws | Natural Wood | Ditto above | Ditto above | Ditto above | Ditto above | Ditto above | Ditto above |
| Cereal straws | Fruit Cellulose | Ditto above | Ditto above | Ditto above | Ditto above | Ditto above | Ditto above |
| Cereal straws | Recycled Paper | Ditto above | Ditto above | Ditto above | Ditto above | Ditto above | Ditto above |

| **Table 13.** | | | | | | | |
|---|---|---|---|---|---|---|---|
| **Medium-density material/end products (0.5 - 0.9 grams/cubic centimetre) usinga fibre binding system.** | | | | | | | |
| **Principle fibre: GRASSES (bamboo, bagasse, kahi, miscanthus etc.)** | | | | | | | |
| **Principle microfibre & Max. 80% weight of product volume** | **Reinforcement fibre & 1-20% weight of product volume** | **Finished product density** | **Finished product thickness** | **Surface finish** | **Filler % weight of product volume** | **Colour % weight of product volume.** | **Mordent % weight of product volume (as per colour fixing requirement)** |
| Grasses | Longfibre Cellulose | 0.5g/cm³ up to 0.9g/cm³ dependent on end use. | 1mm up to 25mm | Directionally sanded, textured or Flat | Calcium carbonate, china clay, talc 1 - 30% | Mineral or Synthetic 0.1 to 5% dependent on colour chosen. | Aluminium Sulphate 0.1-1% of total weight. |
| Grasses | Natural Longfibre Lignocellulosics | Ditto above | Ditto above | Ditto above | Ditto above | Ditto above | Ditto above |
| Grasses | Cereal straws (wheat, oats, rye, barley, rice etc.) | Ditto above | Ditto above | Ditto above | Ditto above | Ditto above | Ditto above |
| Grasses | Grasses (bamboo, bagasse, kahi, miscanthus etc.) | Ditto above | Ditto above | Ditto above | Ditto above | Ditto above | Ditto above |
| Grasses | Natural Reed | Ditto above | Ditto above | Ditto above | Ditto above | Ditto above | Ditto above |
| Grasses | Wood Cellulose | Ditto above | Ditto above | Ditto above | Ditto above | Ditto above | Ditto above |
| Grasses | Natural Wood | Ditto above | Ditto above | Ditto above | Ditto above | Ditto above | Ditto above |
| Grasses | Fruit Cellulose | Ditto above | Ditto above | Ditto above | Ditto above | Ditto above | Ditto above |
| Grasses | Recycled Paper | Ditto above | Ditto above | Ditto above | Ditto above | Ditto above | Ditto above |

| **Table 14.** | | | | | | | |
|---|---|---|---|---|---|---|---|
| **Medium-density material/end products (0.5 - 0.9 grams/cubic centimetre) using a fibre binding system.** | | | | | | | |
| **Principle fibre: NATURAL REED** | | | | | | | |
| **Principle microfibre & Max. 80% weight of product volume** | **Reinforcement fibre & 1-20% weight of product volume** | **Finished product density** | **Finished product thickness** | **Surface finish** | **Filler % weight of product volume** | **Colour % weight of product volume.** | **Mordent % weight of product volume (as per colour fixing requirement)** |
| Natural Reed | Longfibre Cellulose | 0.5g/cm³ up to 0.9g/cm³ dependent on end use. | 1mm up to 25mm | Directionally sanded, textured or Flat | Calcium carbonate, china clay, talc 1 - 30% | Mineral or Synthetic 0.1 to 5% dependent on colour chosen. | Aluminium Sulphate 0.1-1% of total weight. |
| Natural Reed | Natural Longfibre Lignocellulosics | Ditto above | Ditto above | Ditto above | Ditto above | Ditto above | Ditto above |
| Natural Reed | Cereal straws (wheat, oats, rye, barley, rice etc.) | Ditto above | Ditto above | Ditto above | Ditto above | Ditto above | Ditto above |
| Natural Reed | Grasses (bamboo, bagasse, kahi, miscanthus etc.) | Ditto above | Ditto above | Ditto above | Ditto above | Ditto above | Ditto above |
| Natural Reed | Natural Reed | Ditto above | Ditto above | Ditto above | Ditto above | Ditto above | Ditto above |
| Natural Reed | Wood Cellulose | Ditto above | Ditto above | Ditto above | Ditto above | Ditto above | Ditto above |
| Natural Reed | Natural Wood | Ditto above | Ditto above | Ditto above | Ditto above | Ditto above | Ditto above |
| Natural Reed | Fruit Cellulose | Ditto above | Ditto above | Ditto above | Ditto above | Ditto above | Ditto above |
| Natural Reed | Recycled Paper | Ditto above | Ditto above | Ditto above | Ditto above | Ditto above | Ditto above |

| **Table 15.** | | | | | | | |
|---|---|---|---|---|---|---|---|
| **Medium-density material/end products (0.5 - 0.9 grams/cubic centimetre) using a fibre binding system.** | | | | | | | |
| **Principle fibre: WOOD CELLULOSE** | | | | | | | |
| **Principle microfibre & Max. 80% weight of product volume** | **Reinforcement fibre & 1-20% weight of product volume** | **Finished product density** | **Finished product thickness** | **Surface finish** | **Filler % weight of product volume** | **Colour % weight of product volume.** | **Mordent % weight of product volume (as per colour fixing requirement)** |
| Wood Cellulose | Longfibre Cellulose | 0.5g/cm³ up to 0.9g/cm³ dependent on end use. | 1mm up to 25mm | Directionally sanded, textured or Flat | Calcium carbonate, china clay, talc 1 - 30% | Mineral or Synthetic 0.1 to 5% dependent on colour chosen. | Aluminium Sulphate 0.1-1% of total weight. |
| Wood Cellulose | Natural Longfibre Lignocellulosics | Ditto above | Ditto above | Ditto above | Ditto above | Ditto above | Ditto above |
| Wood Cellulose | Cereal straws (wheat, oats, rye, barley, rice etc.) | Ditto above | Ditto above | Ditto above | Ditto above | Ditto above | Ditto above |
| Wood Cellulose | Grasses (bamboo, bagasse, kahi, miscanthus etc.) | Ditto above | Ditto above | Ditto above | Ditto above | Ditto above | Ditto above |
| Wood Cellulose | Natural Reed | Ditto above | Ditto above | Ditto above | Ditto above | Ditto above | Ditto above |
| Wood Cellulose | Wood Cellulose | Ditto above | Ditto above | Ditto above | Ditto above | Ditto above | Ditto above |
| Wood Cellulose | Natural Wood | Ditto above | Ditto above | Ditto above | Ditto above | Ditto above | Ditto above |
| Wood Cellulose | Fruit Cellulose | Ditto above | Ditto above | Ditto above | Ditto above | Ditto above | Ditto above |
| Wood Cellulose | Recycled Paper | Ditto above | Ditto above | Ditto above | Ditto above | Ditto above | Ditto above |

| **Table 16.** | | | | | | | |
|---|---|---|---|---|---|---|---|
| **Medium-density material/end products (0.5 - 0.9 grams/cubic centimetre) using a fibre binding system.** | | | | | | | |
| **Principle fibre: NATURAL WOOD** | | | | | | | |
| **Principle microfibre & Max. 80% weight of product volume** | **Reinforcement fibre & 1-20% weight of product volume** | **Finished product density** | **Finished product thickness** | **Surface finish** | **Filler % weight of product volume** | **Colour % weight of product volume.** | **Mordent % weight of product volume (as per colour fixing requirement)** |
| Natural Wood | Longfibre Cellulose | 0.5g/cm³ up to 0.9g/cm³ dependent on end use. | 1mm up to 25mm | Directionally sanded, textured or Flat | Calcium carbonate, china clay, talc 1 - 30% | Mineral or Synthetic 0.1 to 5% dependent on colour chosen. | Aluminium Sulphate 0.1-1% of total weight. |
| Natural Wood | Natural Longfibre Lignocellulosics | Ditto above | Ditto above | Ditto above | Ditto above | Ditto above | Ditto above |
| Natural Wood | Cereal straws (wheat, oats, rye, barley, rice etc.) | Ditto above | Ditto above | Ditto above | Ditto above | Ditto above | Ditto above |
| Natural Wood | Grasses (bamboo, bagasse, kahi, miscanthus etc.) | Ditto above | Ditto above | Ditto above | Ditto above | Ditto above | Ditto above |
| Natural Wood | Natural Reed | Ditto above | Ditto above | Ditto above | Ditto above | Ditto above | Ditto above |
| Natural Wood | Wood Cellulose | Ditto above | Ditto above | Ditto above | Ditto above | Ditto above | Ditto above |
| Natural Wood | Natural Wood | Ditto above | Ditto above | Ditto above | Ditto above | Ditto above | Ditto above |
| Natural Wood | Fruit Cellulose | Ditto above | Ditto above | Ditto above | Ditto above | Ditto above | Ditto above |
| Natural Wood | Recycled Paper | Ditto above | Ditto above | Ditto above | Ditto above | Ditto above | Ditto above |

| **Table 17.** | | | | | | | |
|---|---|---|---|---|---|---|---|
| **Medium-density material/end products (0.5 - 0.9 grams/cubic centimetre) using a fibre binding system.** | | | | | | | |
| **Principle fibre: FRUIT CELLULOSE** | | | | | | | |
| **Principle microfibre & Max. 80% weight of product volume** | **Reinforcement fibre & 1-20% weight of product volume** | **Finished product density** | **Finished product thickness** | **Surface finish** | **Filler % weight of product volume** | **Colour % weight of product volume.** | **Mordent % weight of product volume (as per colour fixing requirement)** |
| Fruit Cellulose | Longfibre Cellulose | 0.5g/cm³ up to 0.9g/cm³ dependent on end use. | 1 mm up to 25mm | Directionally sanded, textured or Flat | Calcium carbonate, china clay, talc 1 - 30% | Mineral or Synthetic 0.1 to 5% dependent on colour chosen. | Aluminium Sulphate 0.1-1% of total weight. |
| Fruit Cellulose | Natural Longfibre Lignocellulosics | Ditto above | Ditto above | Ditto above | Ditto above | Ditto above | Ditto above |
| Fruit Cellulose | Cereal straws (wheat, oats, rye, barley, rice etc.) | Ditto above | Ditto above | Ditto above | Ditto above | Ditto above | Ditto above |
| Fruit Cellulose | Grasses (bamboo, bagasse, kahi, miscanthus etc.) | Ditto above | Ditto above | Ditto above | Ditto above | Ditto above | Ditto above |
| Fruit Cellulose | Natural Reed | Ditto above | Ditto above | Ditto above | Ditto above | Ditto above | Ditto above |
| Fruit Cellulose | Wood Cellulose | Ditto above | Ditto above | Ditto above | Ditto above | Ditto above | Ditto above |
| Fruit Cellulose | Natural Wood | Ditto above | Ditto above | Ditto above | Ditto above | Ditto above | Ditto above |
| Fruit Cellulose | Fruit Cellulose | Ditto above | Ditto above | Ditto above | Ditto above | Ditto above | Ditto above |
| Fruit Cellulose | Recycled Paper | Ditto above | Ditto above | Ditto above | Ditto above | Ditto above | Ditto above |

| **Table 18.** | | | | | | | |
|---|---|---|---|---|---|---|---|
| **Medium-density material/end products (0.5 - 0.9 grams/cubic centimetre) using the Zelfo Process Patent as a fibre binding system.** | | | | | | | |
| **Principle fibre: RECYCLED (WASTE) PAPER** | | | | | | | |
| **Principle microfibre & Max. 80% weight of product volume** | **Reinforcement fibre & 1-20% weight of product volume** | **Finished product density** | **Finished product thickness** | **Surface finish** | **Filler % weight of product volume** | **Colour % weight of product volume.** | **Mordent % weight of product volume (as per colour fixing requirement)** |
| Recycled Paper | Longfibre Cellulose | 0.5g/cm³ up to 0.9g/cm³ dependent on end use. | 1 mm up to 25mm | Directionally sanded, textured or Flat | Calcium carbonate, china clay, talc 1 - 30% | Mineral or Synthetic 0.1 to 5% dependent on colour chosen. | Aluminium Sulphate 0.1-1% of total weight. |
| Recycled Paper | Natural Longfibre Lignocellulosics | Ditto above | Ditto above | Ditto above | Ditto above | Ditto above | Ditto above |
| Recycled Paper | Cereal straws (wheat, oats, rye, barley, rice etc.) | Ditto above | Ditto above | Ditto above | Ditto above | Ditto above | Ditto above |
| Recycled Paper | Grasses (bamboo, bagasse, kahi, miscanthus etc.) | Ditto above | Ditto above | Ditto above | Ditto above | Ditto above | Ditto above |
| Recycled Paper | Natural Reed | Ditto above | Ditto above | Ditto above | Ditto above | Ditto above | Ditto above |
| Recycled Paper | Wood Cellulose | Ditto above | Ditto above | Ditto above | Ditto above | Ditto above | Ditto above |
| Recycled Paper | Natural Wood | Ditto above | Ditto above | Ditto above | Ditto above | Ditto above | Ditto above |
| Recycled Paper | Fruit Cellulose | Ditto above | Ditto above | Ditto above | Ditto above | Ditto above | Ditto above |
| Recycled Paper | Recycled Paper | Ditto above | Ditto above | Ditto above | Ditto above | Ditto above | Ditto above |

| **Table 19.** | | | | | | | | |
|---|---|---|---|---|---|---|---|---|
| **High-density material/end products (1.0 - 1.5 grams/cubic centimetre) using a fibre binding system enhanced by Bio or Synthetic plastics.** | | | | | | | | |
| **Principle fibre: CELLULOSE FROM LONGFIBRE LIGNOCELLULOSIC PLANT FEEDSTOCKS (e.g. Cotton/Hemp/Jute/Abaca/Flax/Kenaf/Rami/Sisal etc. see preamble)** | | | | | | | | |
| **Principle microfibre & Max. 80% weight of product volume** | **Reinforcement fibre & 1-20% weight of product volume** | **Finished product density** | **Finished product thickness** | **Surface finish** | **Filler % weight of product volume** | **Colour % weight of product volume.** | **Mordent % weight of product volume (as per colour fixing requirement)** | **Plastic material content** |
| Longfibre Cellulose | Longfibre Cellulose | 1.0g/cm³ up to 1.5g/cm³ dependent on end use. | 1mm up to 20mm | Mould textured or Flat | Calcium carbonate, china clay, talc, 1 - 30% | Mineral or Synthetic 0.1 to 5% dependent on colour chosen. Plastic dyed in masterbatch when required | Aluminium Sulphate 0.1-1% of total weight. | Bio or Oil Based Plastic 1 - 49% weight of product volume |
| Longfibre Cellulose | Natural Longfibre Lignocellulosics | Ditto above | Ditto above | Ditto above | Ditto above | Ditto above | Ditto above | Ditto above |
| Longfibre Cellulose | Cereal straws (wheat, oats, rye, barley, rice etc.) | Ditto above | Ditto above | Ditto above | Ditto above | Ditto above | Ditto above | Ditto above |
| Longfibre Cellulose | Grasses (bamboo, bagasse, kahi, miscanthus etc.) | Ditto above | Ditto above | Ditto above | Ditto above | Ditto above | Ditto above | Ditto above |
| Longfibre Cellulose | Natural Reed | Ditto above | Ditto above | Ditto above | Ditto above | Ditto above | Ditto above | Ditto above |
| Longfibre Cellulose | Wood Cellulose | Ditto above | Ditto above | Ditto above | Ditto above | Ditto above | Ditto above | Ditto above |
| Longfibre Cellulose | Natural Wood | Ditto above | Ditto above | Ditto above | Ditto above | Ditto above | Ditto above | Ditto above |
| Longfibre Cellulose | Fruit Cellulose | Ditto above | Ditto above | Ditto above | Ditto above | Ditto above | Ditto above | Ditto above |
| Longfibre Cellulose | Recycled Paper | Ditto above | Ditto above | Ditto above | Ditto above | Ditto above | Ditto above | Ditto above |

| **Table 20.** | | | | | | | | |
|---|---|---|---|---|---|---|---|---|
| **High-density material/end products (1.0 - 1.5 grams/cubic centimetre) using a fibre binding system enhanced by Bio or Synthetic plastics.** | | | | | | | | |
| **Principle fibre: NATURAL LONGFIBRE LIGNOCELLULOSIC PLANT FEEDSTOCKS (e.g. Cotton/Hemp/Jute/Abaca/Flax/Kenaf/Rami/Sisal etc. see preamble)** | | | | | | | | |
| **Principle microfibre & Max. 80% weight of product volume** | **Reinforcement fibre & 1-20% weight of product volume** | **Finished product density** | **Finished product thickness** | **Surface finish** | **Filler % weight of product volume** | **Colour % weight of product volume.** | **Mordent % weight of product volume (as per colour fixing requirement)** | **Plastic material content** |
| Natural Longfibre Lignocellulosics | Longfibre Cellulose | 1.0g/cm³ up to 1.5g/cm³ dependent on end use. | 1mm up to 20mm | Mould textured or Flat | Calcium carbonate, china clay, talc, 1 - 30% | Mineral or Synthetic 0.1 to 5% dependent on colour chosen. Plastic dyed in masterbatch when required | Aluminium Sulphate 0.1-1% of total weight. | Bio or Oil Based Plastic 1 - 49% weight of total product volume |
| Natural Longfibre Lignocellulosics | Natural Longfibre Liqnocellulosics | Ditto above | Ditto above | Ditto above | Ditto above | Ditto above | Ditto above | Ditto above |
| Natural Longfibre Lignocellulosics | Cereal straws (wheat, oats, rye, barley, rice etc.) | Ditto above | Ditto above | Ditto above | Ditto above | Ditto above | Ditto above | Ditto above |
| Natural Longfibre Lignocellulosics | Grasses (bamboo, bagasse, kahi, miscanthus etc.) | Ditto above | Ditto above | Ditto above | Ditto above | Ditto above | Ditto above | Ditto above |
| Natural Longfibre Lignocellulosics | Natural Reed | Ditto above | Ditto above | Ditto above | Ditto above | Ditto above | Ditto above | Ditto above |
| Natural Longfibre Lignocellulosics | Wood Cellulose | Ditto above | Ditto above | Ditto above | Ditto above | Ditto above | Ditto above | Ditto above |
| Natural Longfibre Lignocellulosics | Natural Wood | Ditto above | Ditto above | Ditto above | Ditto above | Ditto above | Ditto above | Ditto above |
| Natural Longfibre Lignocellulosics | Fruit Cellulose | Ditto above | Ditto above | Ditto above | Ditto above | Ditto above | Ditto above | Ditto above |
| Natural Longfibre Lignocellulosics | Recycled Paper | Ditto above | Ditto above | Ditto above | Ditto above | Ditto above | Ditto above | Ditto above |

| **Table 21.** | | | | | | | | |
|---|---|---|---|---|---|---|---|---|
| **High-density material/end products (1.0 - 1.5 grams/cubic centimetre) using a fibre binding system enhanced by Bio or Synthetic plastics.** | | | | | | | | |
| **Principle fibre: CEREAL STRAWS (wheat, oats, rye, barley, rice etc.)** | | | | | | | | |
| **Principle micro-fibre & Max. 80% weight of product volume** | **Reinforcement fibre & 1-20% weight of product volume** | **Finished product density** | **Finished product thickness** | **Surface finish** | **Filler % weight of product volume** | **Colour % weight of product volume.** | **Mordent % weight of product volume (as per colour fixing requirement)** | **Plastic material content** |
| Cereal straws | Longfibre Cellulose | 1.0g/cm³ up to 1.5g/cm³ dependent on end use. | 1mm up to 20mm | Mould textured or Flat | Calcium carbonate, china clay, talc, 1 - 30% | Mineral or Synthetic 0.1 to 5% dependent on colour chosen. Plastic dyed in masterbatch when required | Aluminium Sulphate 0.1-1% of total weight. | Bio or Oil Based Plastic 1 - 49% weight of total product volume |
| Cereal straws | Natural Longfibre Lignocellulosics | Ditto above | Ditto above | Ditto above | Ditto above | Ditto above | Ditto above | Ditto above |
| Cereal straws | Cereal straws (wheat, oats, rye, barley, rice etc.) | Ditto above | Ditto above | Ditto above | Ditto above | Ditto above | Ditto above | Ditto above |
| Cereal straws | Grasses (bamboo, bagasse, kahi, miscanthus etc.) | Ditto above | Ditto above | Ditto above | Ditto above | Ditto above | Ditto above | Ditto above |
| Cereal straws | Natural Reed | Ditto above | Ditto above | Ditto above | Ditto above | Ditto above | Ditto above | Ditto above |
| Cereal straws | Wood Cellulose | Ditto above | Ditto above | Ditto above | Ditto above | Ditto above | Ditto above | Ditto above |
| Cereal straws | Natural Wood | Ditto above | Ditto above | Ditto above | Ditto above | Ditto above | Ditto above | Ditto above |
| Cereal straws | Fruit Cellulose | Ditto above | Ditto above | Ditto above | Ditto above | Ditto above | Ditto above | Ditto above |
| Cereal straws | Recycled Paper | Ditto above | Ditto above | Ditto above | Ditto above | Ditto above | Ditto above | Ditto above |

| **Table 22.** | | | | | | | | |
|---|---|---|---|---|---|---|---|---|
| **High-density material/end products (1.0 - 1.5 grams/cubic centimetre) using a fibre binding system enhanced by Bio or Synthetic plastics.** | | | | | | | | |
| **Principle fibre: GRASSES (bamboo, bagasse, kahi, miscanthus etc.)** | | | | | | | | |
| **Principle micro-fibre & Max. 80% weight of product volume** | **Reinforcement fibre & 1-20% weight of product volume** | **Finished product density** | **Finished product thickness** | **Surface finish** | **Filler % weight of product volume** | **Colour % weight of product volume.** | **Mordent % weight of product volume (as per colour fixing requirement**) | **Plastic material content** |
| Grasses | Longfibre Cellulose | 1.0g/cm³ up to 1.5g/cm³ dependent on end use. | 1mm up to 20mm | Mould textured or Flat | Calcium carbonate, china clay, talc, 1 - 30% | Mineral or Synthetic 0.1 to 5% dependent on colour chosen. Plastic dyed in masterbatch when required | Aluminium Sulphate 0.1-1% of total weight. | Bio or Oil Based Plastic 1 - 49% weight of total product volume |
| Grasses | Natural Longfibre Lignocellulosics | Ditto above | Ditto above | Ditto above | Ditto above | Ditto above | Ditto above | Ditto above |
| Grasses | Cereal straws (wheat, oats, rye, barley, rice etc.) | Ditto above | Ditto above | Ditto above | Ditto above | Ditto above | Ditto above | Ditto above |
| Grasses | Grasses (bamboo, bagasse, kahi, miscanthus etc.) | Ditto above | Ditto above | Ditto above | Ditto above | Ditto above | Ditto above | Ditto above |
| Grasses | Natural Reed | Ditto above | Ditto above | Ditto above | Ditto above | Ditto above | Ditto above | Ditto above |
| Grasses | Wood Cellulose | Ditto above | Ditto above | Ditto above | Ditto above | Ditto above | Ditto above | Ditto above |
| Grasses | Natural Wood | Ditto above | Ditto above | Ditto above | Ditto above | Ditto above | Ditto above | Ditto above |
| Grasses | Fruit Cellulose | Ditto above | Ditto above | Ditto above | Ditto above | Ditto above | Ditto above | Ditto above |
| Grasses | Recycled Paper | Ditto above | Ditto above | Ditto above | Ditto above | Ditto above | Ditto above | Ditto above |

| **Table 23.** | | | | | | | | |
|---|---|---|---|---|---|---|---|---|
| **High-density material/end products (1.0 - 1.5 grams/cubic centimetre) using a fibre binding system enhanced by Bio or Synthetic plastics.** | | | | | | | | |
| **Principle fibre: NATURAL REED** | | | | | | | | |
| **Principle micro-fibre & Max. 80% weight of product volume** | **Reinforcement fibre & 1-20% weight of product volume** | **Finished product density** | **Finished product thickness** | **Surface finish** | **Filler % weight of product volume** | **Colour % weight of product volume.** | **Mordent % weight of product volume (as per colour fixing requirement)** | **Plastic material content** |
| Natural Reed | Longfibre Cellulose | 1.0g/cm³ up to 1.5g/cm³ dependent on end use. | 1mm up to 20mm | Mould textured or Flat | Calcium carbonate, china clay, talc, 1 - 30% | Mineral or Synthetic 0.1 to 5% dependent on colour chosen. Plastic dyed in masterbatch when required | Aluminium Sulphate 0.1-1% of total weight. | Bio or Oil Based Plastic 1 - 49% weight of total product volume |
| Natural Reed | Natural Longfibre Lignocellulosics | Ditto above | Ditto above | Ditto above | Ditto above | Ditto above | Ditto above | Ditto above |
| Natural Reed | Cereal straws (wheat, oats, rye, barley, rice etc.) | Ditto above | Ditto above | Ditto above | Ditto above | Ditto above | Ditto above | Ditto above |
| Natural Reed | Grasses (bamboo, bagasse, kahi, miscanthus etc.) | Ditto above | Ditto above | Ditto above | Ditto above | Ditto above | Ditto above | Ditto above |
| Natural Reed | Natural Reed | Ditto above | Ditto above | Ditto above | Ditto above | Ditto above | Ditto above | Ditto above |
| Natural Reed | Wood Cellulose | Ditto above | Ditto above | Ditto above | Ditto above | Ditto above | Ditto above | Ditto above |
| Natural Reed | Natural Wood | Ditto above | Ditto above | Ditto above | Ditto above | Ditto above | Ditto above | Ditto above |
| Natural Reed | Fruit Cellulose | Ditto above | Ditto above | Ditto above | Ditto above | Ditto above | Ditto above | Ditto above |
| Natural Reed | Recycled Paper | Ditto above | Ditto above | Ditto above | Ditto above | Ditto above | Ditto above | Ditto above |

| **Table 24.** | | | | | | | | |
|---|---|---|---|---|---|---|---|---|
| **High-density material/end products (1.0 -1.5 grams/cubic centimetre) using a fibre binding system enhanced by Bio or Synthetic plastics.** | | | | | | | | |
| **Principle fibre: WOOD CELLULOSE** | | | | | | | | |
| **Principle micro-fibre & Max. 80% weight of product volume** | **Reinforcement fibre & 1-20% weight of product volume** | **Finished product density** | **Finished product thickness** | **Surface finish** | **Filler % weight of product volume** | **Colour % weight of product volume.** | **Mordent % weight of product volume (as per colour fixing requirement)** | **Plastic material content** |
| Wood Cellulose | Longfibre Cellulose | 1.0g/cm³ up to 1.5g/cm³ dependent on end use. | 1mm up to 20mm | Mould textured or Flat | Calcium carbonate, china clay, talc, 1 - 30% | Mineral or Synthetic 0.1 to 5% dependent on colour chosen. Plastic dyed in masterbatch when required | Aluminium Sulphate 0.1-1% of total weight. | Bio or Oil Based Plastic 1 - 49% weight of product volume |
| Wood Cellulose | Natural Longfibre Lignocellulosics | Ditto above | Ditto above | Ditto above | Ditto above | Ditto above | Ditto above | Ditto above |
| Wood Cellulose | Cereal straws (wheat, oats, rye, barley, rice etc.) | Ditto above | Ditto above | Ditto above | Ditto above | Ditto above | Ditto above | Ditto above |
| Wood Cellulose | Grasses (bamboo, bagasse, kahi, miscanthus etc.) | Ditto above | Ditto above | Ditto above | Ditto above | Ditto above | Ditto above | Ditto above |
| Wood Cellulose | Natural Reed | Ditto above | Ditto above | Ditto above | Ditto above | Ditto above | Ditto above | Ditto above |
| Wood Cellulose | Wood Cellulose | Ditto above | Ditto above | Ditto above | Ditto above | Ditto above | Ditto above | Ditto above |
| Wood Cellulose | Natural Wood | Ditto above | Ditto above | Ditto above | Ditto above | Ditto above | Ditto above | Ditto above |
| Wood Cellulose | Fruit Cellulose | Ditto above | Ditto above | Ditto above | Ditto above | Ditto above | Ditto above | Ditto above |
| Wood Cellulose | Recycled Paper | Ditto above | Ditto above | Ditto above | Ditto above | Ditto above | Ditto above | Ditto above |

| **Table 25.** | | | | | | | | |
|---|---|---|---|---|---|---|---|---|
| **High-density material/end products (1.0 - 1.5 grams/cubic centimetre) using a fibre binding system enhanced by Bio or Synthetic plastics.** | | | | | | | | |
| **Principle fibre: NATURAL WOOD** | | | | | | | | |
| **Principle micro-fibre & Max. 80% weight of product volume** | **Reinforcement fibre & 1-20% weight of product volume** | **Finished product density** | **Finished product thickness** | **Surface finish** | **Filler % weight of product volume** | **Colour % weight of product volume.** | **Mordent % weight of product volume (as per colour fixing requirement)** | **Plastic material content** |
| Natural Wood | Longfibre Cellulose | 1.0g/cm³ up to 1.5g/cm³ dependent on end use. | 1mm up to 20mm | Mould textured or Flat | Calcium carbonate, china clay, talc, 1 - 30% | Mineral or Synthetic 0.1 to 5% dependent on colour chosen. Plastic dyed in masterbatch when required | Aluminium Sulphate 0.1-1% of total weight. | Bio or Oil Based Plastic 1 - 49% weight of product volume |
| Natural Wood | Natural Longfibre Liqnocellulosics | Ditto above | Ditto above | Ditto above | Ditto above | Ditto above | Ditto above | Ditto above |
| Natural Wood | Cereal straws (wheat, oats, rye, barley, rice etc.) | Ditto above | Ditto above | Ditto above | Ditto above | Ditto above | Ditto above | Ditto above |
| Natural Wood | Grasses (bamboo, bagasse, kahi, miscanthus etc.) | Ditto above | Ditto above | Ditto above | Ditto above | Ditto above | Ditto above | Ditto above |
| Natural Wood | Natural Reed | Ditto above | Ditto above | Ditto above | Ditto above | Ditto above | Ditto above | Ditto above |
| Natural Wood | Wood Cellulose | Ditto above | Ditto above | Ditto above | Ditto above | Ditto above | Ditto above | Ditto above |
| Natural Wood | Natural Wood | Ditto above | Ditto above | Ditto above | Ditto above | Ditto above | Ditto above | Ditto above |
| Natural Wood | Fruit Cellulose | Ditto above | Ditto above | Ditto above | Ditto above | Ditto above | Ditto above | Ditto above |
| Natural Wood | Recycled Paper | Ditto above | Ditto above | Ditto above | Ditto above | Ditto above | Ditto above | Ditto above |

| **Table 26.** | | | | | | | | |
|---|---|---|---|---|---|---|---|---|
| **High-density material/end products (1.0 - 1.5 grams/cubic centimetre) usinga fibre binding system enhanced by Bio or Synthetic plastics.** | | | | | | | | |
| **Principle fibre: FRUIT CELLULOSE** | | | | | | | | |
| **Principle micro-fibre & Max. 80% weight of product volume** | **Reinforcement fibre & 1-20% weight of product volume** | **Finished product density** | **Finished product thickness** | **Surface finish** | **Filler % weight of product volume** | **Colour % weight of product volume.** | **Mordent % weight of product volume (as per colour fixing requirement)** | **Plastic material content** |
| Fruit Cellulose | Longfibre Cellulose | 1.0g/cm³ up to 1.5g/cm³ dependent on end use. | 1mm up to 20mm | Mould textured or Flat | Calcium carbonate, china clay, talc, 1 - 30% | Mineral or Synthetic 0.1 to 5% dependent on colour chosen. Plastic dyed in masterbatch when required | Aluminium Sulphate 0.1-1% of total weight. | Bio or Oil Based Plastic 1 - 49% weight of total product volume |
| Fruit Cellulose | Natural Longfibre Lignocellulosics | Ditto above | Ditto above | Ditto above | Ditto above | Ditto above | Ditto above | Ditto above |
| Fruit Cellulose | Cereal straws (wheat, oats, rye, barley, rice etc.) | Ditto above | Ditto above | Ditto above | Ditto above | Ditto above | Ditto above | Ditto above |
| Fruit Cellulose | Grasses (bamboo, bagasse, kahi, miscanthus etc.) | Ditto above | Ditto above | Ditto above | Ditto above | Ditto above | Ditto above | Ditto above |
| Fruit Cellulose | Natural Reed | Ditto above | Ditto above | Ditto above | Ditto above | Ditto above | Ditto above | Ditto above |
| Fruit Cellulose | Wood Cellulose | Ditto above | Ditto above | Ditto above | Ditto above | Ditto above | Ditto above | Ditto above |
| Fruit Cellulose | Natural Wood | Ditto above | Ditto above | Ditto above | Ditto above | Ditto above | Ditto above | Ditto above |
| Fruit Cellulose | Fruit Cellulose | Ditto above | Ditto above | Ditto above | Ditto above | Ditto above | Ditto above | Ditto above |
| Fruit Cellulose | Recycled Paper | Ditto above | Ditto above | Ditto above | Ditto above | Ditto above | Ditto above | Ditto above |

| **Table 27.** | | | | | | | | |
|---|---|---|---|---|---|---|---|---|
| **High-density material/end products (1.0 - 1.5 grams/cubic centimetre) using a fibre binding system enhanced by Bio or Synthetic plastics.** | | | | | | | | |
| **Principle fibre: RECYCLED (WASTE) PAPER** | | | | | | | | |
| **Principle micro-fibre & Max. 80% weight of product volume** | **Reinforcement fibre & 1-20% weight of product volume** | **Finished product density** | **Finished product thickness** | **Surface finish** | **Filler % weight of product volume** | **Colour % weight of product volume.** | **Mordent % weight of product volume (as per colour fixing requirement)** | **Plastic material content** |
| Recycled Paper | Longfibre Cellulose | 1.0g/cm³ up to 1.5g/cm³ dependent on end use. | 1mm up to 20mm | Mould textured or Flat | Calcium carbonate, china clay, talc, 1 - 30% | Mineral or Synthetic 0.1 to 5% dependent on colour chosen. Plastic dyed in masterbatch when required | Aluminium Sulphate 0.1-1% of total weight. | Bio or Oil Based Plastic 1 - 49% weight of total product volume |
| Recycled Paper | Natural Longfibre Lignocellulosics | Ditto above | Ditto above | Ditto above | Ditto above | Ditto above | Ditto above | Ditto above |
| Recycled Paper | Cereal straws (wheat, oats, rye, barley, rice etc.) | Ditto above | Ditto above | Ditto above | Ditto above | Ditto above | Ditto above | Ditto above |
| Recycled Paper | Grasses (bamboo, bagasse, kahi, miscanthus etc.) | Ditto above | Ditto above | Ditto above | Ditto above | Ditto above | Ditto above | Ditto above |
| Recycled Paper Recycled Paper | Natural Reed | Ditto above | Ditto above | Ditto above | Ditto above | Ditto above | Ditto above | Ditto above |
| | Wood Cellulose | Ditto above | Ditto above | Ditto above | Ditto above | Ditto above | Ditto above | Ditto above |
| Recycled Paper Recycled Paper Recycled Paper | Natural Wood | Ditto above | Ditto above | Ditto above | Ditto above | Ditto above | Ditto above | Ditto above |
| | Fruit Cellulose | Ditto above | Ditto above | Ditto above | Ditto above | Ditto above | Ditto above | Ditto above |
| | Recycled Paper | Ditto above | Ditto above | Ditto above | Ditto above | Ditto above | Ditto above | Ditto above |

| **Table 28.** | | | | | | | | |
|---|---|---|---|---|---|---|---|---|
| **Medium-density material/end products (0.5 - 0.9 grams/cubic centimetre) using a fibre binding system enhanced by Bio or Synthetic plastics.** | | | | | | | | |
| **Principle fibre: CELLULOSE FROM LONGFIBRE LIGNOCELLULOSIC PLANT FEEDSTOCKS (e.g. Cotton/Hemp/Jute/Abaca/Flax/Kenaf/Rami/Sisal etc. see preamble)** | | | | | | | | |
| **Principle micro-fibre & Max. 80% weight of product volume** | **Reinforcement fibre & 1 -20% weight of product volume** | **Finished product density** | **Finished product thickness** | **surface finish** | **Filler % weight of product volume** | **Colour % weight of product volume.** | **Mordent % weight of product volume (as per colour fixing requirement)** | **Plastic material content** |
| Longfibre Cellulose | Longfibre Cellulose | 0.5g/cm³ up to 0.9g/cm³ dependent on end use. | 1mm up to 20mm | Mould textured or Flat | Calcium carbonate, china clay, talc, 1 - 30% | Mineral or Synthetic 0.1 to 5% dependent on colour chosen. Plastic dyed in masterbatch when required | Aluminium Sulphate 0.1-1% of total weight. | Bio or Oil Based Plastic 1 - 49% weight of product volume |
| Longfibre Cellulose | Natural Longfibre Lignocellulosics | Ditto above | Ditto above | Ditto above | Ditto above | Ditto above | Ditto above | Ditto above |
| Longfibre Cellulose | Cereal straws (wheat, oats, rye, barley, rice etc.) | Ditto above | Ditto above | Ditto above | Ditto above | Ditto above | Ditto above | Ditto above |
| Longfibre Cellulose | Grasses (bamboo, bagasse, kahi, miscanthus etc.) | Ditto above | Ditto above | Ditto above | Ditto above | Ditto above | Ditto above | Ditto above |
| Longfibre Cellulose | Natural Reed | Ditto above | Ditto above | Ditto above | Ditto above | Ditto above | Ditto above | Ditto above |
| Longfibre Cellulose | Wood Cellulose | Ditto above | Ditto above | Ditto above | Ditto above | Ditto above | Ditto above | Ditto above |
| Longfibre Cellulose | Natural Wood | Ditto above | Ditto above | Ditto above | Ditto above | Ditto above | Ditto above | Ditto above |
| Longfibre Cellulose | Fruit Cellulose | Ditto above | Ditto above | Ditto above | Ditto above | Ditto above | Ditto above | Ditto above |
| Longfibre Cellulose | Recycled Paper | Ditto above | Ditto above | Ditto above | Ditto above | Ditto above | Ditto above | Ditto above |

| **Table 29.** | | | | | | | | |
|---|---|---|---|---|---|---|---|---|
| **Medium-density material/end products (0.5 - 0.9 grams/cubic centimetre) using a fibre binding system enhanced by Bio or Synthetic plastics.** | | | | | | | | |
| **Principle fibre: NATURAL LONGFIBRE LIGNOCELLULOSIC PLANT FEEDSTOCKS (e.g. Cotton/Hemp/Jute/Abaca/Flax/Kenaf/Rami/Sisal etc. see preamble)** | | | | | | | | |
| **Principle micro-fibre & Max. 80% weight of product volume** | **Reinforcement fibre & 1 -20% weight of product volume** | **Finished product density** | **Finished product thickness** | **Surface finish** | **Filler % weight of product volume** | **Colour % weight of product volume.** | **Mordent % weight of product volume (as per colour fixing requirement)** | **Plastic material content** |
| Natural Longfibre Lignocellulosics | Longfibre Cellulose | 0.5g/cm³ up to 0.9g/cm³ dependent on end use. | 1mm up to 20mm | Mould textured or Flat | Calcium carbonate, china clay, talc, 1 - 30% | Mineral or Synthetic 0.1 to 5% dependent on colour chosen. Plastic dyed in masterbatch when required | Aluminium Sulphate 0.1-1% of total weight. | Bio or Oil Based Plastic 1 - 49% weight of total product volume |
| Natural Longfibre Lignocellulosics | Natural Longfibre Lignocellulosics | Ditto above | Ditto above | Ditto above | Ditto above | Ditto above | Ditto above | Ditto above |
| Natural Longfibre Lignocellulosics | Cereal straws (wheat, oats, rye, barley, rice etc.) | Ditto above | Ditto above | Ditto above | Ditto above | Ditto above | Ditto above | Ditto above |
| Natural Longfibre Lignocellulosics | Grasses (bamboo, bagasse, kahi, miscanthus etc.) | Ditto above | Ditto above | Ditto above | Ditto above | Ditto above | Ditto above | Ditto above |
| Natural Longfibre Lignocellulosics | Natural Reed | Ditto above | Ditto above | Ditto above | Ditto above | Ditto above | Ditto above | Ditto above |
| Natural Longfibre Lignocellulosics | Wood Cellulose | Ditto above | Ditto above | Ditto above | Ditto above | Ditto above | Ditto above | Ditto above |
| Natural Longfibre Lignocellulosics | Natural Wood | Ditto above | Ditto above | Ditto above | Ditto above | Ditto above | Ditto above | Ditto above |
| Natural Longfibre Lignocellulosics | Fruit Cellulose | Ditto above | Ditto above | Ditto above | Ditto above | Ditto above | Ditto above | Ditto above |
| Natural Longfibre Lignocellulosics | Recycled Paper | Ditto above | Ditto above | Ditto above | Ditto above | Ditto above | Ditto above | Ditto above |

| **Table 30.** | | | | | | | | |
|---|---|---|---|---|---|---|---|---|
| **Medium-density material/end products (0.5 - 0.9 grams/cubic centimetre) using a fibre binding system enhanced by Bio or Synthetic plastics.** | | | | | | | | |
| **Principle fibre: CEREAL STRAWS (wheat, oats, rye, barley, rice etc.)** | | | | | | | | |
| **Principle micro-fibre & Max. 80% weight of product volume** | **Reinforcement fibre & 1 -20% weight of product volume** | **Finished product density** | **Finished product thickness** | **Surface finish** | **Filler % weight of product volume** | **Colour % weight of product volume.** | **Mordent % weight of product volume (as per colour fixing requirement)** | **Plastic material content** |
| Cereal straws | Longfibre Cellulose | 0.5g/cm³ up to 0.9g/cm³ dependent on end use. | 1mm up to 20mm | Mould textured or Flat | Calcium carbonate, china clay, talc, 1 - 30% | Mineral or Synthetic 0.1 to 5% dependent on colour chosen. Plastic dyed in masterbatch when required | Aluminium Sulphate 0.1-1% of total weight. | Bio or Oil Based Plastic 1 - 49% weight of total product volume |
| Cereal straws | Natural Longfibre Lignocellulosics | Ditto above | Ditto above | Ditto above | Ditto above | Ditto above | Ditto above | Ditto above |
| Cereal straws | Cereal straws (wheat, oats, rye, barley, rice etc.) | Ditto above | Ditto above | Ditto above | Ditto above | Ditto above | Ditto above | Ditto above |
| Cereal straws | Grasses (bamboo, bagasse, kahi, miscanthus etc.) | Ditto above | Ditto above | Ditto above | Ditto above | Ditto above | Ditto above | Ditto above |
| Cereal straws | Natural Reed | Ditto above | Ditto above | Ditto above | Ditto above | Ditto above | Ditto above | Ditto above |
| Cereal straws | Wood Cellulose | Ditto above | Ditto above | Ditto above | Ditto above | Ditto above | Ditto above | Ditto above |
| Cereal straws | Natural Wood | Ditto above | Ditto above | Ditto above | Ditto above | Ditto above | Ditto above | Ditto above |
| Cereal straws | Fruit Cellulose | Ditto above | Ditto above | Ditto above | Ditto above | Ditto above | Ditto above | Ditto above |
| Cereal straws | Recycled Paper | Ditto above | Ditto above | Ditto above | Ditto above | Ditto above | Ditto above | Ditto above |

| **Table 31.** | | | | | | | | |
|---|---|---|---|---|---|---|---|---|
| **Medium-density material/end products (0.5 - 0.9 grams/cubic centimetre) using a fibre binding system enhanced by Bio or Synthetic plastics.** | | | | | | | | |
| **Principle fibre: GRASSES (bamboo, bagasse, kahi, miscanthus etc.)** | | | | | | | | |
| **Principle micro-fibre & Max. 80% weight of product volume** | **Reinforcement fibre & 1 -20% weight of product volume** | **Finished product density** | **Finished product thickness** | **Surface finish** | **Filler % weight of product volume** | **Colour % weight of product volume.** | **Mordent % weight of product volume (as per colour fixing requirement)** | **Plastic material content** |
| Grasses | Longfibre Cellulose | 0.5g/cm³ up to 0.9g/cm³ dependent on end use. | 1mm up to 20mm | Mould textured or Flat | Calcium carbonate, china clay, talc, 1 - 30% | Mineral or Synthetic 0.1 to 5% dependent on colour chosen. Plastic dyed in masterbatch when required | Aluminium Sulphate 0.1-1% of total weight. | Bio or Oil Based Plastic 1 - 49% weight of total product volume |
| Grasses | Natural Longfibre Lignocellulosics | Ditto above | Ditto above | Ditto above | Ditto above | Ditto above | Ditto above | Ditto above |
| Grasses | Cereal straws (wheat, oats, rye, barley, rice etc.) | Ditto above | Ditto above | Ditto above | Ditto above | Ditto above | Ditto above | Ditto above |
| Grasses | Grasses (bamboo, bagasse, kahi, miscanthus etc.) | Ditto above | Ditto above | Ditto above | Ditto above | Ditto above | Ditto above | Ditto above |
| Grasses | Natural Reed | Ditto above | Ditto above | Ditto above | Ditto above | Ditto above | Ditto above | Ditto above |
| Grasses | Wood Cellulose | Ditto above | Ditto above | Ditto above | Ditto above | Ditto above | Ditto above | Ditto above |
| Grasses | Natural Wood | Ditto above | Ditto above | Ditto above | Ditto above | Ditto above | Ditto above | Ditto above |
| Grasses | Fruit Cellulose | Ditto above | Ditto above | Ditto above | Ditto above | Ditto above | Ditto above | Ditto above |
| Grasses | Recycled Paper | Ditto above | Ditto above | Ditto above | Ditto above | Ditto above | Ditto above | Ditto above |

| **Table 32.** | | | | | | | | |
|---|---|---|---|---|---|---|---|---|
| **Medium-density material/end products (0.5 - 0.9 grams/cubic centimetre) using a fibre binding system enhanced by Bio or Synthetic plastics.** | | | | | | | | |
| **Principle fibre: NATURAL REED** | | | | | | | | |
| **Principle micro-fibre & Max. 80% weight of product volume** | **Reinforcement fibre & 1 -20% weight of product volume** | **Finished product density** | **Finished product thickness** | **Surface finish** | **Filler % weight of product volume** | **Colour % weight of product volume.** | **Mordent % weight of product volume (as per colour fixing requirement)** | **Plastic material content** |
| Natural Reed | Longfibre Cellulose | 0.5g/cm³ up to 0.9g/cm³ dependent on end use. | 1mm up to 20mm | Mould textured or Flat | Calcium carbonate, china clay, talc, 1 - 30% | Mineral or Synthetic 0.1 to 5% dependent on colour chosen. Plastic dyed in masterbatch when required | Aluminium Sulphate 0.1-1% of total weight. | Bio or Oil Based Plastic 1 - 49% weight of total product volume |
| Natural Reed | Natural Longfibre Lignocellulosics | Ditto above | Ditto above | Ditto above | Ditto above | Ditto above | Ditto above | Ditto above |
| Natural Reed | Cereal straws (wheat, oats, rye, barley, rice etc.) | Ditto above | Ditto above | Ditto above | Ditto above | Ditto above | Ditto above | Ditto above |
| Natural Reed | Grasses (bamboo, bagasse, kahi, miscanthus etc.) | Ditto above | Ditto above | Ditto above | Ditto above | Ditto above | Ditto above | Ditto above |
| Natural Reed | Natural Reed | Ditto above | Ditto above | Ditto above | Ditto above | Ditto above | Ditto above | Ditto above |
| Natural Reed | Wood Cellulose | Ditto above | Ditto above | Ditto above | Ditto above | Ditto above | Ditto above | Ditto above |
| Natural Reed | Natural Wood | Ditto above | Ditto above | Ditto above | Ditto above | Ditto above | Ditto above | Ditto above |
| Natural Reed | Fruit Cellulose | Ditto above | Ditto above | Ditto above | Ditto above | Ditto above | Ditto above | Ditto above |
| Natural Reed | Recycled Paper | Ditto above | Ditto above | Ditto above | Ditto above | Ditto above | Ditto above | Ditto above |

| **Table 33.** | | | | | | | | |
|---|---|---|---|---|---|---|---|---|
| **Medium-density material/end products (0.5 - 0.9 grams/cubic centimetre) using a fibre binding system enhanced by Bio or Synthetic plastics.** | | | | | | | | |
| **Principle fibre: WOOD CELLULOSE** | | | | | | | | |
| **Principle micro-fibre & Max. 80% weight of product volume** | **Reinforcement fibre & 1 -20% weight of product volume** | **Finished product density** | **Finished product thickness** | **Surface finish** | **Filler % weight of product volume** | **Colour % weight of product volume.** | **Mordent % weight of product volume (as per colour fixing requirement)** | **Plastic material content** |
| Wood Cellulose | Longfibre Cellulose | 0.5g/cm³ up to 0.9g/cm³ dependent on end use. | 1mm up to 20mm | Mould textured or Flat | Calcium carbonate, china clay, talc, 1 - 30% | Mineral or Synthetic 0.1 to 5% dependent on colour chosen. Plastic dyed in masterbatch when required | Aluminium Sulphate 0.1-1% of total weight. | Bio or Oil Based Plastic 1-49% weight of product volume |
| Wood Cellulose | Natural Longfibre Lignocellulosics | Ditto above | Ditto above | Ditto above | Ditto above | Ditto above | Ditto above | Ditto above |
| Wood Cellulose | Cereal straws (wheat, oats, rye, barley, rice etc.) | Ditto above | Ditto above | Ditto above | Ditto above | Ditto above | Ditto above | Ditto above |
| Wood Cellulose | Grasses (bamboo, bagasse, kahi, miscanthus etc.) | Ditto above | Ditto above | Ditto above | Ditto above | Ditto above | Ditto above | Ditto above |
| Wood Cellulose | Natural Reed | Ditto above | Ditto above | Ditto above | Ditto above | Ditto above | Ditto above | Ditto above |
| Wood Cellulose | Wood Cellulose | Ditto above | Ditto above | Ditto above | Ditto above | Ditto above | Ditto above | Ditto above |
| Wood Cellulose | Natural Wood | Ditto above | Ditto above | Ditto above | Ditto above | Ditto above | Ditto above | Ditto above |
| Wood Cellulose | Fruit Cellulose | Ditto above | Ditto above | Ditto above | Ditto above | Ditto above | Ditto above | Ditto above |
| Wood Cellulose | Recycled Paper | Ditto above | Ditto above | Ditto above | Ditto above | Ditto above | Ditto above | Ditto above |

| **Table 34.** | | | | | | | | |
|---|---|---|---|---|---|---|---|---|
| **Medium-density material/end products (0.5 - 0.9 grams/cubic centimetre) using a fibre binding system enhanced by Bio or Synthetic plastics.** | | | | | | | | |
| **Principle fibre: NATURAL WOOD** | | | | | | | | |
| **Principle micro-fibre & Max. 80% weight of product volume** | **Reinforcement fibre & 1 -20% weight of product volume** | **Finished product density** | **Finished product thickness** | **Surface finish** | **Filler % weight of product volume** | **Colour % weight of product volume.** | **Mordent % weight of product volume (as per colour fixing requirement)** | **Plastic material content** |
| Natural Wood | Longfibre Cellulose | 0.5g/cm³ up to 0.9g/cm³ dependent on end use. | 1mm up to 20mm | Mould textured or Flat | Calcium carbonate, china clay, talc, 1 - 30% | Mineral or Synthetic 0.1 to 5% dependent on colour chosen. Plastic dyed in masterbatch when required | Aluminium Sulphate 0.1-1% of total weight. | Bio or Oil Based Plastic 1 - 49% weight of product volume |
| Natural Wood | Natural Longfibre Lignocellulosics | Ditto above | Ditto above | Ditto above | Ditto above | Ditto above | Ditto above | Ditto above |
| Natural Wood | Cereal straws (wheat, oats, rye, barley, rice etc.) | Ditto above | Ditto above | Ditto above | Ditto above | Ditto above | Ditto above | Ditto above |
| Natural Wood | Grasses (bamboo, bagasse, kahi, miscanthus etc.) | Ditto above | Ditto above | Ditto above | Ditto above | Ditto above | Ditto above | Ditto above |
| Natural Wood | Natural Reed | Ditto above | Ditto above | Ditto above | Ditto above | Ditto above | Ditto above | Ditto above |
| Natural Wood | Wood Cellulose | Ditto above | Ditto above | Ditto above | Ditto above | Ditto above | Ditto above | Ditto above |
| Natural Wood | Natural Wood | Ditto above | Ditto above | Ditto above | Ditto above | Ditto above | Ditto above | Ditto above |
| Natural Wood | Fruit Cellulose | Ditto above | Ditto above | Ditto above | Ditto above | Ditto above | Ditto above | Ditto above |
| Natural Wood | Recycled Paper | Ditto above | Ditto above | Ditto above | Ditto above | Ditto above | Ditto above | Ditto above |

| **Table 35.** | | | | | | | | |
|---|---|---|---|---|---|---|---|---|
| **Medium-density material/end products (0.5 - 0.9 grams/cubic centimetre) using a fibre binding system enhanced by Bio or Synthetic plastics.** | | | | | | | | |
| **Principle fibre: FRUIT CELLULOSE** | | | | | | | | |
| **Principle micro-fibre & Max. 80% weight of product volume** | **Reinforcement fibre & 1 -20% weight of product volume** | **Finished product density** | **Finished product thickness** | **Surface finish** | **Filler % weight of product volume** | **Colour % weight of product volume.** | **Mordent % weight of product volume (as per colour fixing requirement)** | **Plastic material content** |
| Fruit Cellulose | Longfibre Cellulose | 0.5g/cm³ up to 0.9g/cm³ dependent on end use. | 1mm up to 20mm | Mould textured or Flat | Calcium carbonate, china clay, talc, 1 - 30% | Mineral or Synthetic 0.1 to 5% dependent on colour chosen. Plastic dyed in masterbatch when required | Aluminium Sulphate 0.1-1% of total weight. | Bio or Oil Based Plastic 1 - 49% weight of total product volume |
| Fruit Cellulose | Natural Longfibre Lignocellulosics | Ditto above | Ditto above | Ditto above | Ditto above | Ditto above | Ditto above | Ditto above |
| Fruit Cellulose | Cereal straws (wheat, oats, rye, barley, rice etc.) | Ditto above | Ditto above | Ditto above | Ditto above | Ditto above | Ditto above | Ditto above |
| Fruit Cellulose | Grasses (bamboo, bagasse, kahi, miscanthus etc.) | Ditto above | Ditto above | Ditto above | Ditto above | Ditto above | Ditto above | Ditto above |
| Fruit Cellulose | Natural Reed | Ditto above | Ditto above | Ditto above | Ditto above | Ditto above | Ditto above | Ditto above |
| Fruit Cellulose | Wood Cellulose | Ditto above | Ditto above | Ditto above | Ditto above | Ditto above | Ditto above | Ditto above |
| Fruit Cellulose | Natural Wood | Ditto above | Ditto above | Ditto above | Ditto above | Ditto above | Ditto above | Ditto above |
| Fruit Cellulose | Fruit Cellulose | Ditto above | Ditto above | Ditto above | Ditto above | Ditto above | Ditto above | Ditto above |
| Fruit Cellulose | Recycled Paper | Ditto above | Ditto above | Ditto above | Ditto above | Ditto above | Ditto above | Ditto above |

| **Table 36.** | | | | | | | | |
|---|---|---|---|---|---|---|---|---|
| **Medium-density material/end products (0.5 - 0.9 grams/cubic centimetre) using a fibre binding system enhanced by Bio or Synthetic plastics.** | | | | | | | | |
| **Principle fibre: RECYCLED (WASTE) PAPER** | | | | | | | | |
| **Principle micro-fibre & Max. 80% weight of product volume** | **Reinforcement fibre & 1 -20% weight of product volume** | **Finished product density** | **Finished product thickness** | **Surface finish** | **Filler % weight of product volume** | **Colour % weight of product volume.** | **Mordent % weight of product volume (as per colour fixing requirement)** | **Plastic material content** |
| Recycled Paper | Longfibre Cellulose | 0.5g/cm³ up to 0.9g/cm³ dependent on end use. | 1mm up to 25mm | Mould textured or Flat | Calcium carbonate, china clay, talc, 1 - 30% | Mineral or Synthetic 0.1 to 5% dependent on colour chosen. Plastic dyed in masterbatch when required | Aluminium Sulphate 0.1-1% of total weight. | Bio or Oil Based Plastic 1 - 49% weight of total product volume |
| Recycled Paper | Natural Longfibre Lignocellulosics | Ditto above | Ditto above | Ditto above | Ditto above | Ditto above | Ditto above | Ditto above |
| Recycled Paper | Cereal straws (wheat, oats, rye, barley, rice etc.) | Ditto above | Ditto above | Ditto above | Ditto above | Ditto above | Ditto above | Ditto above |
| Recycled Paper | Grasses (bamboo, bagasse, kahi, miscanthus etc.) | Ditto above | Ditto above | Ditto above | Ditto above | Ditto above | Ditto above | Ditto above |
| Recycled Paper | Natural Reed | Ditto above | Ditto above | Ditto above | Ditto above | Ditto above | Ditto above | Ditto above |
| Recycled Paper | Wood Cellulose | Ditto above | Ditto above | Ditto above | Ditto above | Ditto above | Ditto above | Ditto above |
| Recycled Paper | Natural Wood | Ditto above | Ditto above | Ditto above | Ditto above | Ditto above | Ditto above | Ditto above |
| Recycled Paper | Fruit Cellulose | Ditto above | Ditto above | Ditto above | Ditto above | Ditto above | Ditto above | Ditto above |
| Recycled Paper | Recycled Paper | Ditto above | Ditto above | Ditto above | Ditto above | Ditto above | Ditto above | Ditto above |

| **Table 37.** | | | | | | | | |
|---|---|---|---|---|---|---|---|---|
| **Bio or Synthetic plastics products using fibre** | | | | | | | | |
| **Principle fibre: CELLULOSE FROM LONGFIBRE LIGNOCELLULOSIC PLANT FEEDSTOCKS (e.g. Cotton/Hemp/Jute/Abaca/Flax/Kenaf/Rami/Sisal etc. see preamble)** | | | | | | | | |
| **Principle micro-fibre & 1-49% weight of product volume** | **Reinforcement fibre & 1-49% weight of product volume** | **Finished product density** | **Finished product thickness** | **Surface finish** | **Filler % weight of product volume** | **Colour % weight of product volume.** | **Mordent % weight of product volume (as per colour fixing requirement)** | **Plastic material content** |
| Longfibre Cellulose | Longfibre Cellulose | See Plastics Densities Appendix attached. | 1mm up to 25mm | Mould textured or Flat | Calcium carbonate, china clay, talc, 1 - 30% | Mineral or Synthetic 0.1 to 5% dependent on colour chosen. Plastic dyed in masterbatch when required | Aluminium Sulphate 0.1-1% of total weight. | 50 - 95% weight of total product volume |
| Longfibre Cellulose | Natural Longfibre Lignocellulosics | Ditto above | Ditto above | Ditto above | Ditto above | Ditto above | Ditto above | Ditto above |
| Longfibre Cellulose | Cereal straws (wheat, oats, rye, barley, rice etc.) | Ditto above | Ditto above | Ditto above | Ditto above | Ditto above | Ditto above | Ditto above |
| Longfibre Cellulose | Grasses (bamboo, bagasse, kahi, miscanthus etc.) | Ditto above | Ditto above | Ditto above | Ditto above | Ditto above | Ditto above | Ditto above |
| Longfibre Cellulose | Natural Reed | Ditto above | Ditto above | Ditto above | Ditto above | Ditto above | Ditto above | Ditto above |
| Longfibre Cellulose | Wood Cellulose | Ditto above | Ditto above | Ditto above | Ditto above | Ditto above | Ditto above | Ditto above |
| Longfibre Cellulose | Natural Wood | Ditto above | Ditto above | Ditto above | Ditto above | Ditto above | Ditto above | Ditto above |
| Longfibre Cellulose | Fruit Cellulose | Ditto above | Ditto above | Ditto above | Ditto above | Ditto above | Ditto above | Ditto above |
| Longfibre Cellulose | Recycled Paper | Ditto above | Ditto above | Ditto above | Ditto above | Ditto above | Ditto above | Ditto above |

| **Table 38.** | | | | | | | | |
|---|---|---|---|---|---|---|---|---|
| **Bio or Synthetic plastics products using fibre** | | | | | | | | |
| **Principle fibre: NATURAL LONGFIBRE LIGNOCELLULOSIC PLANT FEEDSTOCKS (e.g. Cotton/Hemp/Jute/Abaca/Flax/Kenaf/Rami/Sisal etc. see preamble)** | | | | | | | | |
| **Principle micro-fibre & 1-49% weight of product volume** | **Reinforcement fibre & 1-49% weight of product volume** | **Finished product density** | **Finished product thickness** | **Surface finish** | **Filler % weight of product volume** | **Colour % weight of product volume.** | **Mordent % weight of product volume (as per colour fixing requirement)** | **Plastic material content** |
| Natural Longfibre Lignocellulosics | Longfibre Cellulose | See Plastics Densities Appendix attached. | 1mm up to 25mm | Mould textured or Flat | Calcium carbonate, china clay, talc, 1 - 30% | Mineral or Synthetic 0.1 to 5% dependent on colour chosen. Plastic dyed in masterbatch when required | Aluminium Sulphate 0.1-1% of total weight. | 50 - 95% weight of total product volume |
| Natural Longfibre Lignocellulosics | Natural Longfibre Lignocellulosics | Ditto above | Ditto above | Ditto above | Ditto above | Ditto above | Ditto above | Ditto above |
| Natural Longfibre Lignocellulosics | Cereal straws (wheat, oats, rye, barley, rice etc.) | Ditto above | Ditto above | Ditto above | Ditto above | Ditto above | Ditto above | Ditto above |
| Natural Longfibre Lignocellulosics | Grasses (bamboo, bagasse, kahi, miscanthus etc.) | Ditto above | Ditto above | Ditto above | Ditto above | Ditto above | Ditto above | Ditto above |
| Natural Longfibre Lignocellulosics | Natural Reed | Ditto above | Ditto above | Ditto above | Ditto above | Ditto above | Ditto above | Ditto above |
| Natural Longfibre Lignocellulosics | Wood Cellulose | Ditto above | Ditto above | Ditto above | Ditto above | Ditto above | Ditto above | Ditto above |
| Natural Longfibre Lignocellulosics | Natural Wood | Ditto above | Ditto above | Ditto above | Ditto above | Ditto above | Ditto above | Ditto above |
| Natural Longfibre Lignocellulosics | Fruit Cellulose | Ditto above | Ditto above | Ditto above | Ditto above | Ditto above | Ditto above | Ditto above |
| Natural Longfibre Lignocellulosics | Recycled Paper | Ditto above | Ditto above | Ditto above | Ditto above | Ditto above | Ditto above | Ditto above |

| **Table 39.** | | | | | | | | |
|---|---|---|---|---|---|---|---|---|
| **Bio or Synthetic plastics products using fibre** | | | | | | | | |
| **Principle fibre: Cereal straws (wheat, oats, rye, barley, rice etc.)** | | | | | | | | |
| **Principle micro-fibre & 1-49% weight of product volume** | **Reinforcement fibre & 1-49% weight of product volume** | **Finished product density** | **Finished product thickness** | **Surface finish** | **Filler % weight of product volume** | **Colour % weight of product volume.** | **Mordent % weight of product volume (as per colour fixing requirement)** | **Plastic material content** |
| Cereal Straws | Longfibre Cellulose | See Plastics Densities Appendix attached. | 1mm up to 25mm | Mould textured or Flat | Calcium carbonate, china clay, talc, 1 - 30% | Mineral or Synthetic 0.1 to 5% dependent on colour chosen. Plastic dyed in masterbatch when required | Aluminium Sulphate 0.1-1% of total weight. | 50 - 95% weight of total product volume |
| Cereal Straws | Natural Longfibre Lignocellulosics | Ditto above | Ditto above | Ditto above | Ditto above | Ditto above | Ditto above | Ditto above |
| Cereal Straws | Cereal straws (wheat, oats, rye, barley, rice etc.) | Ditto above | Ditto above | Ditto above | Ditto above | Ditto above | Ditto above | Ditto above |
| Cereal Straws | Grasses (bamboo, bagasse, kahi, miscanthus etc.) | Ditto above | Ditto above | Ditto above | Ditto above | Ditto above | Ditto above | Ditto above |
| Cereal Straws | Natural Reed | Ditto above | Ditto above | Ditto above | Ditto above | Ditto above | Ditto above | Ditto above |
| Cereal Straws | Wood Cellulose | Ditto above | Ditto above | Ditto above | Ditto above | Ditto above | Ditto above | Ditto above |
| Cereal Straws | Natural Wood | Ditto above | Ditto above | Ditto above | Ditto above | Ditto above | Ditto above | Ditto above |
| Cereal Straws | Fruit Cellulose | Ditto above | Ditto above | Ditto above | Ditto above | Ditto above | Ditto above | Ditto above |
| Cereal Straws | Recycled Paper | Ditto above | Ditto above | Ditto above | Ditto above | Ditto above | Ditto above | Ditto above |

| **Table 40.** | | | | | | | | |
|---|---|---|---|---|---|---|---|---|
| **Bio or Synthetic plastics products using fibre** | | | | | | | | |
| **Principle fibre: Grasses (bamboo, bagasse, kahi, miscanthus etc.)** | | | | | | | | |
| **Principle micro-fibre & 1-49% weight of product volume** | **Reinforcement fibre & 1-49% weight of product volume** | **Finished product density** | **Finished product thickness** | **Surface finish** | **Filler % weight of product volume** | **Colour % weight of product volume.** | **Mordent % weight of product volume (as per colour fixing requirement)** | **Plastic material content** |
| Grasses | Longfibre Cellulose | See Plastics Densities Appendix attached. | 1mm up to 25mm | Mould textured or Flat | Calcium carbonate, china clay, talc, 1 - 30% | Mineral or Synthetic 0.1 to 5% dependent on colour chosen. Plastic dyed in masterbatch when required | Aluminium Sulphate 0.1-1% of total weight. | 50 - 95% weight of total product volume |
| Grasses | Natural Longfibre Lignocellulosics | Ditto above | Ditto above | Ditto above | Ditto above | Ditto above | Ditto above | Ditto above |
| Grasses | Cereal straws (wheat, oats, rye, barley, rice etc.) | Ditto above | Ditto above | Ditto above | Ditto above | Ditto above | Ditto above | Ditto above |
| Grasses | Grasses (bamboo, bagasse, kahi, miscanthus etc.) | Ditto above | Ditto above | Ditto above | Ditto above | Ditto above | Ditto above | Ditto above |
| Grasses | Natural Reed | Ditto above | Ditto above | Ditto above | Ditto above | Ditto above | Ditto above | Ditto above |
| Grasses | Wood Cellulose | Ditto above | Ditto above | Ditto above | Ditto above | Ditto above | Ditto above | Ditto above |
| Grasses | Natural Wood | Ditto above | Ditto above | Ditto above | Ditto above | Ditto above | Ditto above | Ditto above |
| Grasses | Fruit Cellulose | Ditto above | Ditto above | Ditto above | Ditto above | Ditto above | Ditto above | Ditto above |
| Grasses | Recycled Paper | Ditto above | Ditto above | Ditto above | Ditto above | Ditto above | Ditto above | Ditto above |

| **Table 41.** | | | | | | | | |
|---|---|---|---|---|---|---|---|---|
| **Bio or Synthetic plastics products using fibre** | | | | | | | | |
| **Principle fibre: NATURAL REED** | | | | | | | | |
| **Principle micro-fibre & 1-49% weight of product volume** | **Reinforcement fibre & 1-49% weight of product volume** | **Finished product density** | **Finished product thickness** | **Surface finish** | **Filler % weight of product volume** | **Colour % weight of product volume.** | **Mordent % weight of product volume (as per colour fixing requirement)** | **Plastic material content** |
| Natural Reed | Longfibre Cellulose | See Plastics Densities Appendix attached. | 1mm up to 25mm | Mould textured or Flat | Calcium carbonate, china clay, talc, 1 - 30% | Mineral or Synthetic 0.1 to 5% dependent on colour chosen. Plastic dyed in masterbatch when required | Aluminium Sulphate 0.1-1% of total weight. | 50 - 95% weight of total product volume |
| Natural Reed | Natural Longfibre Lignocellulosics | Ditto above | Ditto above | Ditto above | Ditto above | Ditto above | Ditto above | Ditto above |
| Natural Reed | Cereal straws (wheat, oats, rye, barley, rice etc.) | Ditto above | Ditto above | Ditto above | Ditto above | Ditto above | Ditto above | Ditto above |
| Natural Reed | Grasses (bamboo, bagasse, kahi, miscanthus etc.) | Ditto above | Ditto above | Ditto above | Ditto above | Ditto above | Ditto above | Ditto above |
| Natural Reed | Natural Reed | Ditto above | Ditto above | Ditto above | Ditto above | Ditto above | Ditto above | Ditto above |
| Natural Reed | Wood Cellulose | Ditto above | Ditto above | Ditto above | Ditto above | Ditto above | Ditto above | Ditto above |
| Natural Reed | Natural Wood | Ditto above | Ditto above | Ditto above | Ditto above | Ditto above | Ditto above | Ditto above |
| Natural Reed | Fruit Cellulose | Ditto above | Ditto above | Ditto above | Ditto above | Ditto above | Ditto above | Ditto above |
| Natural Reed | Recycled Paper | Ditto above | Ditto above | Ditto above | Ditto above | Ditto above | Ditto above | Ditto above |

| **Table 42.** | | | | | | | | |
|---|---|---|---|---|---|---|---|---|
| **Bio or Synthetic plastics products using fibre** | | | | | | | | |
| **Principle fibre: WOOD CELLULOSE** | | | | | | | | |
| **Principle micro-fibre & 1-49% weight of product volume** | **Reinforcement fibre & 1-49% weight of product volume** | **Finished product density** | **Finished product thickness** | **Surface finish** | **Filler % weight of product volume** | **Colour % weight of product volume.** | **Mordent % weight of product volume (as per colour fixing requirement)** | **Plastic material content** |
| Wood Cellulose | Longfibre Cellulose | See Plastics Densities Appendix attached. | 1mm up to 25mm | Mould textured or Flat | Calcium carbonate, china clay, talc, 1 - 30% | Mineral or Synthetic 0.1 to 5% dependent on colour chosen. Plastic dyed in masterbatch when required | Aluminium Sulphate 0.1-1% of total weight. | 50 - 95% weight of total product volume |
| Wood Cellulose | Natural Longfibre Lignocellulosics | Ditto above | Ditto above | Ditto above | Ditto above | Ditto above | Ditto above | Ditto above |
| Wood Cellulose | Cereal straws (wheat, oats, rye, barley, rice etc.) | Ditto above | Ditto above | Ditto above | Ditto above | Ditto above | Ditto above | Ditto above |
| Wood Cellulose | Grasses (bamboo, bagasse, kahi, miscanthus etc.) | Ditto above | Ditto above | Ditto above | Ditto above | Ditto above | Ditto above | Ditto above |
| Wood Cellulose | Natural Reed | Ditto above | Ditto above | Ditto above | Ditto above | Ditto above | Ditto above | Ditto above |
| Wood Cellulose | Wood Cellulose | Ditto above | Ditto above | Ditto above | Ditto above | Ditto above | Ditto above | Ditto above |
| Wood Cellulose | Natural Wood | Ditto above | Ditto above | Ditto above | Ditto above | Ditto above | Ditto above | Ditto above |
| Wood Cellulose | Fruit Cellulose | Ditto above | Ditto above | Ditto above | Ditto above | Ditto above | Ditto above | Ditto above |
| Wood Cellulose | Recycled Paper | Ditto above | Ditto above | Ditto above | Ditto above | Ditto above | Ditto above | Ditto above |

| **Table 43.** | | | | | | | | |
|---|---|---|---|---|---|---|---|---|
| **Bio or Synthetic plastics products using fibre** | | | | | | | | |
| **Principle fibre: NATURAL WOOD** | | | | | | | | |
| **Principle micro-fibre & 1-49% weight of product volume** | **Reinforcement fibre & 1-49% weight of product volume** | **Finished product density** | **Finished product thickness** | **Surface finish** | **Filler % weight of product volume** | **Colour % weight of product volume.** | **Mordent % weight of product volume (as per colour fixing requirement)** | **Plastic material content** |
| Natural Wood | Longfibre Cellulose | See Plastics Densities Appendix attached. | 1mm up to 25mm | Mould textured or Flat | Calcium carbonate, china clay, talc, 1 - 30% | Mineral or Synthetic 0.1 to 5% dependent on colour chosen. Plastic dyed in masterbatch when required | Aluminium Sulphate 0.1-1% of total weight. | 50 - 95% weight of total product volume |
| Natural Wood | Natural Longfibre Lignocellulosics | Ditto above | Ditto above | Ditto above | Ditto above | Ditto above | Ditto above | Ditto above |
| Natural Wood | Cereal straws (wheat, oats, rye, barley, rice etc.) | Ditto above | Ditto above | Ditto above | Ditto above | Ditto above | Ditto above | Ditto above |
| Natural Wood | Grasses (bamboo, bagasse, kahi, miscanthus etc.) | Ditto above | Ditto above | Ditto above | Ditto above | Ditto above | Ditto above | Ditto above |
| Natural Wood | Natural Reed | Ditto above | Ditto above | Ditto above | Ditto above | Ditto above | Ditto above | Ditto above |
| Natural Wood | Wood Cellulose | Ditto above | Ditto above | Ditto above | Ditto above | Ditto above | Ditto above | Ditto above |
| Natural Wood | Natural Wood | Ditto above | Ditto above | Ditto above | Ditto above | Ditto above | Ditto above | Ditto above |
| Natural Wood | Fruit Cellulose | Ditto above | Ditto above | Ditto above | Ditto above | Ditto above | Ditto above | Ditto above |
| Natural Wood | Recycled Paper | Ditto above | Ditto above | Ditto above | Ditto above | Ditto above | Ditto above | Ditto above |

| **Table 44.** | | | | | | | | |
|---|---|---|---|---|---|---|---|---|
| **Bio or Synthetic plastics products using fibre** | | | | | | | | |
| **Principle fibre: FRUIT CELLULOSE** | | | | | | | | |
| **Principle micro-fibre & 1-49% weight of product volume** | **Reinforcement fibre & 1-49% weight of product volume** | **Finished product density** | **Finished product thickness** | **Surface finish** | **Filler % weight of product volume** | **Colour % weight of product volume.** | **Mordent % weight of product volume (as per colour fixing requirement)** | **Plastic material content** |
| Fruit Cellulose | Longfibre Cellulose | See Plastics Densities Appendix attached. | 1mm up to 25mm | Mould textured or Flat | Calcium carbonate, china clay, talc, 1-30% | Mineral or Synthetic 0.1 to 5% dependent on colour chosen. Plastic dyed in masterbatch when required | 1 Aluminium Sulphate 0.1-1% of total weight. | 50 - 95% weight of total product volume |
| Fruit Cellulose | Natural Longfibre Lignocellulosics | Ditto above | Ditto above | Ditto above | Ditto above | Ditto above | Ditto above | Ditto above |
| Fruit Cellulose | Cereal straws (wheat, oats, rye, barley, rice etc.) | Ditto above | Ditto above | Ditto above | Ditto above | Ditto above | Ditto above | Ditto above |
| Fruit Cellulose | Grasses (bamboo, bagasse, kahi, miscanthus etc.) | Ditto above | Ditto above | Ditto above | Ditto above | Ditto above | Ditto above | Ditto above |
| Fruit Cellulose | Natural Reed | Ditto above | Ditto above | Ditto above | Ditto above | Ditto above | Ditto above | Ditto above |
| Fruit Cellulose | Wood Cellulose | Ditto above | Ditto above | Ditto above | Ditto above | Ditto above | Ditto above | Ditto above |
| Fruit Cellulose | Natural Wood | Ditto above | Ditto above | Ditto above | Ditto above | Ditto above | Ditto above | Ditto above |
| Fruit Cellulose | Fruit Cellulose | Ditto above | Ditto above | Ditto above | Ditto above | Ditto above | Ditto above | Ditto above |
| Fruit Cellulose | Recycled Paper | Ditto above | Ditto above | Ditto above | Ditto above | Ditto above | Ditto above | Ditto above |

| **Table 45.** | | | | | | | | |
|---|---|---|---|---|---|---|---|---|
| **Bio or Synthetic plastics products using fibre** | | | | | | | | |
| **Principle fibre: RECYCLED (WASTE) PAPER** | | | | | | | | |
| **Principle micro-fibre & 1-49% weight of product volume** | **Reinforcement fibre & 1-49% weight of product volume** | **Finished product density** | **Finished product thickness** | **Surface finish** | **Filler % weight of product volume** | **Colour % weight of product volume.** | **Mordent % weight of product volume (as per colour fixing requirement)** | **Plastic material content** |
| Recycled Paper | Longfibre Cellulose | See Plastics Densities Appendix attached. | 1mm up to 25mm | Mould textured or Flat | Calcium carbonate, china clay, talc, 1-30% | Mineral or Synthetic 0.1 to 5% dependent on colour chosen. Plastic dyed in masterbatch when required | Aluminium Sulphate 0.1-1% of total weight. | 50 - 95% weight of total product volume |
| Recycled Paper | Natural Longfibre Lignocellulosics | Ditto above | Ditto above | Ditto above | Ditto above | Ditto above | Ditto above | Ditto above |
| Recycled Paper | Cereal straws (wheat, oats, rye, barley, rice etc.) | Ditto above | Ditto above | Ditto above | Ditto above | Ditto above | Ditto above | Ditto above |
| Recycled Paper | Grasses (bamboo, bagasse, kahi, miscanthus etc.) | Ditto above | Ditto above | Ditto above | Ditto above | Ditto above | Ditto above | Ditto above |
| Recycled Paper | Natural Reed | Ditto above | Ditto above | Ditto above | Ditto above | Ditto above | Ditto above | Ditto above |
| Recycled Paper | Wood Cellulose | Ditto above | Ditto above | Ditto above | Ditto above | Ditto above | Ditto above | Ditto above |
| Recycled Paper | Natural Wood | Ditto above | Ditto above | Ditto above | Ditto above | Ditto above | Ditto above | Ditto above |
| Recycled Paper | Fruit Cellulose | Ditto above | Ditto above | Ditto above | Ditto above | Ditto above | Ditto above | Ditto above |
| Recycled Paper | Recycled Paper | Ditto above | Ditto above | Ditto above | Ditto above | Ditto above | Ditto above | Ditto above |

| **Table 46.** | | | | | | | | | |
|---|---|---|---|---|---|---|---|---|---|
| **Paper based products, for example: Standard Writings, Printings, Magazine Papers and Coating Bases reinforced with fibre** | | | | | | | | | |
| **Principle fibre: CELLULOSE FROM LONGFIBRE LIGNOCELLULOSIC PLANT FEEDSTOCKS (e.g. Cotton/Hemp/Jute/Abaca/Flax/Kenaf/Rami/Sisal etc. see preamble)** | | | | | | | | | |
| **Principle furnish & Max 95% weight of product volume** | **Zelfo for wet web strength and/or absorption 1-20% from: -** | **Grammage** | **Finished product thickness** | **Surface finish** | **Filler % weight of product volume** | **Colour % weight of product volume.** | **Mordent % weight of product volume (as per colour fixing requirement)** | **Standard Wood based paper making pulp % weight of product volume** | **Optical Brighteners % weight of product volume** |
| Longfibre Cellulose | Longfibre Cellulose | 40g/m² up to 120g/m² dependent on end use. | Depending upon finish | Calendared to customer finish | Calcium carbonate, china clay, talc, 1-30% | Mineral or Synthetic, 0.1 to 5% dependent on colour chosen | Aluminium Sulphate 0.1-1% of total weight. | New or recycled Pulp Max 95% | 1-5% |
| Longfibre Cellulose | Natural Longfibre Lignocellulosics | Ditto above | Ditto above | Ditto above | Ditto above | Ditto above | Ditto above | Ditto above | Ditto above |
| Longfibre Cellulose | Cereal straws (wheat, oats, rye, barley, rice etc.) | Ditto above | Ditto above | Ditto above | Ditto above | Ditto above | Ditto above | Ditto above | Ditto above |
| Longfibre Cellulose | Grasses (bamboo, bagasse, kahi, miscanthus etc.) | Ditto above | Ditto above | Ditto above | Ditto above | Ditto above | Ditto above | Ditto above | Ditto above |
| Longfibre Cellulose | Natural Reed | Ditto above | Ditto above | Ditto above | Ditto above | Ditto above | Ditto above | Ditto above | Ditto above |
| Longfibre Cellulose | Wood Cellulose | Ditto above | Ditto above | Ditto above | Ditto above | Ditto above | Ditto above | Ditto above | Ditto above |
| Longfibre Cellulose | Natural Wood | Ditto above | Ditto above | Ditto above | Ditto above | Ditto above | Ditto above | Ditto above | Ditto above |
| Longfibre Cellulose | Fruit Cellulose | Ditto above | Ditto above | Ditto above | Ditto above | Ditto above | Ditto above | Ditto above | Ditto above |
| Longfibre Cellulose | Recycled Paper | Ditto above | Ditto above | Ditto above | Ditto above | Ditto above | Ditto above | Ditto above | Ditto above |

| **Table 47.** | | | | | | | | | |
|---|---|---|---|---|---|---|---|---|---|
| **Paper based products, for example: Standard Writings, Printings, Magazine Papers and Coating Bases reinforced with fibre** | | | | | | | | | |
| **Principle fibre: NATURAL LONGFIBRE LIGNOCELLULOSIC PLANT FEEDSTOCKS (e.g. Cotton/Hemp/Jute/Abaca/Flax/Kenaf/Rami/Sisal etc. see preamble)** | | | | | | | | | |
| **Principle furnish & Max 95% weight of product volume** | **Zelfo for wet web strength and/or absorption 1-20% from:-** | **Grammage** | **Finished product thickness** | **Surface finish** | **Filler % weight of product volume** | **Colour % weight of product volume.** | **Mordent % weight of product volume (as per colour fixing requirement)** | **Standard Wood based paper making pulp % weight of product volume** | **Optical Brighteners % weight of product volume** |
| Natural Longfibre Lignocellulosics | Longfibre Cellulose | 40g/m² up to 120g/m² dependent on end use. | Depending upon finish | Calendared to customer finish | Calcium carbonate, china clay, talc, 1-30% | Mineral or Synthetic, 0.1 to 5% dependent on colour chosen | Aluminium Sulphate 0.1-1 % of total weight. | New or recycled Pulp Max 95% | 1-5% |
| Natural Longfibre Liqnocellulosics | Natural Longfibre Lignocellulosics | Ditto above | Ditto above | Ditto above | Ditto above | Ditto above | Ditto above | Ditto above | Ditto above |
| Natural Longfibre Liqnocellulosics | Cereal straws (wheat, oats, rye, barley, rice etc.) | Ditto above | Ditto above | Ditto above | Ditto above | Ditto above | Ditto above | Ditto above | Ditto above |
| Natural Longfibre Lignocellulosics | Grasses (bamboo, bagasse, kahi, miscanthus etc.) | Ditto above | Ditto above | Ditto above | Ditto above | Ditto above | Ditto above | Ditto above | Ditto above |
| Natural Longfibre Lignocellulosics | Natural Reed | Ditto above | Ditto above | Ditto above | Ditto above | Ditto above | Ditto above | Ditto above | Ditto above |
| Natural Longfibre Lignocellulosics | Wood Cellulose | Ditto above | Ditto above | Ditto above | Ditto above | Ditto above | Ditto above | Ditto above | Ditto above |
| Natural Longfibre Lignocellulosics | Natural Wood | Ditto above | Ditto above | Ditto above | Ditto above | Ditto above | Ditto above | Ditto above | Ditto above |
| Natural Longfibre Lignocellulosics | Fruit Cellulose | Ditto above | Ditto above | Ditto above | Ditto above | Ditto above | Ditto above | Ditto above | Ditto above |
| Natural Longfibre Lignocellulosics | Recycled Paper | Ditto above | Ditto above | Ditto above | Ditto above | Ditto above | Ditto above | Ditto above | Ditto above |

| **Table 48.** | | | | | | | | | |
|---|---|---|---|---|---|---|---|---|---|
| **Paper based products, for example: Standard Writings, Printings, Magazine Papers and Coating Bases reinforced with fibre** | | | | | | | | | |
| **Principle fibre: CEREAL STRAWS (wheat, oats, rye, barley, rice etc.)** | | | | | | | | | |
| **Principle furnish & Max 95% weight of product volume** | **Zelfo for wet web strength and/or absorption 1-20% from: -** | **Grammage** | **Finished product thickness** | **Surface finish** | **Filler % weight of product volume** | **Colour % weight of product volume.** | **Mordent % weight of product volume (as per colour fixing requirement)** | **Standard Wood based paper making pulp % weight of product volume** | **Optical Brighteners % weight of product volume** |
| Cereal straws | Longfibre Cellulose | 40g/m² up to 120g/m² dependent on end use. | Depending upon finish | Calendared to customer finish | Calcium carbonate, china clay, talc, 1-30% | Mineral or Synthetic, 0.1 to 5% dependent on colour chosen | Aluminium Sulphate 0.1-1 % of total weight. | New or recycled Pulp Max 95% | 1-5% |
| Cereal straws | Natural Longfibre Lignocellulosics | Ditto above | Ditto above | Ditto above | Ditto above | Ditto above | Ditto above | Ditto above | Ditto above |
| Cereal straws | Cereal straws (wheat, oats, rye, barley, rice etc.) | Ditto above | Ditto above | Ditto above | Ditto above | Ditto above | Ditto above | Ditto above | Ditto above |
| Cereal straws | Grasses (bamboo, bagasse, kahi, miscanthus etc.) | Ditto above | Ditto above | Ditto above | Ditto above | Ditto above | Ditto above | Ditto above | Ditto above |
| Cereal straws | Natural Reed | Ditto above | Ditto above | Ditto above | Ditto above | Ditto above | Ditto above | Ditto above | Ditto above |
| Cereal straws | Wood Cellulose | Ditto above | Ditto above | Ditto above | Ditto above | Ditto above | Ditto above | Ditto above | Ditto above |
| Cereal straws | Natural Wood | Ditto above | Ditto above | Ditto above | Ditto above | Ditto above | Ditto above | Ditto above | Ditto above |
| Cereal straws | Fruit Cellulose | Ditto above | Ditto above | Ditto above | Ditto above | Ditto above | Ditto above | Ditto above | Ditto above |
| Cereal straws | Recycled Paper | Ditto above | Ditto above | Ditto above | Ditto above | Ditto above | Ditto above | Ditto above | Ditto above |

| **Table 49.** | | | | | | | | | |
|---|---|---|---|---|---|---|---|---|---|
| **Paper based products, for example: Standard Writings, Printings, Magazine Papers and Coating Bases reinforced with fibre** | | | | | | | | | |
| **Principle fibre: GRASSES (bamboo, bagasse, kahi, miscanthus etc.)** | | | | | | | | | |
| **Principle furnish & Max 95% weight of product volume** | **Zelfo for wet web strength and/or absorption 1-20% from: -** | **Grammage** | **Finished product thickness** | **Surface finish** | **Filler % weight of product volume** | **Colour % weight of product volume.** | **Mordent % weight of product volume (as per colour fixing requirement)** | **Standard Wood based paper making pulp % weight of product volume** | **Optical Brighteners % weight of product volume** |
| Grasses | Longfibre Cellulose | sup to 120g/m² dependent on end use. | Depending upon finish | Calendared to customer finish | Calcium carbonate, china clay, talc, 1-30% | Mineral or Synthetic, 0.1 to 5% dependent on colour chosen | Aluminium Sulphate 0.1-1% of total weight. | New or recycled Pulp Max 95% | 1-5% |
| Grasses | Natural Longfibre Lignocellulosics | Ditto above | Ditto above | Ditto above | Ditto above | Ditto above | Ditto above | Ditto above | Ditto above |
| Grasses | Cereal straws (wheat, oats, rye, barley, rice etc.) | Ditto above | Ditto above | Ditto above | Ditto above | Ditto above | Ditto above | Ditto above | Ditto above |
| Grasses | Grasses (bamboo, bagasse, kahi, miscanthus etc.) | Ditto above | Ditto above | Ditto above | Ditto above | Ditto above | Ditto above | Ditto above | Ditto above |
| Grasses | Natural Reed | Ditto above | Ditto above | Ditto above | Ditto above | Ditto above | Ditto above | Ditto above | Ditto above |
| Grasses | Wood Cellulose | Ditto above | Ditto above | Ditto above | Ditto above | Ditto above | Ditto above | Ditto above | Ditto above |
| Grasses | Natural Wood | Ditto above | Ditto above | Ditto above | Ditto above | Ditto above | Ditto above | Ditto above | Ditto above |
| Grasses | Fruit Cellulose | Ditto above | Ditto above | Ditto above | Ditto above | Ditto above | Ditto above | Ditto above | Ditto above |
| Grasses | Recycled Paper | Ditto above | Ditto above | Ditto above | Ditto above | Ditto above | Ditto above | Ditto above | Ditto above |

| **Table 50** | | | | | | | | | |
|---|---|---|---|---|---|---|---|---|---|
| **Paper based products, for example: Standard Writings, Printings, Magazine Papers and Coating Bases reinforced with fibre** | | | | | | | | | |
| **Principle fibre: NATURAL REED** | | | | | | | | | |
| **Principle furnish & Max 95% weight of product volume** | **Zelfo for wet web strength and/or absorption 1-20% from: -** | **Grammage** | **Finished product thickness** | **Surface finish** | **Filler % weight of product volume** | **Colour % weight of product volume.** | **Mordent % weight of product volume (as per colour fixing requirement)** | **Standard Wood based paper making pulp % weight of product volume** | **Optical Brighteners % weight of product volume** |
| Natural Reed | Longfibre Cellulose | 40g/m² up to 120g/m² dependent on end use. | Depending upon finish | Calendared to customer finish | Calcium carbonate, china clay, talc, 1-30% | Mineral or Synthetic, 0.1 to 5% dependent on colour chosen | Aluminium Sulphate 0.1-1% of total weight. | New or recycled Pulp Max 95% | 1-5% |
| Natural Reed | Natural Longfibre Lignocellulosics | Ditto above | Ditto above | Ditto above | Ditto above | Ditto above | Ditto above | Ditto above | Ditto above |
| Natural Reed | Cereal straws (wheat, oats, rye, barley, rice etc.) | Ditto above | Ditto above | Ditto above | Ditto above | Ditto above | Ditto above | Ditto above | Ditto above |
| Natural Reed | Grasses (bamboo, bagasse, kahi, miscanthus etc.) | Ditto above | Ditto above | Ditto above | Ditto above | Ditto above | Ditto above | Ditto above | Ditto above |
| Natural Reed | Natural Reed | Ditto above | Ditto above | Ditto above | Ditto above | Ditto above | Ditto above | Ditto above | Ditto above |
| Natural Reed | Wood Cellulose | Ditto above | Ditto above | Ditto above | Ditto above | Ditto above | Ditto above | Ditto above | Ditto above |
| Natural Reed | Natural Wood | Ditto above | Ditto above | Ditto above | Ditto above | Ditto above | Ditto above | Ditto above | Ditto above |
| Natural Reed | Fruit Cellulose | Ditto above | Ditto above | Ditto above | Ditto above | Ditto above | Ditto above | Ditto above | Ditto above |
| Natural Reed | Recycled Paper | Ditto above | Ditto above | Ditto above | Ditto above | Ditto above | Ditto above | Ditto above | Ditto above |

| **Table 51.** | | | | | | | | | |
|---|---|---|---|---|---|---|---|---|---|
| **Paper based products, for example: Standard Writings, Printings, Magazine Papers and Coating Bases reinforced with fibre** | | | | | | | | | |
| **Principle fibre: WOOD CELLULOSE** | | | | | | | | | |
| **Principle furnish & Max 95% weight of product volume** | **Zelfo for wet web strength and/or absorption 1-20% from: -** | **Grammage** | **Finished product thickness** | **Surface finish** | **Filler % weight of product volume** | **Colour % weight of product volume.** | **Mordent % weight of product volume (as per colour fixing requirement)** | **Standard Wood based paper making pulp % weight of product volume** | **Optical Brighteners % weight of product volume** |
| Wood Cellulose | Longfibre Cellulose | 40g/m² up to 120g/m² dependent on end use. | Depending upon finish | Calendared to customer finish | Calcium carbonate, china clay, talc, 1 - 30% | Mineral or Synthetic, 0.1 to 5% dependent on colour chosen | Aluminium Sulphate 0.1-1 % of total weight. | New or recycled Pulp Max 95% | 1-5% |
| Wood Cellulose | Natural Longfibre Lignocellulosics | Ditto above | Ditto above | Ditto above | Ditto above | Ditto above | Ditto above | Ditto above | Ditto above |
| Wood Cellulose | Cereal straws (wheat, oats, rye, barley, rice etc.) | Ditto above | Ditto above | Ditto above | Ditto above | Ditto above | Ditto above | Ditto above | Ditto above |
| Wood Cellulose | Grasses (bamboo, bagasse, kahi, miscanthus etc.) | Ditto above | Ditto above | Ditto above | Ditto above | Ditto above | Ditto above | Ditto above | Ditto above |
| Wood Cellulose | Natural Reed | Ditto above | Ditto above | Ditto above | Ditto above | Ditto above | Ditto above | Ditto above | Ditto above |
| Wood Cellulose | Wood Cellulose | Ditto above | Ditto above | Ditto above | Ditto above | Ditto above | Ditto above | Ditto above | Ditto above |
| Wood Cellulose | Natural Wood | Ditto above | Ditto above | Ditto above | Ditto above | Ditto above | Ditto above | Ditto above | Ditto above |
| Wood Cellulose | Fruit Cellulose | Ditto above | Ditto above | Ditto above | Ditto above | Ditto above | Ditto above | Ditto above | Ditto above |
| Wood Cellulose | Recycled Paper | Ditto above | Ditto above | Ditto above | Ditto above | Ditto above | Ditto above | Ditto above | Ditto above |

| **Table 52** | | | | | | | | | |
|---|---|---|---|---|---|---|---|---|---|
| **Paper based products, for example: Standard Writings, Printings, Magazine Papers and Coating Bases reinforced with fibre** | | | | | | | | | |
| **Principle fibre: NATURAL WOOD** | | | | | | | | | |
| **Principle furnish & Max 95% weight of product volume** | **Zelfo for wet web strength and/or absorption 1-20% from: -** | **Grammage** | **Finished product thickness** | **Surface finish** | **Filler % weight of product volume** | **Colour % weight of product volume.** | **Mordent % weight of product volume (as per colour fixing requirement)** | **Standard Wood based paper making pulp % weight of product volume** | **Optical Brighteners % weight of product volume** |
| Natural Wood | Longfibre Cellulose | 40g/m² up to 120g/m² dependent on end use. | Depending upon finish | Calendared to customer finish | Calcium carbonate, china clay, talc, 1 - 30% | Mineral or Synthetic, 0.1 to 5% dependent on colour chosen | Aluminium Sulphate 0.1-1% of total weight. | New or recycled Pulp Max 95% | 1-5% |
| Natural Wood | Natural Longfibre Lignocellulosics | Ditto above | Ditto above | Ditto above | Ditto above | Ditto above | Ditto above | Ditto above | Ditto above |
| Natural Wood | Cereal straws (wheat, oats, rye, barley, rice etc.) | Ditto above | Ditto above | Ditto above | Ditto above | Ditto above | Ditto above | Ditto above | Ditto above |
| Natural Wood | Grasses (bamboo, bagasse, kahi, miscanthus etc.) | Ditto above | Ditto above | Ditto above | Ditto above | Ditto above | Ditto above | Ditto above | Ditto above |
| Natural Wood | Natural Reed | Ditto above | Ditto above | Ditto above | Ditto above | Ditto above | Ditto above | Ditto above | Ditto above |
| Natural Wood | Wood Cellulose | Ditto above | Ditto above | Ditto above | Ditto above | Ditto above | Ditto above | Ditto above | Ditto above |
| Natural Wood | Natural Wood | Ditto above | Ditto above | Ditto above | Ditto above | Ditto above | Ditto above | Ditto above | Ditto above |
| Natural Wood | Fruit Cellulose | Ditto above | Ditto above | Ditto above | Ditto above | Ditto above | Ditto above | Ditto above | Ditto above |
| Natural Wood | Recycled Paper | Ditto above | Ditto above | Ditto above | Ditto above | Ditto above | Ditto above | Ditto above | Ditto above |

| **Table 53.** | | | | | | | | | |
|---|---|---|---|---|---|---|---|---|---|
| **Paper based products, for example: Standard Writings, Printings, Magazine Papers and Coating Bases reinforced** | | | | | | | | | |
| **Principle fibre: FRUIT CELLULOSE** | | | | | | | | | |
| **Principle furnish & Max 95% weight of product volume** | **Zelfo for wet web strength and/or absorption 1-20% from:-** | **Grammage** | **Finished product thickness** | **Surface finish** | **Filler % weight of product volume** | **Colour % weight of product volume.** | **Mordent % weight of product volume (as per colour fixing requirement)** | **Standard Wood based paper making pulp % weight of product volume** | **Optical Brighteners % weight of product volume** |
| Fruit Cellulose | Longfibre Cellulose | 40g/m² up to 120g/m² dependent on end use. | Depending upon finish | Calendared to customer finish | Calcium carbonate, china clay, talc, 1-30% | Mineral or Synthetic, 0.1 to 5% dependent on colour chosen | Aluminium Sulphate 0.1-1% of total weight. | New or recycled Pulp Max 95% | 1-5% |
| Fruit Cellulose | Natural Longfibre Lignocellulosics | Ditto above | Ditto above | Ditto above | Ditto above | Ditto above | Ditto above | Ditto above | Ditto above |
| Fruit Cellulose | Cereal straws (wheat, oats, rye, barley, rice etc.) | Ditto above | Ditto above | Ditto above | Ditto above | Ditto above | Ditto above | Ditto above | Ditto above |
| Fruit Cellulose | Grasses (bamboo, bagasse, kahi, miscanthus etc.) | Ditto above | Ditto above | Ditto above | Ditto above | Ditto above | Ditto above | Ditto above | Ditto above |
| Fruit Cellulose | Natural Reed | Ditto above | Ditto above | Ditto above | Ditto above | Ditto above | Ditto above | Ditto above | Ditto above |
| Fruit Cellulose | Wood Cellulose | Ditto above | Ditto above | Ditto above | Ditto above | Ditto above | Ditto above | Ditto above | Ditto above |
| Fruit Cellulose | Natural Wood | Ditto above | Ditto above | Ditto above | Ditto above | Ditto above | Ditto above | Ditto above | Ditto above |
| Fruit Cellulose | Fruit Cellulose | Ditto above | Ditto above | Ditto above | Ditto above | Ditto above | Ditto above | Ditto above | Ditto above |
| Fruit Cellulose | Recycled Paper | Ditto above | Ditto above | Ditto above | Ditto above | Ditto above | Ditto above | Ditto above | Ditto above |

| **Table 54.** | | | | | | | | | |
|---|---|---|---|---|---|---|---|---|---|
| **Paper based products, for example: Standard Writings, Printings, Magazine Papers and Coating Bases reinforced using fibre** | | | | | | | | | |
| **Principle fibre: RECYCLED (WASTE) PAPER** | | | | | | | | | |
| **Principle furnish & Max 95% weight of product volume** | **Zelfo for wet web strength and/or absorption 1-20% from:-** | **Grammage** | **Finished product thickness** | **Surface finish** | **Filler % weight of product volume** | **Colour % weight of product volume.** | **Mordent % weight of product volume (as per colour fixing requirement)** | **Standard Wood based paper making pulp % weight of product volume** | **Optical Brighteners % weight of product volume** |
| Recycled Paper | Longfibre Cellulose | 40g/m² up to 120g/m² dependent on end use. | Depending upon finish | Calendared to customer finish | Calcium carbonate, china clay, talc, 1-30% | Mineral or Synthetic, 0.1 to 5% dependent on colour chosen | Aluminium Sulphate 0.1-1 % of total weight. | New or recycled Pulp Max 95% | 1-5% |
| Recycled Paper | Natural Longfibre Lignocellulosics | Ditto above | Ditto above | Ditto above | Ditto above | Ditto above | Ditto above | Ditto above | Ditto above |
| Recycled Paper | Cereal straws (wheat, oats, rye, barley, rice etc.) | Ditto above | Ditto above | Ditto above | Ditto above | Ditto above | Ditto above | Ditto above | Ditto above |
| Recycled Paper | Grasses (bamboo, bagasse, kahi, miscanthus etc.) | Ditto above | Ditto above | Ditto above | Ditto above | Ditto above | Ditto above | Ditto above | Ditto above |
| Recycled Paper | Natural Reed | Ditto above | Ditto above | Ditto above | Ditto above | Ditto above | Ditto above | Ditto above | Ditto above |
| Recycled Paper | Wood Cellulose | Ditto above | Ditto above | Ditto above | Ditto above | Ditto above | Ditto above | Ditto above | Ditto above |
| Recycled Paper | Natural Wood | Ditto above | Ditto above | Ditto above | Ditto above | Ditto above | Ditto above | Ditto above | Ditto above |
| Recycled Paper | Fruit Cellulose | Ditto above | Ditto above | Ditto above | Ditto above | Ditto above | Ditto above | Ditto above | Ditto above |
| Recycled Paper | Recycled Paper | Ditto above | Ditto above | Ditto above | Ditto above | Ditto above | Ditto above | Ditto above | Ditto above |

| **Table 55.** | | | | | | | | | |
|---|---|---|---|---|---|---|---|---|---|
| **Standard Tissue Paper Zelfo as reinforcement/absorbent fibre) Matrix describing Standard paper tissue/absorbent based products, technically enhanced and reinforced using fibre** | | | | | | | | | |
| **Principle fibre: WOODPULP AND WASTEPAPER** | | | | | | | | | |
| **Principle furnish & Max 95% weight of product volume** | **Zelfo for wet web strength and/or absorption 1-20% from:-** | **Grammage** | **Finished product thickness** | **Surface finish** | **Filler % weight of product volume** | **Colour % weight of product volume.** | **Mordent % weight of product volume (as per colour fixing requirement)** | **Wet Strength Agent % weight of product volume** | **Optical Brighteners % weight of product volume** |
| Woodpulp + waste paper | Longfibre Cellulose | 12g/m² up to 45g/m² single ply tissue - 3 ply towelling. | Depending on finish, creping and number of plies | Textured/ Pressed to customer finish | Calcium carbonate, china clay, talc, 1-10% | Mineral or Synthetic, 0.1 to 5% dependent on colour chosen | Aluminium Sulphate 0.1-1% of total weight. | New or recycled Pulp Max 0.5-2.0% | 1-5% |
| Woodpulp + waste paper | Natural Longfibre Lignocellulosics | Ditto above | Ditto above | Ditto above | Ditto above | Ditto above | Ditto above | Ditto above | Ditto above |
| Woodpulp + waste paper | Cereal straws (wheat, oats, rye, barley, rice etc.) | Ditto above | Ditto above | Ditto above | Ditto above | Ditto above | Ditto above | Ditto above | Ditto above |
| Wood pulp + waste paper | Grasses (bamboo, bagasse, kahi, miscanthus etc.) | Ditto above | Ditto above | Ditto above | Ditto above | Ditto above | Ditto above | Ditto above | Ditto above |
| Woodpulp + waste paper | Natural Reed | Ditto above | Ditto above | Ditto above | Ditto above | Ditto above | Ditto above | Ditto above | Ditto above |
| Woodpulp + waste paper | Wood Cellulose | Ditto above | Ditto above | Ditto above | Ditto above | Ditto above | Ditto above | Ditto above | Ditto above |
| Woodpulp + waste paper | Natural Wood | Ditto above | Ditto above | Ditto above | Ditto above | Ditto above | Ditto above | Ditto above | Ditto above |
| Woodpulp + waste paper | Fruit Cellulose | Ditto above | Ditto above | Ditto above | Ditto above | Ditto above | Ditto above | Ditto above | Ditto above |
| Wood pulp + waste paper | Recycled Paper | Ditto above | Ditto above | Ditto above | Ditto above | Ditto above | Ditto above | Ditto above | Ditto above |

| **Table 56.** | | | | | | | | | |
|---|---|---|---|---|---|---|---|---|---|
| **Matrix for Paper based products, for example: Mounting card reinforced using fibre** | | | | | | | | | |
| **Principle fibre: CELLULOSE FROM LONGFIBRE LIGNOCELLULOSIC PLANT FEEDSTOCKS (e.g. Cotton/Hemp/Jute/Abaca/Flax/Kenaf/Rami/Sisal etc. see preamble)** | | | | | | | | | |
| **Principle micro-fibre Max. 50% weight of product volume** | **Reinforcement fibre & 1 - 20% weight of product volume** | **Grammage** | **Finished product thickness** | **Surface finish** | **Filler % weight of product volume** | **Colour % weight of product volume.** | **Mordent % weight of product volume (as per colour fixing requirement)** | **Standard Wood based paper making pulp % weight of product volume** | **Optical Brighteners % weight of product volume** |
| Longfibre Cellulose | Longfibre Cellulose | 200g/m² up to 450g/m² dependent on end use. | Depending on finish | Textured/ Pressed to customer finish | Calcium carbonate, china clay, talc, 1-30% | Mineral or Synthetic, 0.1 to 5% dependent on colour chosen | Aluminium Sulphate 0.1-1% of total weight. | New or recycled Pulp Max 95% | 1-5% |
| Longfibre Cellulose | Natural Longfibre Lignocellulosics | Ditto above | Ditto above | Ditto above | Ditto above | Ditto above | Ditto above | Ditto above | Ditto above |
| Longfibre Cellulose | Cereal straws (wheat, oats, rye, barley, rice etc.) | Ditto above | Ditto above | Ditto above | Ditto above | Ditto above | Ditto above | Ditto above | Ditto above |
| Longfibre Cellulose | Grasses (bamboo, bagasse, kahi, miscanthus etc.) | Ditto above | Ditto above | Ditto above | Ditto above | Ditto above | Ditto above | Ditto above | Ditto above |
| Longfibre Cellulose | Natural Reed | Ditto above | Ditto above | Ditto above | Ditto above | Ditto above | Ditto above | Ditto above | Ditto above |
| Longfibre Cellulose | Wood Cellulose | Ditto above | Ditto above | Ditto above | Ditto above | Ditto above | Ditto above | Ditto above | Ditto above |
| Longfibre Cellulose | Natural Wood | Ditto above | Ditto above | Ditto above | Ditto above | Ditto above | Ditto above | Ditto above | Ditto above |
| Longfibre Cellulose | Fruit Cellulose | Ditto above | Ditto above | Ditto above | Ditto above | Ditto above | Ditto above | Ditto above | Ditto above |
| Longfibre Cellulose | Recycled Paper | Ditto above | Ditto above | Ditto above | Ditto above | Ditto above | Ditto above | Ditto above | Ditto above |

| **Table 57.** | | | | | | | | | |
|---|---|---|---|---|---|---|---|---|---|
| **Matrix for Paper based products, for example: Mounting card reinforced using fibre** | | | | | | | | | |
| **Principle fibre: NATURAL LONGFIBRE LIGNOCELLULOSIC PLANT FEEDSTOCKS (e.g. Cotton/Hemp/Jute/Abaca/Flax/Kenaf/Rami/Sisal etc. see preamble)** | | | | | | | | | |
| **Principle micro-fibre & Max. 50% weight of product volume** | **Reinforcement fibre & 1 - 20% weight of product volume** | **Grammage** | **Finished product thickness** | **Surface finish** | **Filler % weight of product volume** | **Colour % weight of product volume.** | **Mordent % weight of product volume (as per colour fixing requirement)** | **Standard Wood based paper making pulp % weight of product volume** | **Optical Brighteners % weight of product volume** |
| Natural Longfibre Lignocellulosics | Longfibre Cellulose | 200g/m² up to 450g/m² dependent on end use. | Depending on finish | Textured/ Pressed to customer finish | Calcium carbonate, china clay, talc, 1-30% | Mineral or Synthetic, 0.1 to 5% dependent on colour chosen | Aluminium Sulphate 0.1-1% of total weight. | New or recycled Pulp Max 95% | 1-5% |
| Natural Longfibre Lignocellulosics | Natural Longfibre Lignocellulosics | Ditto above | Ditto above | Ditto above | Ditto above | Ditto above | Ditto above | Ditto above | Ditto above |
| Natural Longfibre Lignocellulosics | Cereal straws (wheat, oats, rye, barley, rice etc.) | Ditto above | Ditto above | Ditto above | Ditto above | Ditto above | Ditto above | Ditto above | Ditto above |
| Natural Longfibre Lignocellulosics | Grasses (bamboo, bagasse, kahi, miscanthus etc.) | Ditto above | Ditto above | Ditto above | Ditto above | Ditto above | Ditto above | Ditto above | Ditto above |
| Natural Longfibre Lignocellulosics | Natural Reed | Ditto above | Ditto above | Ditto above | Ditto above | Ditto above | Ditto above | Ditto above | Ditto above |
| Natural Longfibre Lignocellulosics | Wood Cellulose | Ditto above | Ditto above | Ditto above | Ditto above | Ditto above | Ditto above | Ditto above | Ditto above |
| Natural Longfibre Lignocellulosics | Natural Wood | Ditto above | Ditto above | Ditto above | Ditto above | Ditto above | Ditto above | Ditto above | Ditto above |
| Natural Longfibre Lignocellulosics | Fruit Cellulose | Ditto above | Ditto above | Ditto above | Ditto above | Ditto above | Ditto above | Ditto above | Ditto above |
| Natural Longfibre Lignocellulosics | Recycled Paper | Ditto above | Ditto above | Ditto above | Ditto above | Ditto above | Ditto above | Ditto above | Ditto above |

| **Table 58.** | | | | | | | | | |
|---|---|---|---|---|---|---|---|---|---|
| **Paper based products, for example: Mounting card reinforced using fibre** | | | | | | | | | |
| **Principle fibre: CEREAL STRAWS (wheat, oats, rye, barley, rice etc.)** | | | | | | | | | |
| **Principle micro-fibre & Max. 50% weight of product volume** | **Reinforcement fibre & 1 - 20% weight of product volume** | **Grammage** | **Finished product thickness** | **Surface finish** | **Filler % weight of product volume** | **Colour % weight of product volume.** | **Mordent % weight of product volume (as per colour fixing requirement)** | **Standard Wood based paper making pulp % weight of product volume** | **Optical Brighteners % weight of product volume** |
| Cereal straws | Longfibre Cellulose | 200g/m² up to 450g/m² dependent on end use. | Depending on finish | Textured/ Pressed to customer finish | Calcium carbonate, china clay, talc, 1-30% | Mineral or Synthetic, 0.1 to 5% dependent on colour chosen | Aluminium Sulphate 0.1-1% of total weight. | New or recycled Pulp Max 95% | 1-5% |
| Cereal straws | Natural Longfibre Lignocellulosics | Ditto above | Ditto above | Ditto above | Ditto above | Ditto above | Ditto above | Ditto above | Ditto above |
| Cereal straws | Cereal straws (wheat, oats, rye, barley, rice etc.) | Ditto above | Ditto above | Ditto above | Ditto above | Ditto above | Ditto above | Ditto above | Ditto above |
| Cereal straws | Grasses (bamboo, bagasse, kahi, miscanthus etc.) | Ditto above | Ditto above | Ditto above | Ditto above | Ditto above | Ditto above | Ditto above | Ditto above |
| Cereal straws | Natural Reed | Ditto above | Ditto above | Ditto above | Ditto above | Ditto above | Ditto above | Ditto above | Ditto above |
| Cereal straws | Wood Cellulose | Ditto above | Ditto above | Ditto above | Ditto above | Ditto above | Ditto above | Ditto above | Ditto above |
| Cereal straws | Natural Wood | Ditto above | Ditto above | Ditto above | Ditto above | Ditto above | Ditto above | Ditto above | Ditto above |
| Cereal straws | Fruit Cellulose | Ditto above | Ditto above | Ditto above | Ditto above | Ditto above | Ditto above | Ditto above | Ditto above |
| Cereal straws | Recycled Paper | Ditto above | Ditto above | Ditto above | Ditto above | Ditto above | Ditto above | Ditto above | Ditto above |

| **Table 59.** | | | | | | | | | |
|---|---|---|---|---|---|---|---|---|---|
| **Paper based products, for example: Mounting card reinforced using fibre** | | | | | | | | | |
| **Principle fibre: GRASSES (bamboo, bagasse, kahi, miscanthus etc.)** | | | | | | | | | |
| **Principle micro-fibre & Max. 50% weight of product volume** | **Reinforcement fibre & 1 - 20% weight of product volume** | **Grammage** | **Finished product thickness** | **Surface finish** | **Filler % weight of product volume** | **Colour % weight of product volume.** | **Mordent % weight of product volume (as per colour fixing requirement)** | **Standard Wood based paper making pulp % weight of product volume** | **Optical Brighteners % weight of product volume** |
| Grasses | Longfibre Cellulose | 200g/m² up to 450g/m² dependent on end use. | Depending on finish | Textured/ Pressed to customer finish | Calcium carbonate, china clay, talc, 1-30% | Mineral or Synthetic, 0.1 to 5% dependent on colour chosen | Aluminium Sulphate 0.1-1% of total weight. | New or recycled Pulp Max 95% | 1-5% |
| Grasses | Natural Longfibre Lignocellulosics | Ditto above | Ditto above | Ditto above | Ditto above | Ditto above | Ditto above | Ditto above | Ditto above |
| Grasses | Cereal straws (wheat, oats, rye, barley, rice etc.) | Ditto above | Ditto above | Ditto above | Ditto above | Ditto above | Ditto above | Ditto above | Ditto above |
| Grasses | Grasses (bamboo, bagasse, kahi, miscanthus etc.) | Ditto above | Ditto above | Ditto above | Ditto above | Ditto above | Ditto above | Ditto above | Ditto above |
| Grasses | Natural Reed | Ditto above | Ditto above | Ditto above | Ditto above | Ditto above | Ditto above | Ditto above | Ditto above |
| Grasses | Wood Cellulose | Ditto above | Ditto above | Ditto above | Ditto above | Ditto above | Ditto above | Ditto above | Ditto above |
| Grasses | Natural Wood | Ditto above | Ditto above | Ditto above | Ditto above | Ditto above | Ditto above | Ditto above | Ditto above |
| Grasses | Fruit Cellulose | Ditto above | Ditto above | Ditto above | Ditto above | Ditto above | Ditto above | Ditto above | Ditto above |
| Grasses | Recycled Paper | Ditto above | Ditto above | Ditto above | Ditto above | Ditto above | Ditto above | Ditto above | Ditto above |

| **Table 60.** | | | | | | | | | |
|---|---|---|---|---|---|---|---|---|---|
| **Matrix for Paper based products, for example: Mounting card reinforced using fibre** | | | | | | | | | |
| **Principle fibre: NATURAL REED** | | | | | | | | | |
| **Principle micro-fibre & Max. 50% weight of product volume** | **Reinforcement fibre & 1 - 20% weight of product volume** | **Grammage** | **Finished product thickness** | **Surface finish** | **Filler % weight of product volume** | **Colour % weight of product volume.** | **Mordent % weight of product volume (as per colour fixing requirement)** | **Standard Wood based paper making pulp % weight of product volume** | **Optical Brighteners % weight of product volume** |
| Natural Reed | Longfibre Cellulose | 200g/m² up to 450g/m² dependent on end use. | Depending on finish | Textured/ Pressed to customer finish | Calcium carbonate, china clay, talc, 1 - 30% | Synthetic, 0.1 to 5% dependent on colour chosen | Aluminium Sulphate 0.1-1 % of total weight. | New or recycled Pulp Max 95% | 1 - 5% |
| Natural Reed | Natural Longfibre Lignocellulosics | Ditto above | Ditto above | Ditto above | Ditto above | Ditto above | Ditto above | Ditto above | Ditto above |
| Natural Reed | Cereal straws (wheat, oats, rye, barley, rice etc.) | Ditto above | Ditto above | Ditto above | Ditto above | Ditto above | Ditto above | Ditto above | Ditto above |
| Natural Reed | Grasses (bamboo, bagasse, kahi, miscanthus etc.) | Ditto above | Ditto above | Ditto above | Ditto above | Ditto above | Ditto above | Ditto above | Ditto above |
| Natural Reed | Natural Reed | Ditto above | Ditto above | Ditto above | Ditto above | Ditto above | Ditto above | Ditto above | Ditto above |
| Natural Reed | Wood Cellulose | Ditto above | Ditto above | Ditto above | Ditto above | Ditto above | Ditto above | Ditto above | Ditto above |
| Natural Reed | Natural Wood | Ditto above | Ditto above | Ditto above | Ditto above | Ditto above | Ditto above | Ditto above | Ditto above |
| Natural Reed | Fruit Cellulose | Ditto above | Ditto above | Ditto above | Ditto above | Ditto above | Ditto above | Ditto above | Ditto above |
| Natural Reed | Recycled Paper | Ditto above | Ditto above | Ditto above | Ditto above | Ditto above | Ditto above | Ditto above | Ditto above |

| **Table 61.** | | | | | | | | | |
|---|---|---|---|---|---|---|---|---|---|
| **Matrix for Paper based products, for example: Mounting card reinforced using fibre** | | | | | | | | | |
| **Principle fibre: WOOD CELLULOSE** | | | | | | | | | |
| **Principle micro-fibre & Max. 50% weight of product volume** | **Reinforcement fibre & 1 - 20% weight of product volume** | **Grammage** | **Finished product thickness** | **Surface finish** | **Filler % weight of product volume** | **Colour % weight of product volume.** | **Mordent % weight of product volume (as per colour fixing requirement)** | **Standard Wood based paper making pulp % weight of product volume** | **Optical Brighteners % weight of product volume** |
| Wood Cellulose | Longfibre Cellulose | 200g/m² up to 450g/m² dependent on end use. | Depending on finish | Textured/ Pressed to customer finish | Calcium carbonate, china clay, talc, 1-30% | Mineral or Synthetic, 0.1 to 5% dependent on colour chosen | Aluminium Sulphate 0.1-1 % of total weight. | New or recycled Pulp Max 95% | 1-5% |
| Wood Cellulose | Natural Longfibre Lignocellulosics | Ditto above | Ditto above | Ditto above | Ditto above | Ditto above | Ditto above | Ditto above | Ditto above |
| Wood Cellulose | Cereal straws (wheat, oats, rye, barley, rice etc.) | Ditto above | Ditto above | Ditto above | Ditto above | Ditto above | Ditto above | Ditto above | Ditto above |
| Wood Cellulose | Grasses (bamboo, bagasse, kahi, miscanthus etc.) | Ditto above | Ditto above | Ditto above | Ditto above | Ditto above | Ditto above | Ditto above | Ditto above |
| Wood Cellulose | Natural Reed | Ditto above | Ditto above | Ditto above | Ditto above | Ditto above | Ditto above | Ditto above | Ditto above |
| Wood Cellulose | Wood Cellulose | Ditto above | Ditto above | Ditto above | Ditto above | Ditto above | Ditto above | Ditto above | Ditto above |
| Wood Cellulose | Natural Wood | Ditto above | Ditto above | Ditto above | Ditto above | Ditto above | Ditto above | Ditto above | Ditto above |
| Wood Cellulose | Fruit Cellulose | Ditto above | Ditto above | Ditto above | Ditto above | Ditto above | Ditto above | Ditto above | Ditto above |
| Wood Cellulose | Recycled Paper | Ditto above | Ditto above | Ditto above | Ditto above | Ditto above | Ditto above | Ditto above | Ditto above |

| **Table 62.** | | | | | | | | | |
|---|---|---|---|---|---|---|---|---|---|
| **Matrix for Paper based products, for example: Mounting card reinforced using fibre** | | | | | | | | | |
| **Principle fibre: NATURAL WOOD** | | | | | | | | | |
| **Principle micro-fibre & Max. 50% weight of product volume** | **Reinforcement fibre & 1 - 20% weight of product volume** | **Grammage** | **Finished product thickness** | **Surface finish** | **Filler % weight of product volume** | **Colour % weight of product volume.** | **Mordent % weight of product volume (as per colour fixing requirement)** | **Standard Wood based paper making pulp % weight of product volume** | **Optical Brighteners % weight of product volume** |
| Natural Wood | Longfibre Cellulose | 200g/m² up to 450g/m² dependent on end use. | Depending on finish | Textured/ Pressed to customer finish | Calcium carbonate, china clay, talc, 1-30% | Mineral or Synthetic, 0.1 to 5% dependent on colour chosen | Aluminium Sulphate 0.1-1 % of total weight. | New or recycled Pulp Max 95% | 1-5% |
| Natural Wood | Natural Longfibre Lignoceliulosics | Ditto above | Ditto above | Ditto above | Ditto above | Ditto above | Ditto above | Ditto above | Ditto above |
| Natural Wood | Cereal straws (wheat, oats, rye, barley, rice etc.) | Ditto above | Ditto above | Ditto above | Ditto above | Ditto above | Ditto above | Ditto above | Ditto above |
| Natural Wood | Grasses (bamboo, bagasse, kahi, miscanthus etc.) | Ditto above | Ditto above | Ditto above | Ditto above | Ditto above | Ditto above | Ditto above | Ditto above |
| Natural Wood | Natural Reed | Ditto above | Ditto above | Ditto above | Ditto above | Ditto above | Ditto above | Ditto above | Ditto above |
| Natural Wood | Wood Cellulose | Ditto above | Ditto above | Ditto above | Ditto above | Ditto above | Ditto above | Ditto above | Ditto above |
| Natural Wood | Natural Wood | Ditto above | Ditto above | Ditto above | Ditto above | Ditto above | Ditto above | Ditto above | Ditto above |
| Natural Wood | Fruit Cellulose | Ditto above | Ditto above | Ditto above | Ditto above | Ditto above | Ditto above | Ditto above | Ditto above |
| Natural Wood | Recycled Paper | Ditto above | Ditto above | Ditto above | Ditto above | Ditto above | Ditto above | Ditto above | Ditto above |

| **Table 63.** | | | | | | | | | |
|---|---|---|---|---|---|---|---|---|---|
| **Matrix for Paper based products, for example: Mounting card reinforced using fibre** | | | | | | | | | |
| **Principle fibre: FRUIT CELLULOSE** | | | | | | | | | |
| **Principle micro-fibre & Max. 50% weight of product volume** | **Reinforcement fibre & 1 - 20% weight of product volume** | **Grammage** | **Finished product thickness** | **Surface finish** | **Filler % weight of product volume** | **Colour % weight of product volume.** | **Mordent % weight of product volume (as per colour fixing requirement)** | **Standard Wood based paper making pulp % weight of product volume** | **Optical Brighteners % weight of product volume** |
| Fruit Cellulose | Longfibre Cellulose | 200g/m² up to 450g/m² dependent on end use. | Depending on finish | Textured/ Pressed to customer finish | Calcium carbonate, china clay, talc, 1-30% | Synthetic, 0.1 to 5% dependent on colour chosen | Aluminium Sulphate 0.1-1% of total weight. | New or recycled Pulp Max 95% | 1-5% |
| Fruit Cellulose | Natural Longfibre Lignocellulosics | Ditto above | Ditto above | Ditto above | Ditto above | Ditto above | Ditto above | Ditto above | Ditto above |
| Fruit Cellulose | Cereal straws (wheat, oats, rye, barley, rice etc.) | Ditto above | Ditto above | Ditto above | Ditto above | Ditto above | Ditto above | Ditto above | Ditto above |
| Fruit Cellulose | Grasses (bamboo, bagasse, kahi, miscanthus etc.) | Ditto above | Ditto above | Ditto above | Ditto above | Ditto above | Ditto above | Ditto above | Ditto above |
| Fruit Cellulose | Natural Reed | Ditto above | Ditto above | Ditto above | Ditto above | Ditto above | Ditto above | Ditto above | Ditto above |
| Fruit Cellulose | Wood Cellulose | Ditto above | Ditto above | Ditto above | Ditto above | Ditto above | Ditto above | Ditto above | Ditto above |
| Fruit Cellulose | Natural Wood | Ditto above | Ditto above | Ditto above | Ditto above | Ditto above | Ditto above | Ditto above | Ditto above |
| Fruit Cellulose | Fruit Cellulose | Ditto above | Ditto above | Ditto above | Ditto above | Ditto above | Ditto above | Ditto above | Ditto above |
| Fruit Cellulose | Recycled Paper | Ditto above | Ditto above | Ditto above | Ditto above | Ditto above | Ditto above | Ditto above | Ditto above |

| **Table 64.** | | | | | | | | | |
|---|---|---|---|---|---|---|---|---|---|
| **Matrix for Paper based products, for example: Mounting card reinforced using fibre** | | | | | | | | | |
| **Principle fibre: RECYCLED (WASTE) PAPER** | | | | | | | | | |
| **Principle micro-fibre & Max. 50% weight of product volume** | **Reinforcement fibre & 1 - 20% weight of product volume** | **Grammage** | **Finished product thickness** | **Surface finish** | **Filler % weight of product volume** | **Colour % weight of product volume.** | **Mordent % weight of product volume (as per colour fixing requirement)** | **Standard Wood based paper making pulp % weight of product volume** | **Optical Brighteners % weight of product volume** |
| Recycled Paper | Longfibre Cellulose | 200g/m² up to 450g/m² dependent on end use. | Depending on finish | Textured/ Pressed to customer finish | Calcium carbonate, china clay, talc, 1-30% | Mineral or Synthetic, 0.1 to 5% dependent on colour chosen | Aluminium Sulphate 0.1-1% of total weight. | New or recycled Pulp Max 95% | 1-5% |
| Recycled Paper | Natural Longfibre Lignocellulosics | Ditto above | Ditto above | Ditto above | Ditto above | Ditto above | Ditto above | Ditto above | Ditto above |
| Recycled Paper | Cereal straws (wheat, oats, rye, barley, rice etc.) | Ditto above | Ditto above | Ditto above | Ditto above | Ditto above | Ditto above | Ditto above | Ditto above |
| Recycled Paper | Grasses (bamboo, bagasse, kahi, miscanthus etc.) | Ditto above | Ditto above | Ditto above | Ditto above | Ditto above | Ditto above | Ditto above | Ditto above |
| Recycled Paper | Natural Reed | Ditto above | Ditto above | Ditto above | Ditto above | Ditto above | Ditto above | Ditto above | Ditto above |
| Recycled Paper | Wood Cellulose | Ditto above | Ditto above | Ditto above | Ditto above | Ditto above | Ditto above | Ditto above | Ditto above |
| Recycled Paper | Natural Wood | Ditto above | Ditto above | Ditto above | Ditto above | Ditto above | Ditto above | Ditto above | Ditto above |
| Recycled Paper | Fruit Cellulose | Ditto above | Ditto above | Ditto above | Ditto above | Ditto above | Ditto above | Ditto above | Ditto above |
| Recycled Paper | Recycled Paper | Ditto above | Ditto above | Ditto above | Ditto above | Ditto above | Ditto above | Ditto above | Ditto above |

| **Table 65.** | | | | | | | | | |
|---|---|---|---|---|---|---|---|---|---|
| **Paper based products: 'Corrugated Medium' reinforced using fibre** | | | | | | | | | |
| **Principle fibre: CELLULOSE FROM LONGFIBRE LIGNOCELLULOSIC PLANT FEEDSTOCKS (e.g. Cotton/Hemp/Jute/Abaca/Flax/Kenaf/Rami/Sisal etc. see preamble)** | | | | | | | | | |
| **Principle micro-fibre & Max. 50% weight of product volume** | **Reinforcement fibre & 1 - 20% weight of product volume** | **Finished product density** | **Finished product thickness** | **Surface finish** | **Filler % weight of product volume** | **Colour % weight of product volume.** | **Mordent % weight of product volume (as per colour fixing requirement)** | **Standard Wood based paper making pulp % weight of product volume** | **Optical Brighteners % weight of product volume** |
| Longfibre Cellulose | Longfibre Cellulose | 80g/m² up to 120m² dependent on end use. | 0.20mm up to 0.30mm | Textured/ Pressed to customer finish | Calcium carbonate, china clay, talc, 1-15% | Mineral or Synthetic, 0.1 to 5% dependent on colour chosen | Aluminium Sulphate 0.1-1 % of total weight. | New or recycled Pulp Max 95% | 1-5% |
| Longfibre Cellulose | Natural Longfibre Lignocellulosics | Ditto above | Ditto above | Ditto above | Ditto above | Ditto above | Ditto above | Ditto above | Ditto above |
| Longfibre Cellulose | Cereal straws (wheat, oats, rye, barley, rice etc.) | Ditto above | Ditto above | Ditto above | Ditto above | Ditto above | Ditto above | Ditto above | Ditto above |
| Longfibre Cellulose | Grasses (bamboo, bagasse, kahi, miscanthus etc.) | Ditto above | Ditto above | Ditto above | Ditto above | Ditto above | Ditto above | Ditto above | Ditto above |
| Longfibre Cellulose | Natural Reed | Ditto above | Ditto above | Ditto above | Ditto above | Ditto above | Ditto above | Ditto above | Ditto above |
| Longfibre Cellulose | Wood Cellulose | Ditto above | Ditto above | Ditto above | Ditto above | Ditto above | Ditto above | Ditto above | Ditto above |
| Longfibre Cellulose | Natural Wood | Ditto above | Ditto above | Ditto above | Ditto above | Ditto above | Ditto above | Ditto above | Ditto above |
| Longfibre Cellulose | Fruit Cellulose | Ditto above | Ditto above | Ditto above | Ditto above | Ditto above | Ditto above | Ditto above | Ditto above |
| Longfibre Cellulose | Recycled Paper | Ditto above | Ditto above | Ditto above | Ditto above | Ditto above | Ditto above | Ditto above | Ditto above |

| **Table 66.** | | | | | | | | | |
|---|---|---|---|---|---|---|---|---|---|
| **Paper based products: 'Corrugated Medium' reinforced using fibre** | | | | | | | | | |
| **Principle fibre: NATURAL LONGFIBRE LIGNOCELLULOSIC PLANT FEEDSTOCKS (e.g. Cotton/Hemp/Jute/Abaca/Flax/Kenaf/Rami/Sisal etc. see preamble)** | | | | | | | | | |
| **Principle micro-fibre & Max. 50% weight of product volume** | **Reinforcement fibre & 1 - 20% weight of product volume** | **Grammage** | **Finished product thickness** | **Surface finish** | **Filler % weight of product volume** | **Colour % weight of product volume.** | **Mordent % weight of product volume (as per colour fixing requirement)** | **Standard Wood based paper making pulp % weight of product volume** | **Optical Brighteners % weight of product volume** |
| Natural Longfibre Lignocellulosics | Longfibre Cellulose | 80g/m² up to 120m² dependent on end use. | 0.20mm up to 0.30mm | Textured/ Pressed to customer finish | Calcium carbonate, china clay, talc, 1-15% | Mineral or Synthetic, 0.1 to 5% dependent on colour chosen | Aluminium Sulphate 0.1-1% of total weight. | New or recycled Pulp Max 95% | 1-5% |
| Natural Longfibre Lignocellulosics | Natural Longfibre Lignocellulosics | Ditto above | Ditto above | Ditto above | Ditto above | Ditto above | Ditto above | Ditto above | Ditto above |
| Natural Longfibre Lignocellulosics | Cereal straws (wheat, oats, rye, barley, rice etc.) | Ditto above | Ditto above | Ditto above | Ditto above | Ditto above | Ditto above | Ditto above | Ditto above |
| Natural Longfibre Lignocellulosics | Grasses (bamboo, bagasse, kahi, miscanthus etc.) | Ditto above | Ditto above | Ditto above | Ditto above | Ditto above | Ditto above | Ditto above | Ditto above |
| Natural Longfibre Lignocellulosics | Natural Reed | Ditto above | Ditto above | Ditto above | Ditto above | Ditto above | Ditto above | Ditto above | Ditto above |
| Natural Longfibre Lignocellulosics | Wood Cellulose | Ditto above | Ditto above | Ditto above | Ditto above | Ditto above | Ditto above | Ditto above | Ditto above |
| Natural Longfibre Lignocellulosics | Natural Wood | Ditto above | Ditto above | Ditto above | Ditto above | Ditto above | Ditto above | Ditto above | Ditto above |
| Natural Longfibre Liqnocellulosics | Fruit Cellulose | Ditto above | Ditto above | Ditto above | Ditto above | Ditto above | Ditto above | Ditto above | Ditto above |
| Natural Longfibre Lignocellulosics | Recycled Paper | Ditto above | Ditto above | Ditto above | Ditto above | Ditto above | Ditto above | Ditto above | Ditto above |

| **Table 67.** | | | | | | | | | |
|---|---|---|---|---|---|---|---|---|---|
| **Paper based products: 'Corrugated Medium' reinforced using fibre** | | | | | | | | | |
| **Principle fibre: CEREAL STRAWS (wheat, oats, rye, barley, rice etc.)** | | | | | | | | | |
| **Principle micro-fibre & Max. 50% weight of product volume** | **Reinforcement fibre & 1 - 20% weight of product volume** | **Grammage** | **Finished product thickness** | **Surface finish** | **Filler % weight of product volume** | **Colour % weight of product volume.** | **Mordent % weight of product volume (as per colour fixing requirement)** | **Standard Wood based paper making pulp % weight of product volume** | **Optical Brighteners % weight of product volume** |
| Cereal straws | Longfibre Cellulose | 80g/m² up to 120m² dependent on end use. | 0.20mm up to 0.30mm | Textured/ Pressed to customer finish | Calcium carbonate, china clay, talc, 1-15% | Mineral or Synthetic, 0.1 to 5% dependent on colour chosen | Aluminium Sulphate 0.1-1% of total weight. | New or recycled Pulp Max 95% | 1-5% |
| Cereal straws | Natural Longfibre Lignocellulosics | Ditto above | Ditto above | Ditto above | Ditto above | Ditto above | Ditto above | Ditto above | Ditto above |
| Cereal straws | Cereal straws (wheat, oats, rye, barley, rice etc.) | Ditto above | Ditto above | Ditto above | Ditto above | Ditto above | Ditto above | Ditto above | Ditto above |
| Cereal straws | Grasses (bamboo, bagasse, kahi, miscanthus etc.) | Ditto above | Ditto above | Ditto above | Ditto above | Ditto above | Ditto above | Ditto above | Ditto above |
| Cereal straws | Natural Reed | Ditto above | Ditto above | Ditto above | Ditto above | Ditto above | Ditto above | Ditto above | Ditto above |
| Cereal straws | Wood Cellulose | Ditto above | Ditto above | Ditto above | Ditto above | Ditto above | Ditto above | Ditto above | Ditto above |
| Cereal straws | Natural Wood | Ditto above | Ditto above | Ditto above | Ditto above | Ditto above | Ditto above | Ditto above | Ditto above |
| Cereal straws | Fruit Cellulose | Ditto above | Ditto above | Ditto above | Ditto above | Ditto above | Ditto above | Ditto above | Ditto above |
| Cereal straws | Recycled Paper | Ditto above | Ditto above | Ditto above | Ditto above | Ditto above | Ditto above | Ditto above | Ditto above |

| **Table 68.** | | | | | | | | | |
|---|---|---|---|---|---|---|---|---|---|
| **Paper based products: 'Corrugated Medium' reinforced using fibre** | | | | | | | | | |
| **Principle fibre: GRASSES (bamboo, bagasse, kahi, miscanthus etc.)** | | | | | | | | | |
| **Principle micro-fibre & Max. 50% weight of product volume** | **Reinforcement fibre & 1 - 20% weight of product volume** | **Grammage** | **Finished product thickness** | **Surface finish** | **Filler % weight of product volume** | **Colour % weight of product volume.** | **Mordent % weight of product volume (as per colour fixing requirement)** | **Standard Wood based paper making pulp % weight of product volume** | **Optical Brighteners % weight of product volume** |
| Grasses | Longfibre Cellulose | 80g/m² up to 120m² dependent on end use. | 0.20mm up to 0.30mm | Textured/ Pressed to customer finish | Calcium carbonate, china clay, talc, 1 - 15% | Mineral or Synthetic, 0.1 to 5% dependent on colour chosen | Aluminium Sulphate 0.1-1% of total weight. | New or recycled Pulp Max 95% | 1-5% |
| Grasses | Natural Longfibre Lignocellulosics | Ditto above | Ditto above | Ditto above | Ditto above | Ditto above | Ditto above | Ditto above | Ditto above |
| Grasses | Cereal straws (wheat, oats, rye, barley, rice etc.) | Ditto above | Ditto above | Ditto above | Ditto above | Ditto above | Ditto above | Ditto above | Ditto above |
| Grasses | Grasses (bamboo, bagasse, kahi, miscanthus etc.) | Ditto above | Ditto above | Ditto above | Ditto above | Ditto above | Ditto above | Ditto above | Ditto above |
| Grasses | Natural Reed | Ditto above | Ditto above | Ditto above | Ditto above | Ditto above | Ditto above | Ditto above | Ditto above |
| Grasses | Wood Cellulose | Ditto above | Ditto above | Ditto above | Ditto above | Ditto above | Ditto above | Ditto above | Ditto above |
| Grasses | Natural Wood | Ditto above | Ditto above | Ditto above | Ditto above | Ditto above | Ditto above | Ditto above | Ditto above |
| Grasses | Fruit Cellulose | Ditto above | Ditto above | Ditto above | Ditto above | Ditto above | Ditto above | Ditto above | Ditto above |
| Grasses | Recycled Paper | Ditto above | Ditto above | Ditto above | Ditto above | Ditto above | Ditto above | Ditto above | Ditto above |

| **Table 69.** | | | | | | | | | |
|---|---|---|---|---|---|---|---|---|---|
| **Paper based products: 'Corrugated Medium' reinforced using fibre** | | | | | | | | | |
| **Principle fibre: NATURAL REED** | | | | | | | | | |
| **Principle micro-fibre & Max. 50% weight of product volume** | **Reinforcement fibre & 1 - 20% weight of product volume** | **Grammage** | **Finished product thickness** | **Surface finish** | **Filler % weight of product volume** | **Colour % weight of product volume.** | **Mordent % weight of product volume (as per colour fixing** requirement) | **Standard Wood based paper making pulp % weight of product volume** | **Optical Brighteners % weight of product volume** |
| Natural Reed | Longfibre Cellulose | 80g/m² up to 120m² dependent on end use. | 0.20mm up to 0.30mm | Textured/ Pressed to customer finish | Calcium carbonate, china clay, talc, 1 - 15% | Mineral or Synthetic, 0.1 to 5% dependent on colour chosen | Aluminium Sulphate 0.1-1 % of total weight. | New or recycled Pulp Max 95% | 1-5% |
| Natural Reed | Natural Longfibre Lignocellulosics | Ditto above | Ditto above | Ditto above | Ditto above | Ditto above | Ditto above | Ditto above | Ditto above |
| Natural Reed | Cereal straws (wheat, oats, rye, barley, rice etc.) | Ditto above | Ditto above | Ditto above | Ditto above | Ditto above | Ditto above | Ditto above | Ditto above |
| Natural Reed | Grasses (bamboo, bagasse, kahi, miscanthus etc.) | Ditto above | Ditto above | Ditto above | Ditto above | Ditto above | Ditto above | Ditto above | Ditto above |
| Natural Reed | Natural Reed | Ditto above | Ditto above | Ditto above | Ditto above | Ditto above | Ditto above | Ditto above | Ditto above |
| Natural Reed | Wood Cellulose | Ditto above | Ditto above | Ditto above | Ditto above | Ditto above | Ditto above | Ditto above | Ditto above |
| Natural Reed | Natural Wood | Ditto above | Ditto above | Ditto above | Ditto above | Ditto above | Ditto above | Ditto above | Ditto above |
| Natural Reed | Fruit Cellulose | Ditto above | Ditto above | Ditto above | Ditto above | Ditto above | Ditto above | Ditto above | Ditto above |
| Natural Reed | Recycled Paper | Ditto above | Ditto above | Ditto above | Ditto above | Ditto above | Ditto above | Ditto above | Ditto above |

| **Table 70.** | | | | | | | | | |
|---|---|---|---|---|---|---|---|---|---|
| **Paper based products: 'Corrugated Medium' reinforced using fibre** | | | | | | | | | |
| **Principle fibre: WOOD CELLULOSE** | | | | | | | | | |
| **Principle micro-fibre & Max. 50% weight of product volume** | **Reinforcement fibre & 1 - 20% weight of product volume** | **Grammage** | **Finished product thickness** | **Surface finish** | **Filler % weight of product volume** | **Colour % weight of product volume.** | **Mordent % weight of product volume (as per colour fixing requirement)** | **Standard Wood based paper making pulp % weight of product volume** | **Optical Brighteners % weight of product volume** |
| Wood **Cellulose** | Longfibre Cellulose | 80g/m² up to 120m² dependent on end use. | 0.20mm up to 0.30mm | Textured/ Pressed to customer finish | Calcium carbonate, china clay, talc, 1 - 15% | Mineral or Synthetic, 0.1 to 5% dependent on colour chosen | Aluminium Sulphate 0.1-1% of total weight. | New or recycled Pulp Max 95% | 1 - 5% |
| Wood Cellulose | Natural Longfibre Lignocellulosics | Ditto above | Ditto above | Ditto above | Ditto above | Ditto above | Ditto above | Ditto above | Ditto above |
| Wood Cellulose | Cereal straws (wheat, oats, rye, barley, rice etc.) | Ditto above | Ditto above | Ditto above | Ditto above | Ditto above | Ditto above | Ditto above | Ditto above |
| Wood Cellulose | Grasses (bamboo, bagasse, kahi, miscanthus etc.) | Ditto above | Ditto above | Ditto above | Ditto above | Ditto above | Ditto above | Ditto above | Ditto above |
| Wood Cellulose | Natural Reed | Ditto above | Ditto above | Ditto above | Ditto above | Ditto above | Ditto above | Ditto above | Ditto above |
| Wood Cellulose | Wood Cellulose | Ditto above | Ditto above | Ditto above | Ditto above | Ditto above | Ditto above | Ditto above | Ditto above |
| Wood Cellulose | Natural Wood | Ditto above | Ditto above | Ditto above | Ditto above | Ditto above | Ditto above | Ditto above | Ditto above |
| Wood Cellulose | Fruit Cellulose | Ditto above | Ditto above | Ditto above | Ditto above | Ditto above | Ditto above | Ditto above | Ditto above |
| Wood Cellulose | Recycled Paper | Ditto above | Ditto above | Ditto above | Ditto above | Ditto above | Ditto above | Ditto above | Ditto above |

| **Table 71.** | | | | | | | | | |
|---|---|---|---|---|---|---|---|---|---|
| **Paper based products: 'Corrugated Medium' reinforced using fibre** | | | | | | | | | |
| **Principle fibre: NATURAL WOOD** | | | | | | | | | |
| **Principle micro-fibre & Max. 50% weight of product volume** | **Reinforcement fibre & 1 - 20% weight of product volume** | **Grammage** | **Finished product thickness** | **Surface finish** | **Filler % weight of product volume** | **Colour % weight of product volume.** | **Mordent % weight of product volume (as per colour fixing requirement)** | **Standard Wood based paper making pulp % weight of product volume** | **Optical Brighteners % weight of product volume** |
| Natural Wood | Longfibre Cellulose | 80g/m² up to 120m² dependent on end use. | 0.20mm up to 0.30mm | Textured/ Pressed to customer finish | Calcium carbonate, china clay, talc, 1 -15% | Mineral or Synthetic, 0.1 to 5% dependent on colour chosen | Aluminium Sulphate 0.1-1% of total weight. | New or recycled Pulp Max 95% | 1 - 5% |
| Natural Wood | Natural Longfibre Lignocellulosics | Ditto above | Ditto above | Ditto above | Ditto above | Ditto above | Ditto above | Ditto above | Ditto above |
| Natural Wood | Cereal straws (wheat, oats, rye, barley, rice etc.) | Ditto above | Ditto above | Ditto above | Ditto above | Ditto above | Ditto above | Ditto above | Ditto above |
| Natural Wood | Grasses (bamboo, bagasse, kahi, miscanthus etc.) | Ditto above | Ditto above | Ditto above | Ditto above | Ditto above | Ditto above | Ditto above | Ditto above |
| Natural Wood | Natural Reed | Ditto above | Ditto above | Ditto above | Ditto above | Ditto above | Ditto above | Ditto above | Ditto above |
| Natural Wood | Wood Cellulose | Ditto above | Ditto above | Ditto above | Ditto above | Ditto above | Ditto above | Ditto above | Ditto above |
| Natural Wood | Natural Wood | Ditto above | Ditto above | Ditto above | Ditto above | Ditto above | Ditto above | Ditto above | Ditto above |
| Natural Wood | Fruit Cellulose | Ditto above | Ditto above | Ditto above | Ditto above | Ditto above | Ditto above | Ditto above | Ditto above |
| Natural Wood | Recycled Paper | Ditto above | Ditto above | Ditto above | Ditto above | Ditto above | Ditto above | Ditto above | Ditto above |

| **Table 72.** | | | | | | | | | |
|---|---|---|---|---|---|---|---|---|---|
| **Paper based products: 'Corrugated Medium' reinforced using fibre** | | | | | | | | | |
| **Principle fibre: FRUIT CELLULOSE** | | | | | | | | | |
| **Principle micro-fibre & Max. 50% weight of product volume** | **Reinforcement fibre & 1 - 20% weight of product volume** | **Grammage** | **Finished product thickness** | **Surface finish** | **Filler % weight of product volume** | **Colour % weight of product volume.** | **Mordent % weight of product volume (as per colour fixing requirement**) | **Standard Wood based paper making pulp % weight of product volume** | **Optical Brighteners % weight of product volume** |
| Fruit Cellulose | Longfibre Cellulose | 80g/m² up to 120m² dependent on end use. | 0.20mm up to 0.30mm | Textured/ Pressed to customer finish | Calcium carbonate, china clay, talc, 1 - 15% | Mineral or Synthetic, 0.1 to 5% dependent on colour chosen | Aluminium Sulphate 0.1-1% of total weight. | New or recycled Pulp Max 95% | 1-5% |
| Fruit Cellulose | Natural Longfibre Lignocellulosics | Ditto above | Ditto above | Ditto above | Ditto above | Ditto above | Ditto above | Ditto above | Ditto above |
| Fruit Cellulose | Cereal straws (wheat, oats, rye, barley, rice etc.) | Ditto above | Ditto above | Ditto above | Ditto above | Ditto above | Ditto above | Ditto above | Ditto above |
| Fruit Cellulose | Grasses (bamboo, bagasse, kahi, miscanthus etc.) | Ditto above | Ditto above | Ditto above | Ditto above | Ditto above | Ditto above | Ditto above | Ditto above |
| Fruit Cellulose | Natural Reed | Ditto above | Ditto above | Ditto above | Ditto above | Ditto above | Ditto above | Ditto above | Ditto above |
| Fruit Cellulose | Wood Cellulose | Ditto above | Ditto above | Ditto above | Ditto above | Ditto above | Ditto above | Ditto above | Ditto above |
| Fruit Cellulose | Natural Wood | Ditto above | Ditto above | Ditto above | Ditto above | Ditto above | Ditto above | Ditto above | Ditto above |
| Fruit Cellulose | Fruit Cellulose | Ditto above | Ditto above | Ditto above | Ditto above | Ditto above | Ditto above | Ditto above | Ditto above |
| Fruit Cellulose | Recycled Paper | Ditto above | Ditto above | Ditto above | Ditto above | Ditto above | Ditto above | Ditto above | Ditto above |

| **Table 73.** | | | | | | | | | |
|---|---|---|---|---|---|---|---|---|---|
| **Paper based products: 'Corrugated Medium' reinforced using fibre** | | | | | | | | | |
| **Principle fibre: RECYCLED (WASTE) PAPER** | | | | | | | | | |
| **Principle micro-fibre & Max. 50% weight of product volume** | **Reinforcement fibre & 1 - 20% weight of product volume** | **Grammage** | **Finished product thickness** | **Surface finish** | **Filler % weight of product volume** | **Colour % weight of product volume.** | **Mordent % weight of product volume (as per colour fixing requirement**) | **Standard Wood based paper making pulp % weight of product volume** | **Optical Brighteners % weight of product volume** |
| Recycled Paper | Longfibre Cellulose | 80g/m² up to 120m² dependent on end use. | 0.20mm up to 0.30mm | Textured/ Pressed to customer finish | Calcium carbonate, china clay, talc, 1 - 15% | Mineral or Synthetic, 0.1 to 5% dependent on colour chosen | Aluminium Sulphate 0.1-1% of total weight. | New or recycled Pulp Max 95% | 1 - 5% |
| Recycled Paper | Natural Longfibre Lignocellulosics | Ditto above | Ditto above | Ditto above | Ditto above | Ditto above | Ditto above | Ditto above | Ditto above |
| Recycled Paper | Cereal straws (wheat, oats, rye, barley, rice etc.) | Ditto above | Ditto above | Ditto above | Ditto above | Ditto above | Ditto above | Ditto above | Ditto above |
| Recycled Paper | Grasses (bamboo, bagasse, kahi, miscanthus etc.) | Ditto above | Ditto above | Ditto above | Ditto above | Ditto above | Ditto above | Ditto above | Ditto above |
| Recycled Paper | Natural Reed | Ditto above | Ditto above | Ditto above | Ditto above | Ditto above | Ditto above | Ditto above | Ditto above |
| Recycled Paper | Wood Cellulose | Ditto above | Ditto above | Ditto above | Ditto above | Ditto above | Ditto above | Ditto above | Ditto above |
| Recycled Paper | Natural Wood | Ditto above | Ditto above | Ditto above | Ditto above | Ditto above | Ditto above | Ditto above | Ditto above |
| Recycled Paper | Fruit Cellulose | Ditto above | Ditto above | Ditto above | Ditto above | Ditto above | Ditto above | Ditto above | Ditto above |
| Recycled Paper | Recycled Paper | Ditto above | Ditto above | Ditto above | Ditto above | Ditto above | Ditto above | Ditto above | Ditto above |

| **Table 74.** | | | | | | | | | |
|---|---|---|---|---|---|---|---|---|---|
| **Paper based products: 'Corrugated Medium' reinforced using fibre** | | | | | | | | | |
| **Principle fibre: RICE STRAW PULP + WASTE PAPER** | | | | | | | | | |
| **Principle furnish & Max. 95% weight of product volume** | **Addition of 1 - 20% Zelfo from: -** | **Finished product density** | **Finished product thickness** | **Surface finish** | **Filler % weight of product volume** | **Colour % weight of product volume.** | **Mordent % weight of product volume (as per colour fixing requirement)** | **Standard Wood based paper making pulp % weight of product vol.** | **Optical Brighteners % weight of product vol.** |
| Rice straw pulp + Waste Paper (WP) | Longfibre Cellulose | 80g/m² up to 120m² dependent on end use. | 0.20mm up to 0.30mm | Textured/ Pressed to customer finish | Calcium carbonate, china clay, talc, 1 - 15% | Mineral or Synthetic, 0.1 to 5% dependent on colour chosen | Aluminium Sulphate 0.1-1 % of total weight. | New or recycled Pulp Max 95% | 1-5% |
| Rice straw pulp + Waste Paper | Natural Longfibre Lignocellulosics | Ditto above | Ditto above | Ditto above | Ditto above | Ditto above | Ditto above | Ditto above | Ditto above |
| Rice straw pulp + Waste Paper | Cereal straws (wheat, oats, rye, barley, rice etc.) | Ditto above | Ditto above | Ditto above | Ditto above | Ditto above | Ditto above | Ditto above | Ditto above |
| Rice straw pulp + Waste Paper | Grasses (bamboo, bagasse, kahi, miscanthus etc.) | Ditto above | Ditto above | Ditto above | Ditto above | Ditto above | Ditto above | Ditto above | Ditto above |
| Rice straw pulp + Waste Paper | Natural Reed | Ditto above | Ditto above | Ditto above | Ditto above | Ditto above | Ditto above | Ditto above | Ditto above |
| Rice straw pulp + Waste Paper | Wood Cellulose | Ditto above | Ditto above | Ditto above | Ditto above | Ditto above | Ditto above | Ditto above | Ditto above |
| Rice straw pulp + Waste Paper | Natural Wood | Ditto above | Ditto above | Ditto above | Ditto above | Ditto above | Ditto above | Ditto above | Ditto above |
| Rice straw pulp + Waste Paper | Fruit Cellulose | Ditto above | Ditto above | Ditto above | Ditto above | Ditto above | Ditto above | Ditto above | Ditto above |
| Rice straw pulp + Waste Paper | Recycled Paper | Ditto above | Ditto above | Ditto above | Ditto above | Ditto above | Ditto above | Ditto above | Ditto above |

| **Table 75.** | | | | | | | |
|---|---|---|---|---|---|---|---|
| **Heating brickette (1.0 - 1.5 grams/cubic centimetre) - Low flare/high calorific value (Gross calorific value max. 20 / MJ kg-1) using a fibre binding system.** | | | | | | | |
| **Principle fibre: CELLULOSE FROM LONGFIBRE LIGNOCELLULOSIC PLANT FEEDSTOCKS (e.g. Cotton/Hemp/Jute/Abaca/Flax/Kenaf/Rami/Sisal etc. see preamble)** | | | | | | | |
| **Principle micro-fibre & Max. 80% weight of product volume** | **Secondary fibre & 1-20% weight of product volume** | **Finished product density** | **Finished product dimensions: Brickette presses exist to manufacture a wide range of practical and stylistic forms.** | **Surface finish** | **Colour % weight of product volume.** | **Mordent % weight of product volume (as per colour fixing requirement)** | **Optional flame colouring agents (Materials see preamble):** |
| Natural Longfibre Lignocellulosics | Longfibre Cellulose | 1.0g/cm³ up to 1.5g/cm | Examples (not definitive): Brickette:120x60x90mm. Circular extrusion: 75mm outer diameter, x 200mm long with or without hole. Circular, Oval, Square, Pillow, Hexaqon forms etc. | As per client requested forming mould pattern | Mineral or Synthetic, 0.1 to 5% dependent on colour chosen | Aluminium Sulphate 0.1-1% of total weight. | Selected metal salt (s) to produce coloured flames. 3.0% by weight depending upon effect required. |
| Natural Longfibre Lignocellulosics | Natural Longfibre Lignocellulosics | Ditto above | Ditto above | Ditto above | Ditto above | Ditto above | Ditto above |
| Natural Longfibre Lignocellulosics | Cereal straws (wheat, oats, rye, barley, rice etc.) | Ditto above | Ditto above | Ditto above | Ditto above | Ditto above | Ditto above |
| Natural Longfibre Lignocellulosics | Grasses (bamboo, bagasse, kahi, miscanthus etc.) | Ditto above | Ditto above | Ditto above | Ditto above | Ditto above | Ditto above |
| Natural Longfibre Lignocellulosics | Natural Reed | Ditto above | Ditto above | Ditto above | Ditto above | Ditto above | Ditto above |
| Natural Longfibre Lignocellulosics | Wood Cellulose | Ditto above | Ditto above | Ditto above | Ditto above | Ditto above | Ditto above |
| Natural Longfibre Lignocellulosics | Natural Wood | Ditto above | Ditto above | Ditto above | Ditto above | Ditto above | Ditto above |
| Natural Longfibre Lignocellulosics | Fruit Cellulose | Ditto above | Ditto above | Ditto above | Ditto above | Ditto above | Ditto above |
| Natural Longfibre Lignocellulosics | Recycled Paper | Ditto above | Ditto above | Ditto above | Ditto above | Ditto above | Ditto above |

| **Table 76.** | | | | | | | |
|---|---|---|---|---|---|---|---|
| **Heating brickette (1.0 - 1.5 grams/cubic centimetre) - Low flare/high calorific value (Gross calorific value max. 20 / MJ kg-1) using a fibre binding system.** | | | | | | | |
| **Principle fibre: CEREAL STRAWS (WHEAT, OATS, RYE, BARLEY, RICE, ETC.)** | | | | | | | |
| **Principle micro-fibre & Max. 80% weight of product volume** | **Secondary fibre & 1-20% weight of product volume** | **Finished product density** | **Finished product dimensions: Brickette presses exist to manufacture a wide range of practical and stylistic forms.** | **Surface finish** | **Colour % weight of product volume.** | **Mordent % weight of product volume (as per colour fixing requirement)** | **Optional flame colouring agents (Materials see preamble):** |
| Cereal straws (wheat, oats, rye, barley, rice etc.) | Longfibre Cellulose | 1.0g/cm³ up to 1.5g/cm | Examples (not definitive): Brickette: 120x60x90mm. Circular extrusion: 75mm outer diameter, x 200mm long with or without hole. Circular, Oval, Square, Pillow, Hexaqon forms etc. | As per client requested forming mould pattern | Mineral or Synthetic, 0.1 to 5% dependent on colour chosen | Aluminium Sulphate 0.1-1 % of total weight. | Selected metal salt (s) to produce coloured flames. 3.0% by weight depending upon effect required. |
| Cereal straws (wheat, oats, rye, barley, rice etc.) | Natural Longfibre Lignocellulosics | Ditto above | Ditto above | Ditto above | Ditto above | Ditto above | Ditto above |
| Cereal straws (wheat, oats, rye, barley, rice etc.) | Cereal straws (wheat, oats, rye, barley, rice etc.) | Ditto above | Ditto above | Ditto above | Ditto above | Ditto above | Ditto above |
| Cereal straws (wheat, oats, rye, barley, rice etc.) | Grasses (bamboo, bagasse, kahi, miscanthus etc.) | Ditto above | Ditto above | Ditto above | Ditto above | Ditto above | Ditto above |
| Cereal straws (wheat, oats, rye, barley, rice etc.) | Natural Reed | Ditto above | Ditto above | Ditto above | Ditto above | Ditto above | Ditto above |
| Cereal straws (wheat, oats, rye, barley, rice etc.) | Wood Cellulose | Ditto above | Ditto above | Ditto above | Ditto above | Ditto above | Ditto above |
| Cereal straws (wheat, oats, rye, barley, rice etc.) | Natural Wood | Ditto above | Ditto above | Ditto above | Ditto above | Ditto above | Ditto above |
| Cereal straws (wheat, oats, rye, barley, rice etc.) | Fruit Cellulose | Ditto above | Ditto above | Ditto above | Ditto above | Ditto above | Ditto above |
| Cereal straws (wheat, oats, rye, barley, rice etc.) | Recycled Paper | Ditto above | Ditto above | Ditto above | Ditto above | Ditto above | Ditto above |

| **Table 77.** | | | | | | | |
|---|---|---|---|---|---|---|---|
| **Heating brickette (1.0 - 1.5 grams/cubic centimetre) - Low flare/high calorific value (Gross calorific value max. 20 / MJ kg-1*)* using a fibre binding system.** | | | | | | | |
| **Principle fibre: GRASSES (BAMBOO, BAGASSE, KAHI, MISCANTHUS ETC.)** | | | | | | | |
| **Principle micro-fibre & Max. 80% weight of product volume** | **Secondary fibre & 1-20% weight of product volume** | **Finished product density** | **Finished product dimensions: Brickette presses exist to manufacture a wide range of practical and stylistic forms.** | **Surface finish** | **Colour % weight of product volume.** | **Mordent % weight of product volume (as per colour fixing requirement)** | **Optional flame colouring agents (Materials see preamble):** |
| Grasses (bamboo, bagasse, kahi, miscanthus etc.) | Longfibre Cellulose | 1.0g/cm³ up to 1.5g/cm | Examples (not definitive): Brickette: 120x60x90mm. Circular extrusion: 75mm outer diameter, x 200mm long with or without hole. Circular, Oval, Square, Pillow, Hexagon forms etc. | As per client requested forming mould pattern | Mineral or Synthetic, 0.1 to 5% dependent on colour chosen | Aluminium Sulphate 0.1-1 % of total weight. | Selected metal salt (s) to produce coloured flames. 3.0% by weight depending upon effect required. |
| Grasses (bamboo, bagasse, kahi, miscanthus etc.) | Natural Longfibre Lignocellulosics | Ditto above | Ditto above | Ditto above | Ditto above | Ditto above | Ditto above |
| Grasses (bamboo, bagasse, kahi, miscanthus etc.) | Cereal straws (wheat, oats, rye, barley, rice etc.) | Ditto above | Ditto above | Ditto above | Ditto above | Ditto above | Ditto above |
| Grasses (bamboo, bagasse, kahi, miscanthus etc.) | Grasses (bamboo, bagasse, kahi, miscanthus etc.) | Ditto above | Ditto above | Ditto above | Ditto above | Ditto above | Ditto above |
| Grasses (bamboo, bagasse, kahi, miscanthus etc.) | Natural Reed | Ditto above | Ditto above | Ditto above | Ditto above | Ditto above | Ditto above |
| Grasses (bamboo, bagasse, kahi, miscanthus etc.) | Wood Cellulose | Ditto above | Ditto above | Ditto above | Ditto above | Ditto above | Ditto above |
| Grasses (bamboo, bagasse, kahi, miscanthus etc.) | Natural Wood | Ditto above | Ditto above | Ditto above | Ditto above | Ditto above | Ditto above |
| Grasses (bamboo, bagasse, kahi, miscanthus etc.) | Fruit Cellulose | Ditto above | Ditto above | Ditto above | Ditto above | Ditto above | Ditto above |
| Grasses (bamboo, bagasse, kahi, miscanthus etc.) | Recycled Paper | Ditto above | Ditto above | Ditto above | Ditto above | Ditto above | Ditto above |

| **Table 78.** | | | | | | | |
|---|---|---|---|---|---|---|---|
| **Heating brickette (1.0 - 1.5 grams/cubic centimetre) - Low flare/high calorific value (Gross calorific value max. 20 / MJ kg-1) using a fibre binding system.** | | | | | | | |
| **Principle fibre: NATURAL WOOD** | | | | | | | |
| **Principle micro-fibre & Max. 80% weight of product volume** | **Secondary fibre & 1-20% weight of product volume** | **Finished product density** | **Finished product dimensions: Brickette presses exist to manufacture a wide range of practical and stylistic forms.** | **Surface finish** | **Colour % weight of product volume.** | **Mordent % weight of product volume (as per colour fixing requirement)** | **Optional flame colouring agents (Materials see preamble):** |
| Natural Wood | Longfibre Cellulose | 1.0g/cm³ up to 1.5g/cm | Examples (not definitive): Brickette: 120x60x90mm. Circular extrusion: 75mm outer diameter, x 200mm long with or without hole. Circular, Oval, Square, Pillow, Hexagon forms etc. | As per client requested forming mould pattern | Mineral or Synthetic, 0.1 to 5% dependent on colour chosen | Aluminium Sulphate 0.1-1 % of total weight. | Selected metal salt (s) to produce coloured flames. 3.0% by weight depending upon effect required. |
| Natural Wood | Natural Longfibre Lignocellulosics | Ditto above | Ditto above | Ditto above | Ditto above | Ditto above | Ditto above |
| Natural Wood | Cereal straws (wheat, oats, rye, barley, rice etc.) | Ditto above | Ditto above | Ditto above | Ditto above | Ditto above | Ditto above |
| Natural Wood | Grasses (bamboo, bagasse, kahi, miscanthus etc.) | Ditto above | Ditto above | Ditto above | Ditto above | Ditto above | Ditto above |
| Natural Wood | Natural Reed | Ditto above | Ditto above | Ditto above | Ditto above | Ditto above | Ditto above |
| Natural Wood | Wood Cellulose | Ditto above | Ditto above | Ditto above | Ditto above | Ditto above | Ditto above |
| Natural Wood | Natural Wood | Ditto above | Ditto above | Ditto above | Ditto above | Ditto above | Ditto above |
| Natural Wood | Fruit Cellulose | Ditto above | Ditto above | Ditto above | Ditto above | Ditto above | Ditto above |
| Natural Wood | Recycled Paper | Ditto above | Ditto above | Ditto above | Ditto above | Ditto above | Ditto above |

| **Table 79.** | | | | | | | |
|---|---|---|---|---|---|---|---|
| **Heating brickette (0.5 - 0.9 grams/cubic centimetre) - High flare/medium calorific value (Gross calorific value max. 14/ MJ kg-1) using a fibre binding system.** | | | | | | | |
| **Principle fibre: CELLULOSE FROM LONGFIBRE LIGNOCELLULOSIC PLANT FEEDSTOCKS (e.g. Cotton/Hemp/Jute/Abaca/Flax/Kenaf/Rami/Sisal etc. see preamble)** | | | | | | | |
| **Principle micro-fibre & Max. 80% weight of product volume** | **Secondary fibre & 1-20% weight of product volume** | **Finished product density** | **Finished product dimensions: Brickette presses exist to manufacture a wide range of practical and stylistic forms.** | **Surface finish** | **Colour % weight of product volume.** | **Mordent % weight of product volume (as per colour fixing requirement)** | **Optional flame colouring agents (Materials see preamble):** |
| Natural Longfibre Lignocellulosics | Longfibre Cellulose | 0.5g/cm³ up to 0.9g/cm³ | Examples (not definitive): Brickette: 120x60x90mm. Circular extrusion: 75mm outer diameter, x 200mm long with or without hole. Circular, Oval, Square, Pillow, Hexagon forms etc. | As per client requested forming mould pattern | Mineral or Synthetic, 0.1 to 5% dependent on colour chosen | Aluminium Sulphate 0.1-1% of total weight. | Selected metal salt (s) to produce coloured flames. 3.0% by weight depending upon effect required. |
| Natural Longfibre Lignocellulosics | Natural Longfibre Lignocellulosics | Ditto above | Ditto above | Ditto above | Ditto above | Ditto above | Ditto above |
| Natural Longfibre Lignocellulosics | Cereal straws (wheat, oats, rye, barley, rice etc.) | Ditto above | Ditto above | Ditto above | Ditto above | Ditto above | Ditto above |
| Natural Longfibre Lignocellulosics | Grasses (bamboo, bagasse, kahi, miscanthus etc.) | Ditto above | Ditto above | Ditto above | Ditto above | Ditto above | Ditto above |
| Natural Longfibre Lignocellulosics | Natural Reed | Ditto above | Ditto above | Ditto above | Ditto above | Ditto above | Ditto above |
| Natural Longfibre Lignocellulosics | Wood Cellulose | Ditto above | Ditto above | Ditto above | Ditto above | Ditto above | Ditto above |
| Natural Longfibre Lignocellulosics | Natural Wood | Ditto above | Ditto above | Ditto above | Ditto above | Ditto above | Ditto above |
| Natural Longfibre Lignocellulosics | Fruit Cellulose | Ditto above | Ditto above | Ditto above | Ditto above | Ditto above | Ditto above |
| Natural Longfibre Lignocellulosics | Recycled Paper | Ditto above | Ditto above | Ditto above | Ditto above | Ditto above | Ditto above |

| **Table 80.** | | | | | | | |
|---|---|---|---|---|---|---|---|
| **Heating brickette (1.0 - 1.5 grams/cubic centimetre) - Low flare/high calorific value (Gross calorific value max. 14 / MJ kg-1) using** a **fibre binding system.** | | | | | | | |
| **Principle fibre: CEREAL STRAWS (WHEAT, OATS, RYE, BARLEY, RICE, ETC.)** | | | | | | | |
| **Principle micro-fibre & Max. 80% weight of product volume** | **Secondary fibre & 1-20% weight of product volume** | **Finished product density** | **Finished product dimensions: Brickette formers exist to manufacture a wide range of practical and stylistic products.** | **Surface finish** | **Colour % weight of product volume.** | **Mordent % weight of product volume (as per colour fixing requirement)** | **Optional flame colouring agents (Materials see preamble):** |
| Cereal straws (wheat, oats, rye, barley, rice etc.) | Longfibre Cellulose | 0.5g/cm³ up to 0.9g/cm³ | Examples (not definitive): Brickette:120x60x90mm. Circular extrusion: 75mm outer diameter, x 200mm long with or without hole. Circular, Oval, Square, Pillow, Hexaqon forms etc. | As per client requested forming mould pattern | Mineral or Synthetic, 0.1 to 5% dependent on colour chosen | Aluminium Sulphate 0.1-1% of total weight. | Selected metal salt (s) to produce coloured flames. 3.0% by weight depending upon effect required. |
| Cereal straws (wheat, oats, rye, barley, rice etc.) | Natural Longfibre Lignocellulosics | Ditto above | Ditto above | Ditto above | Ditto above | Ditto above | Ditto above |
| Cereal straws (wheat, oats, rye, barlev, rice etc.) | Cereal straws (wheat, oats, rye, barley, rice etc.) | Ditto above | Ditto above | Ditto above | Ditto above | Ditto above | Ditto above |
| Cereal straws (wheat, oats, rye, barley, rice etc.) | Grasses (bamboo, bagasse, kahi, miscanthus etc.) | Ditto above | Ditto above | Ditto above | Ditto above | Ditto above | Ditto above |
| Cereal straws (wheat, oats, rye, barley, rice etc.) | Natural Reed | Ditto above | Ditto above | Ditto above | Ditto above | Ditto above | Ditto above |
| Cereal straws (wheat, oats, rye, barley, rice etc.) | Wood Cellulose | Ditto above | Ditto above | Ditto above | Ditto above | Ditto above | Ditto above |
| Cereal straws (wheat, oats, rye, barley, rice etc.) | Natural Wood | Ditto above | Ditto above | Ditto above | Ditto above | Ditto above | Ditto above |
| Cereal straws (wheat, oats, rye, barley, rice etc.) | Fruit Cellulose | Ditto above | Ditto above | Ditto above | Ditto above | Ditto above | Ditto above |
| Cereal straws (wheat, oats, rye, barley, rice etc.) | Recycled Paper | Ditto above | Ditto above | Ditto above | Ditto above | Ditto above | Ditto above |

| **Table 81.** | | | | | | | |
|---|---|---|---|---|---|---|---|
| **Heating brickette (1.0 - 1.5 grams/cubic centimetre) - Low flare/high calorific value (Gross calorific value max. 14 / MJ kg-1) using a fibre binding system.** | | | | | | | |
| **Principle fibre: GRASSES (BAMBOO, BAGASSE, KAHI, MISCANTHUS ETC.)** | | | | | | | |
| **Principle micro-fibre & Max. 80% weight of product volume** | **Secondary fibre & 1-20% weight of product volume** | **Finished product density** | **Finished product dimensions: Brickette formers exist to manufacture a wide range of practical and stylistic products.** | **Surface finish** | **Colour % weight of product volume.** | **Mordent % weight of product volume (as per colour fixing requirement)** | **Optional flame colouring agents (Materials see preamble):** |
| Grasses (bamboo, bagasse, kahi, miscanthus etc.) | Longfibre Cellulose | 0.5g/cm³ up to 0.9g/cm | Examples (not definitive): Brickette:120x60x90mm. Circular extrusion: 75mm outer diameter, x 200mm long with or without hole. Circular, Oval, Square, Pillow, Hexagon forms etc. | As per client requested forming mould pattern | Mineral or Synthetic, 0.1 to 5% dependent on colour chosen depending colour chosen | Aluminium Sulphate 0.1-1 % of total weight. | Selected metal salt (s) to produce coloured flames. 3.0% by weight depending upon effect required. |
| Grasses (bamboo, bagasse, kahi, miscanthus etc.) | Natural Longfibre Lignocellulosics | Ditto above | Ditto above | Ditto above | Ditto above | Ditto above | Ditto above |
| Grasses (bamboo, bagasse, kahi, miscanthus etc.) | Cereal straws (wheat, oats, rye, barley, rice etc.) | Ditto above | Ditto above | Ditto above | Ditto above | Ditto above | Ditto above |
| Grasses (bamboo, bagasse, kahi, miscanthus etc.) | Grasses (bamboo, bagasse, kahi, miscanthus etc.) | Ditto above | Ditto above | Ditto above | Ditto above | Ditto above | Ditto above |
| Grasses (bamboo, bagasse, kahi, miscanthus etc.) | Natural Reed | Ditto above | Ditto above | Ditto above | Ditto above | Ditto above | Ditto above |
| Grasses (bamboo, bagasse, kahi, miscanthus etc.) | Wood Cellulose | Ditto above | Ditto above | Ditto above | Ditto above | Ditto above | Ditto above |
| Grasses (bamboo, bagasse, kahi, miscanthus etc.) | Natural Wood | Ditto above | Ditto above | Ditto above | Ditto above | Ditto above | Ditto above |
| Grasses (bamboo, bagasse, kahi, miscanthus etc.) | Fruit Cellulose | Ditto above | Ditto above | Ditto above | Ditto above | Ditto above | Ditto above |
| Grasses (bamboo, bagasse, kahi, miscanthus etc.) | Recycled Paper | Ditto above | Ditto above | Ditto above | Ditto above | Ditto above | Ditto above |

| **Table 82.** | | | | | | | |
|---|---|---|---|---|---|---|---|
| **Heating brickette (1.0 - 1.5 grams/cubic centimetre) - Low flare/high calorific value (Gross calorific value max. 14 / MJ kg-1) using a fibre binding system.** | | | | | | | |
| **Principle fibre: NATURAL WOOD** | | | | | | | |
| **Principle micro-fibre & Max. 80% weight of product volume** | **Secondary fibre & 1-20% weight of product volume** | **Finished product density** | **Finished product dimensions: Brickette formers exist to manufacture a wide range of practical and stylistic products.** | **Surface finish** | **Colour % weight of product volume.** | **Mordent % weight of product volume (as per colour fixing requirement)** | **Optional flame colouring agents (Materials see preamble):** |
| Natural Wood | Longfibre Cellulose | 0.5g/cm³ up to 0.9g/cm³ | Examples (not definitive): Brickette:1 20x60x90mm. Circular extrusion: 75mm outer diameter, x 200mm long with or without hole. Circular, Oval, Square, Pillow, Hexagon forms etc. | As per client requested forming mould pattern | Mineral or Synthetic, 0.1 to 5% dependent on colour chosen | Aluminium Sulphate 0,1-1% of total weight. | Selected metal salt (s) to produce coloured flames. 3.0% by weight depending upon effect required. |
| Natural Wood | Natural Longfibre Liqnocellulosics | Ditto above | Ditto above | Ditto above | Ditto above | Ditto above | Ditto above |
| Natural Wood | Cereal straws (wheat, oats, rye, barley, rice etc.) | Ditto above | Ditto above | Ditto above | Ditto above | Ditto above | Ditto above |
| Natural Wood | Grasses (bamboo, bagasse, kahi, miscanthus etc.) | Ditto above | Ditto above | Ditto above | Ditto above | Ditto above | Ditto above |
| Natural Wood | Natural Reed | Ditto above | Ditto above | Ditto above | Ditto above | Ditto above | Ditto above |
| Natural Wood | Wood Cellulose | Ditto above | Ditto above | Ditto above | Ditto above | Ditto above | Ditto above |
| Natural Wood | Natural Wood | Ditto above | Ditto above | Ditto above | Ditto above | Ditto above | Ditto above |
| Natural Wood | Fruit Cellulose | Ditto above | Ditto above | Ditto above | Ditto above | Ditto above | Ditto above |
| Natural Wood | Recycled Paper | Ditto above | Ditto above | Ditto above | Ditto above | Ditto above | Ditto above |

### Appendix: Standard & BIO Plastics Densities (Specific gravity):

| | |
|---|---|
| Epoxy (Low Density) | .75 - 1.00 |
| Methylpentene Polymer (TPX) | .83 - |
| Polypropylene Copolymer | .89 - .905 |
| Polypropylene Impact | .90 - .91 |
| Polypropylene Unmodified | .902 - .906 |
| Polyethylene (Low Density) | .91 - .925 |
| Ethylene Vinyl Acetate Copolymer | .925 - .95 |
| Potyethytene (Medium Density) | .925 - .940 |
| Ethylene Ethyl Acrylate Copolymer | .93 - |
| Ionomers | .93 - .96 |
| Styrene Butadiene Thermoplastic | .93 - 1.10 |
| Polyethylene High Molecular Weight | .94 - |
| Potyethylene (High Density) | .941 - .965 |
| Polyethylene Cross Linkable | .95 - 1.4,5 |
| Polypropylene (inert Filler) | 1.00 - 1.30 |
| Nylon 12 (Unfilled) | 1.01 - 1.02 |
| ABS (High Impact) | 1.01 - 1.04 |
| Nylon 11 (Untilled) | 1.04 - 1.05 |
| ABS (Medium Impact) | 1.04 - 1.07 |
| Polystyrene (General Purpose) | 1.04 - 1.09 |
| Polystyrene (Medium & High Impact) | 1.04 - 1.10 |
| Polystyrene Heat & Chemical | 1.04 - 1.10 |
| PVC Flexib (Untilled) | 1.05 - |
| ABS High (Heat Resistant) | 1.05 - 1.08 |
| Polypropylene (Glass filler) | 1.05 - 1.24 |
| Nyion 6/12 | 1.06 - 1.08 |
| Potyphenylene Oxides Modified (Noryl) | 1.06 - 1.10 |
| Polyphenylene Oxide (PPO) | 1.06 - |
| Styrene Acrylonitrile Copolymer (Unfilled) (SAN) | 1.075 - 1.10 |
| Nyion 6/10 (Unfilled) | 1.09 - |
| Acrylics Multipolymer | 1.09 - 1.14 |
| Ethyl Cellulose | 1.09 - 1.17 |
| Polycarbonate (ABS Polycabonate Alloy) | 1.10 - 120 |
| Acrylic Impact | 1.11 - 1.18 |
| Urethane Elastomers | 1.11 - 1.25 |
| Nyton 6 (Unfilled) | 1.12 - 1.14 |
| Nylon 6/6 (Unfilled) | 1.13 - 1.15 |
| ABS Self Extinguishing | 1.15 - 1.21 |
| Cellulose Acetate Butyrate | 1.15 - 1.22 |
| PVC Flexible (Unfilled) | 1.16 - 1.30 |
| Acrylics | 1.17 - 1.20 |
| Cellulose Propionate | 1.17 - 1.24 |
| Phenoxy | 1.18 - |
| Rubber (Hard) | 1.20 - |
| Polycarbonate (Unfilled) | 1.20 - |
| Polystyrene (20-30% Glass filler) | 1.25 - 1.33 |
| Styrene Acrylonitrile Copolymer (20-33% Glass filler) | 1.20 - 1.46 |
| Polyphenylene Oxides Modifed (Noryl) (20-30% Glass filler) | 1.21-1.36 |
| Cellulose Acetate | 1.22-1.34 |
| Nylon 12 (Glass filler) | 1.23- |
| ABS (2040% Glass filler) | 1.23 -1.36 |
| Polysulfone | 1.24 - |
| Polycarbonate (10-40% Glass filler) | 1.24 -1.52 |
| Alkyd Polyester Synthetic Fiber | 1.24 -2.10 |
| Polycarbonate (Less than 10% Glass filler) | 1.25 |
| Nylon 11 (Glass filler) | 1.26 |
| Polypropylene Modified Vinyl Chloride | 1.28 - 1.58 |
| PVC Flexible (Filled) | 1.30 - 1.70 |
| Polyterephtalete 6PRO | 1.31 |
| Celanese CDY-246 | 1.32 - |
| Nylon 6/12 (Glass filler) | 1.32-1.46 |
| Phenolic Woodflour & Cotton | 1.34 - 1.45 |
| PVC (Rigid) | 1.35 - 1.45 |
| Polyester Preformed Chopped Roving | 1.35 - 2.30 |
| Casein | 1.35 |
| Phenolic Macerated Fabric & Cord. | 1.36 - 1.43 |
| Nylon 6 (20-40% Glass filler) | 1.37 - 1.46 |
| Polyesters (Thermoplastic) | 1.37 - 1.38 |
| Chlorinated Polyether | 1.40 - |
| Acetal Copolymer | 1.41 |
| Acetal Homopolymer | 1.42 - |
| Polyimides Aromatic | 1.43 - |
| Melamine Cellulose | 1.45 - 1.52 |
| Phenolic (Asbestos Filler) | 1.45 - 2.00 |
| Melamine Alphacellulose | 1.47 - 1.52 |
| Urea Formaldehyde Alpha Cellulose | 1.47 - 1.52 |
| Melamine---Formaldehyde (No filler) | 1,48 - |
| Polyester (Thermoplastic 18% Glass filler) | 1.48 - 1.50 |
| Melamine (Fabric filler) | 1.50 - |
| Melamine Fabric (Phenolic Modified) | 1.50 - |
| Melamine Phenol | 1.50 - 1.70 |
| Polyester Woven Cloth | 1.50 - 2.10 |
| Celanex 917 | 1.52 - |
| Acetal (20% Glass filler) | 1.56 - |
| Acrylonitrile Copolymer Asbestos | 1.57 - 1.65 |
| Sillicones (Asbestos filler) | 1.60 - 1.90 |
| Epoxy (Glass fiber filler) | 1.60 - 2.00 |
| Epoxy (Mineral filler) | 1.60 - 2.00 |
| Alkyd Granular end Putty (Mineral filler) | 1.60 - 2.30 |
| Acetal Copolymer (25% Glass filler) | 1.61 |
| Polyester Premix (Chopped Glass filler) | 1.65 - 2.30 |
| Silicones (Glass filler) | 1.68 - 2.00 |
| Phenolic (Glass filler) | 1.69 - 1.95 |

### BIOPLASTICS DENSITIES:

PLA:1.23g/cm³ up to 1.25g/cm³
PHB: 1.40g/cm³
PHBV 1.25
PCL 1.11
PEA 1.07
PBSA 1.23
PBAT 1.21

## Claims

1. An article formed from two or more defibrillated cellulose fibres which are bound together to form the article wherein the density of the said bound defibrillated cellulose fibres is in the range of 0.4 - 1.5 grams per cubic centimetre, **characterised in that** the density of the article is increased by the addition of one or more filler components in an amount of 1-30% of the final article volume.

2. An article according to claim 1 wherein the two or more defibrillated cellulose fibres comprise i) a principle microfibre or principle furnish; and ii) a reinforcement fibre or secondary fibre.

3. An article according to claim 1 wherein the article is formed as any of casings, boards, panels, or paper.

4. An article according to claim 1 wherein the article includes plastics material to an amount of no more than 50% of the total content of the material of the article.

5. An article according to claim 1 wherein the article includes defibrillated cellulose fibres as a material matrix wherein an amount of more than 50% of bio or standard plastic material is included in said article once formed.

6. An article according to claim wherein the article comprises the defibrillated cellulose fibre and carrier materials of organic or mineral nature.

7. An article according to claim 6 wherein the article includes waste and new organic and mineral sources.

8. An article according to claim 1 wherein the article is a rigid or semi-rigid article.

9. An article according to claim 8 wherein the article is a heating briquette which, for use, is ignited to create heat and/or a flame with the cellulose fibre content used as a binder means to maintain the briquette as a substantially unitary formation.

10. An article according to claim 9 wherein the article includes at least one flame colouring agent.

11. An article according to claim 9 wherein the briquette has a material density in the range of 1.0 - 1.5 grams per cubic centimetre.

12. An article according to claim 1 wherein the briquette has a gross calorific value of at least 14 / MJ kg-1.

13. An article according to claim 1 wherein the cellulose fibres which are used in the article formation are provided from any, or any combination, of; cellulose from long fibred lignocellulosic plant feed stock such as bast, leaf, seed and seed pod fibres (e.g. hemp / jute / abaca /flax /kenaf /ramie /sisal /sun hemp /Indian hemp / roselle / urena / Henequen / yucca /bowstring hemp /New Zealand flax / coir / milk weed / kapok); cereals and straws such as wheat, oats, rye, barley, rice; grasses such as bamboo, bagasse, kahi, miscanthus; natural reed; wood cellulose, natural wood, fruit cellulose and/or recycled (waste) paper.

## Patentansprüche

1. Artikel ausgebildet aus zwei oder mehr defibrillierten Cellulosefaserstoffen, die zum Ausbilden des Artikels miteinander verbunden werden, wobei die Dichte der verbundenen defibrillierten Cellulosefaserstoffe im Bereich von 0,4 bis 1,5 Gramm pro Kubikzentimeter liegt, **dadurch gekennzeichnet, dass** die Dichte des Artikels erhöht wird, indem eine oder mehrere Füllstoffkomponenten in einem Mengenanteil von 1-30 % vom Endvolumen des Artikels zugegeben werden.

2. Artikel nach Anspruch 1, wobei die zwei oder mehr defibrillierten Cellulosefaserstoffe i) einen Hauptmikrofaserstoff oder einen Hauptstoffeintrag; und ii) einen Verstärkungsfaserstoff oder Sekundärfaserstoff umfassen.

3. Artikel nach Anspruch 1, wobei der Artikel als Hüllkörper, Platten, Tafeln oder Papier ausgebildet ist.

4. Artikel nach Anspruch 1, wobei der Artikel Kunststoffmaterial zu einem Mengenanteil von höchstens 50 % des insgesamt im Artikel enthaltenen Materials umfasst.

5. Artikel nach Anspruch 1, wobei der Artikel defibrillierte Cellulosefaserstoffe als Materialmatrix umfasst, wobei im fertig ausgebildeten Artikel ein Mengenanteil von mehr als 50 % Bio- oder Standardkunststoffmaterial enthalten ist.

6. Artikel nach Anspruch 1, wobei der Artikel den defibrillierten Cellulosefaserstoff und Trägermaterialien organischer oder mineralischer Natur umfasst.

7. Artikel nach Anspruch 6, wobei der Artikel organische und mineralische Alt- und Neustoffquellen beinhaltet.

8. Artikel nach Anspruch 1, wobei der Artikel ein starrer oder halbstarrer Artikel ist.

9. Artikel nach Anspruch 8, wobei der Artikel ein Heizbrikett ist, das zur Verwendung entzündet wird, um Wärme und/oder eine Flamme zu erzeugen, wobei der enthaltene Cellulosefaserstoff als Bindemittel verwendet wird, um das Brikett als im Wesentlichen einheitliche Formation zu erhalten.

10. Artikel nach Anspruch 9, wobei der Artikel wenigstens ein flammenfärbendes Mittel beinhaltet.

11. Artikel nach Anspruch 9, wobei das Brikett eine Materialdichte im Bereich von 1,0 bis 1,5 Gramm pro Kubikzentimeter aufweist.

12. Artikel nach Anspruch 1, wobei das Brikett einen Bruttoheizwert von wenigstens 14 / MJ kg-1 aufweist.

13. Artikel nach Anspruch 1, wobei die im Artikel verwendeten Cellulosefaserstoffe aus einer, oder einer Kombination, der Cellulosen von langfasrigen lignocellulosehaltigen pflanzlichen Futtermitteln wie Bast-, Blätter-, Samen- und Samenhülsenfasern (z. B. Hanf / Jute / Manilahanf (Abaca) / Flachs / Kenaf / Ramie / Sisal / Bengalhanf / indischem Hanf / Roselle (Karkade) / Urena (Kongojute) / Henequen / Yucca / Bogenhanf / Neuseeländer Flachs / Kokosbast / Seidenpflanze / Kapok); Getreide und Stroh wie Weizen, Hafer, Roggen, Gerste, Reis; Gräsern wie Bambus, Bagasse, Kahi, Miscanthus; natürlichem Schilf; Holzcellulose, Naturholz, Fruchtcellulose und/oder Recycling-Papier (Altpapier) bereitgestellt werden.

## Revendications

1. Article formé à partir d'au moins deux fibres de cellulose défibrillées qui sont liées ensemble pour former l'article, la masse volumique desdites fibres de cellulose défibrillées liées se situant dans la gamme de 0,4 - 1,5 gramme par centimètre cube, **caractérisé en ce que** la masse volumique de l'article est augmentée par l'addition d'un ou plusieurs composants de charge dans une quantité de 1-30 % du volume de l'article final.

2. Article selon la revendication 1 dans lequel les au moins deux fibres de cellulose défibrillées comprennent i) une microfibre principale ou composition de fabrication principale ; et ii) une fibre de renforcement ou fibre secondaire.

3. Article selon la revendication 1, l'article étant formé comme n'importe quel élément parmi les caisses, les planches, les panneaux, ou le papier.

4. Article selon la revendication 1, l'article comportant de la matière plastique dans une quantité ne dépassant pas 50 % du contenu total de matière de l'article.

5. Article selon la revendication 1, l'article comportant des fibres de cellulose défibrillées comme matériau matriciel, une quantité supérieure à 50 % de matière plastique biologique ou normale étant incorporée dans ledit article une fois formé.

6. Article selon la revendication 1, l'article comprenant la fibre de cellulose défibrillée et des matériaux de support de nature organique ou minérale.

7. Article selon la revendication 6, l'article comportant des sources organiques et minérales usées et nouvelles.

8. Article selon la revendication 1, l'article étant un article rigide ou semi-rigide.

9. Article selon la revendication 8, l'article étant une briquette de chauffage qui, à l'usage, est enflammée pour générer de la chaleur et/ou une flamme avec le contenu de fibres de cellulose utilisé comme moyen liant pour maintenir la briquette comme une structure sensiblement unitaire.

10. Article selon la revendication 9, l'article comportant au moins un agent de coloration de flamme.

11. Article selon la revendication 9, la briquette ayant une masse volumique de matière dans la gamme de 1,0 - 1,5 gramme par centimètre cube.

12. Article selon la revendication 1, la briquette ayant un pouvoir calorifique supérieur d'au moins 14 MJ.kg⁻¹.

13. Article selon la revendication 1, les fibres de cellulose qui sont utilisées dans la formation de l'article étant obtenues à partir de n'importe quelle source, ou de n'importe quelle combinaison de sources, parmi : la cellulose issue de la matière première végétale lignocellulosique à longues fibres telle que les fibres d'écorce, de feuille, de graine et de gousse (par ex., chanvre / jute / abaca / lin / kenaf / ramie / sisal / crotalaire / chanvre indien / oseille de Guinée / urène / henequen / yucca / sansevière / lin de Nouvelle-Zélande / coco / asclépiade / kapok) ; les céréales et pailles telles que blé, avoine, seigle, orge, riz ; les graminées telles que bambou, bagasse, kahi, miscanthus ; le roseau naturel ; la cellulose du bois, le bois naturel, la cellulose des fruits et/ou le papier recyclé (vieux papiers).
